(19)

Europäisches
Patentamt
European
Patent Office
Office européen
des brevets

(11) **EP 4 668 965 A1**

(12) **EUROPEAN PATENT APPLICATION**
published in accordance with Art. 153(4) EPC

(43) Date of publication:
**24.12.2025 Bulletin 2025/52**

(21) Application number: **23922002.3**

(22) Date of filing: **17.02.2023**

(51) International Patent Classification (IPC):
**H04W 72/20** (2023.01)

(52) Cooperative Patent Classification (CPC):
**H04W 72/20**

(86) International application number:
**PCT/CN2023/076896**

(87) International publication number:
**WO 2024/168860 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **FU, Zhe**
  **Dongguan, Guangdong 523860 (CN)**
• **LIN, Yanan**
  **Dongguan, Guangdong 523860 (CN)**
• **SHI, Cong**
  **Dongguan, Guangdong 523860 (CN)**

(74) Representative: **Penza, Giancarlo**
  **Bugnion S.p.A.**
  **Viale Lancetti, 17**
  **20158 Milano (IT)**

(54) **COMMUNICATION METHOD, APPARATUS AND DEVICE, AND STORAGE MEDIUM, CHIP, PRODUCT AND PROGRAM**

(57) The embodiments of the present application provide a communication method, apparatus and device, and a storage medium, a chip, a product and a program. The method comprises: a terminal device sending first information, wherein the first information is used for at least one of the following: data transmission, radio resource control (RRC) parameter adjustment, RRC configuration/reconfiguration, resource scheduling and resource allocation.

A terminal device transmits first information, where the first information is used for at least one of: data transmission, Radio Resource Control (RRC) parameter adjustment, RRC configuration/ reconfiguration, resource scheduling, or resource allocation ⟋ S201

**FIG. 2**

EP 4 668 965 A1

**Description**

TECHNICAL FIELD

Embodiments of the disclosure relate to the field of communication technologies, and particularly to a communication method, an apparatus, a device, a storage medium, a chip, a product and a program.

BACKGROUND

A network device is capable of performing at least one of data transmission, Radio Resource Control (RRC) parameter adjustment, RRC configuration/reconfiguration, resource scheduling, or resource allocation. However, how the network device performs at least one of the data transmission, the RRC parameter adjustment, the RRC configuration/reconfiguration, the resource scheduling, or the resource allocation to meet the requirements of a terminal device is an issue that has long been of concern in the field.

SUMMARY

Embodiments of the disclosure provide a communication method, an apparatus, a device, a storage medium, a chip, a product and a program.

In a first aspect, a communication method provided in an embodiment of the disclosure includes the following operations.

A terminal device transmits first information. The first information is used for at least one of: data transmission, RRC parameter adjustment, RRC configuration/reconfiguration, resource scheduling, or resource allocation.

In a second aspect, a communication method provided in an embodiment of the disclosure includes the following operations.

A network device receives first information.

The network device performs, based on the first information, at least one of: data transmission, RRC parameter adjustment, RRC configuration/reconfiguration, resource scheduling, or resource allocation.

In a third aspect, a communication apparatus provided in an embodiment of the disclosure includes a communication unit.

The communication unit is configured to transmit first information. The first information is used for at least one of: data transmission, RRC parameter adjustment, RRC configuration/reconfiguration, resource scheduling, or resource allocation.

In a fourth aspect, a communication apparatus provided in an embodiment of the disclosure includes a communication unit and a processing unit.

The communication unit is configured to receive first information.

The processing unit is configured to perform, based on the first information, at least one of: data transmission, RRC parameter adjustment, RRC configuration/reconfiguration, resource scheduling, or resource allocation.

In a fifth aspect, a communication device provided in an embodiment of the disclosure includes a processor and a memory.

The memory is configured to store a computer program.

The processor is configured to call the computer program stored in the memory and run the computer program to cause the terminal device to perform the method in the first aspect or cause the network device to perform the method in the second aspect.

In a sixth aspect, a computer storage medium provided in an embodiment of the disclosure stores one or more programs that, when executed by one or more processors, perform the method in the first aspect or the second aspect.

In a seventh aspect, a chip provided in an embodiment of the disclosure includes a processor for calling a computer program from a memory and running the computer program to perform the method in the first aspect or the second aspect.

In an eighth aspect, a computer program product provided in an embodiment of the disclosure includes a computer storage medium for storing a computer program. The computer program includes instructions executable by at least one processor that, when executed by the at least one processor, perform the method in the first aspect or the second aspect.

In a ninth aspect, a computer program provided in an embodiment of the disclosure causes a computer to perform the method in the first aspect or the second aspect.

In the embodiments of the disclosure, the terminal device transmits first information, where the first information is used for at least one of: data transmission, RRC parameter adjustment, RRC configuration/reconfiguration, resource scheduling, or resource allocation. In this way, at least one of: the data transmission, the RRC parameter adjustment, the RRC configuration/reconfiguration, the resource scheduling, or the resource allocation performed by the network device is performed based on the first information transmitted by the terminal device, thereby meeting the requirements of the terminal device.

BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and not to unduly limit the disclosure. In the drawings:

FIG. 1 is a diagram of an application scenario according to an embodiment of the disclosure.
FIG. 2 is a flowchart of a communication method provided in an embodiment of the disclosure.
FIG. 3 is a flowchart of another communication method provided in an embodiment of the disclosure.
FIG. 4 is a diagram of a Media Access Control Control Element (MAC CE) format provided in an embodiment of the disclosure.
FIG. 5 is a diagram of another MAC CE format provided in an embodiment of the disclosure.
FIG. 6 is a diagram of yet another MAC CE format provided in an embodiment of the disclosure.
FIG. 7 is a diagram of buffer size levels for a 5-bit buffer size field provided in an embodiment of the disclosure.
FIG. 8 is a structural diagram of a communication apparatus provided in an embodiment of the disclosure.
FIG. 9 is a structural diagram of another communication apparatus provided in an embodiment of the disclosure.
FIG. 10 is a structural diagram of a communication device provided in an embodiment of the disclosure.
FIG. 11 is a structural diagram of a chip according to an embodiment of the disclosure.

DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions described in embodiments of the disclosure may be combined in various ways without conflict. In the description of the disclosure, "a plurality of/multiple" means two or more unless otherwise explicitly and specifically defined.

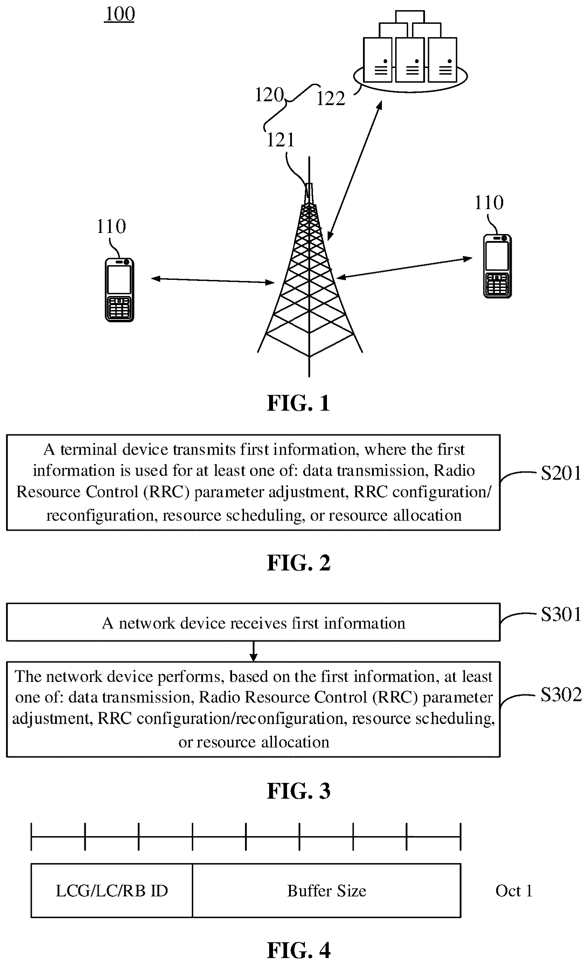

FIG. 1 is a diagram of an application scenario according to an embodiment of the disclosure. As illustrated in FIG. 1, the communication system 100 may include terminals 110 and a network device 120. The network device 120 may communicate with the terminal 110 through an air interface. Multi-service transmissions are supported between the terminal 110 and the network device 120.

It should be understood that the embodiments of the present disclosure are described only using the communication system 100 as an example, and the embodiments of the present disclosure are not limited thereto. That is, the technical solutions in the embodiments of the present disclosure can be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced Long Term Evolution (LTE-A) system, a New Radio (NR) system, an evolution system of the NR system, a LTE-based access to unlicensed spectrum (LTE-U) system, a NR-based access to unlicensed spectrum (NR-U) system, a Universal Mobile Telecommunications System (UMTS), a Wireless Local Area Network (WLAN), a Wireless Fidelity (WiFi), an LTE Time Division Duplex (TDD), a Universal Mobile Telecommunications System (UMTS), an Internet of Things (IoT) system, a Narrow Band Internet of Things (NB-IoT) system, an enhanced Machine-Type Communications (eMTC) system, or a future communication system (e.g., a sixth generation (6G) communication system, a seventh generation (7G) communication system).

The network device 120 in the embodiments of the disclosure may include an access network device 121 and/or a core network device 122. The access network device may provide communication coverage for a particular geographic area and may communicate with a terminal 110 (e.g., User Equipment (UE)) located within the coverage area.

The terminal device in any one of the embodiments in the disclosure may be a device with a wireless communication function, which may be arranged on land including indoor or outdoor areas, handheld or on-board, or may be arranged on the water (such as on a ship), or may be arranged in the air (such as on an airplane, a balloon, a satellite). The terminal device in any one of the embodiments in the disclosure may be referred to as a UE, a Mobile Station (MS), a Mobile Terminal (MT), a user unit, a user station, a mobile platform, a remote station, a remote terminal, a mobile device, a user terminal, a terminal, a wireless communication device, a user agent or a user apparatus. The terminal device in any one of the embodiments in the disclosure may include one or a combination of at least two of the following: an Internet of Things (IoT) device, a satellite terminal, a Wireless Local Loop (WLL) station, a Personal Digital Assistant (PDA) device, a handheld device with a wireless communication function, a computing device or other processing devices connected to a wireless modem, a server, a mobile phone, a tablet computer (or Pad), a computer with a wireless transceiver function, a handheld computer, a desktop computer, a PDA, a portable media player, a smart speaker, a navigation apparatus, a wearable device (such as a smart watch, smart glasses, or a smart necklace), a pedometer, a digital TV, a Virtual Reality (VR) terminal device, an Augmented Reality (AR) terminal device, a wireless terminal device in industrial control, a wireless terminal device in self driving, a wireless terminal device in remote medical surgery, a wireless terminal device in a smart grid, a wireless terminal device in transportation safety, a wireless terminal device in a smart city, a wireless terminal device in a smart home, and a vehicle, an on-board device, an on-board module, a wireless modem, a handheld device, a Customer Premise Equipment (CPE), a smart home appliance in a vehicle to everything (V2X) system, and the like.

Optionally, the terminal 110 may be any terminal device, which includes but is not limited to a terminal device in wired or wireless connection with the network device 120 or other terminal devices.

Optionally, the terminal device 110 may be used for device to device (D2D) communication.

The access network device 121 may include one or a combination of at least two of the following: an Evolutional Node B (eNB or eNodeB) in the LTE system, a Next Generation Radio Access Network (NG RAN) device, a base station (gNB) in the NR system, a small station, a micro station, a radio controller in a Cloud Radio Access Network (CRAN), an access point of the Wi-Fi, a transmission reception point (TRP), a relay station, an access point, an on-board device, a wearable device, a hub, a switch, a bridge, a router, a network device in a future evolved Public Land Mobile Network (PLMN), and the like.

The core network device 122 may be a 5th Generation (5G) core (5GC) device. The core network device 122 may include one or a combination of at least two of the following: an Access and Mobility Management Function (AMF), an Authentication Server Function (AUSF), a User Plane Function (UPF), or a Session Management Function (SMF), a Location Management Function (LMF) and a Policy Control Function (PCF). In other embodiments, the core network device may also be an Evolved Packet Core (EPC) device in the LTE network, for example, a Session Management Function + Core Packet Gateway (SMF+PGW-C) device. It should be understood that the SMF+PGW-C can achieve functions that can be achieved by the SMF and the PGW-C. In the process of the network evolution, the core network device 122 may also be referred to as other names, or may be a new network entity formed by dividing the functions of the core network, which would not be limited in the embodiments of the present disclosure.

Connections can be established between various functional units in the communication system 100 through Next Generation (NG) interfaces for achieving communication.

For example, the terminal device establishes air interface connection with the access network device through an NR interface for transmission of user plane data and control plane signaling. The terminal device may establish a control plane signaling connection with the AMF through an NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through an NG interface 4 (N4 for short). The UPF may interact user plane data with a data network through an NG interface 6 (N6 for short). The AMF may establish a control plane signaling connection with the SMF through an NG interface 11 (N11 for short). The SMF may establish a control plane signaling connection with the PCF through an NG interface 7 (N7 for short).

FIG. 1 exemplarily illustrates one base station, one core network device and two terminal devices. Optionally, the wireless communication system 100 may include multiple base station devices, and the respective number of terminal devices may be included within the coverage area of each base station device, which would not be limited in embodiments of the present disclosure.

It should be noted that FIG. 1 only illustrates, by way of an example, the system to which the present disclosure is applied. Of course, the methods illustrated in the embodiments of the present disclosure may also be applied to other systems. In addition, the terms "system" and "network" in the present disclosure may usually be used interchangeably. In the disclosure, the term "and/or" refers to only an association relationship for describing associated objects and represents that three relationships may exist. For example, A and/or B may represent three cases: i.e., only A exists, both A and B exist, and only B exists. Furthermore, character "/" in the disclosure usually represents that previous and next associated objects form an "or" relationship. It should also be understood that the term "indication/indicate/indicating" mentioned in the embodiments of the disclosure may be a direct indication, or may be an indirect indication, or may represent existence of an association relationship. For example, A indicates B, which may represent that A directly indicates B, for example, B may be obtained by A; or may represent that A indirectly indicates B, for example, A indicates C, and B may be obtained by C; or may represent that an association relationship exists between A and B. It should also be understood that the term "corresponding/correspondence/correspond" mentioned in the embodiments of the present disclosure may indicate that there are direct or indirect correspondences between two objects, or may indicate that there is an association relationship between the two objects, or may have an indicating and being indicated relationship, a configuring and being configured relationship, or the like. It should also be understood that the terms "predefined/predefinition", "predefined by a protocol", "pre-determined/predetermination" or "predefined rules" mentioned in the embodiments of the present disclosure may be implemented by pre-storing corresponding codes or tables or other means that may be used to indicate relevant information in devices (e.g., including terminal devices and network devices), specific implementations of which are not limited herein. For example, the "predefined" may refer to what is defined in protocol. It should also be understood that in the embodiments of the present disclosure, the "protocol" may refer to standard protocols in the communication field, and may include, for example, an LTE protocol, an NR protocol and related protocols applied in future communication systems, which are not limited in the present disclosure.

For convenience of understanding of the technical solutions of the embodiments of the disclosure, related technologies in the embodiments of the disclosure are described as follows. The following related technologies may be used as alternative solutions and may be combined with the technical solutions of the embodiments of the disclosure in various ways, all of which belong to the scope of protection of the embodiments of the disclosure.

At present, with the increasing demand by people for speed, latency, high-speed mobility, and energy efficiency as well as the diversity and complexity of services in future life, the 3rd Generation Partnership Project (3GPP) international standard organization has begun to develop the 5G. The main application scenarios of 5G are: enhanced Mobile BroadBand (eMBB), massive Machine Type Communication (mMTC), and Ultra-Reliable and Low Latency Communication (URLLC).

The eMBB still aims at providing users with multimedia contents, services and data, and requirements for the eMBB are growing rapidly. On the other hand, because the eMBB may be arranged in different scenarios, such as indoor, urban, rural, and the like, capabilities and requirements for the different scenarios are quite different, which cannot be generalized and must be analyzed in detail in conjunction with specific deployment scenarios. Typical applications of the URLLC include: industrial automation, power automation, telemedicine operations (surgeries), transportation safety guarantee, and the like. Typical characteristics of the mMTC include: high connection density, small data volume, latency-insensitive services, low cost and long service life of modules, and the like.

NR may also be deployed independently. In the 5G network environment, in order to reduce air interface signaling, quickly restore wireless connections, and quickly restore data services, a new RRC state (i.e., an RRC_INACTIVE state) is defined. The RRC_INACTIVE state is different from an RRC_IDLE state and an RRC_ACTIVE state.

The RRC_IDLE state: mobility refers to UE-based cell selection and reselection, a paging is initiated by a Core Network (CN), and a paging area is configured by the CN. There is no UE Access Stratum (AS) context at the base station side. No RRC connection exists.

The RRC_CONNECTED state (also referred to as the RRC_ACTIVE state): an RRC connection exists, and both the base station and the UE maintain the UE AS context. The network side knows that the location of the UE is specifically at a cell level. Mobility is controlled by the network side. Unicast data may be transmitted between the UE and the base station.

The RRC_INACTIVE state: mobility refers to UE-based cell selection and reselection, there is a connection between the CN and the NR, the UE AS context exists on a certain base station, a paging is triggered by a Radio Access Network (RAN), a RAN-based paging area is managed by the RAN, and the network side knows that the location of the UE is at a RAN-based paging area level.

The UE allows the serving base station to know the uplink buffer data volume of the UE through a Buffer Status Report (BSR), so that the base station can schedule the UE based on information of the data volume provided by the UE. In order to save the overhead of the BSR reporting, a group-based reporting manner is adopted. Each uplink Logical Channel (LC) corresponds to a Logical Channel Group (LCG), multiple uplink logical channels may correspond to the same LCG, and a correspondence between the LC and the LCG is configured by the network RRC. The UE reports the BSR based on the LCG. Each UE in the NR may support up to 8 LCGs.

The trigger condition for the BSR includes at least one of: uplink data arrives at a logical channel with higher priority of the UE, in this case, a Regular BSR is triggered; the padding portion of the uplink resources allocated to the UE (after carrying other uplink data) may carry a BSR MAC CE, in this case, a Padding BSR is triggered; a retransmission BSR timer (retxBSR-Timer) expires and there is uplink data to be transmitted on at least one uplink logical channel, in this case, the Regular BSR is triggered; or a periodic BSR timer (periodicBSR-Timer) expires, in this case, a Periodic BSR is triggered.

If Regular BSR is triggered for multiple logical channels, an individual Regular BSR is triggered for each of the multiple logical channels.

The BSR is carried by the BSR MAC CE. If the terminal triggers the Regular BSR, but the terminal has no uplink resources for transmitting new data or the uplink resources, allocated to the terminal, for transmitting the new data cannot carry data on the uplink logical channel for which the Regular BSR is triggered, the terminal triggers a Scheduling Request (SR).

Configured Grant Physical Uplink Shared channel (CG PUSCH) is described as follows.

NR, at uplink, supports a semi-static periodic transmission method, i.e., CG PUSCH transmission, which includes two types.

1. type-1 CG: after transmission parameters are configured through RRC, the transmission parameters go into effect without activation by Downlink Control Information (DCI).
2. type-2 CG: after transmission parameters are configured through RRC, the transmission parameters are required to be activated by a DCI to take effect.

The CG supports symbol-level periods of either 2 symbols or 7 symbols and slot-level periods of {1, 2, 4, 5, 8, 10, 16, 20, 32, 40...}slots. One Physical Uplink Shared Channel (PUSCH) transmission is performed within one CG period (i.e., there is only one PUSCH occasion). One UE may be configured with multiple CG configurations simultaneously. Parameters of different CG configurations are configured independently. The UE determines a corresponding CG PUSCH transmission resource for each CG configuration.

Configured Grant (CG)-Uplink Control Information (UCI) is described as follows.

NR introduces the CG-UCI for supporting transmission of CG PUSCH on unlicensed frequency bands. That is, the UE embeds CG-UCI information into the transmitted CG PUSCH to notify the base station of parameters. Table 1 illustrates a mapping order of CG-UCI fields.

Table 1

| Field | Bitwidth |
|---|---|
| Hybrid Automatic Repeat Request (HARQ) process number | 4 |
| Redundancy version | 2 |
| New data indicator (NDI) | 1 |
| Channel Occupancy Time (COT) sharing information | $\lceil \log_2 C \rceil$ if both higher layer parameter ul-toDL-COT-SharingED-Threshold and higher layer parameter cg-COT-SharingList are configured, where C is the number of combinations configured in cg-COT-SharingList; 1 if higher layer parameter ul-toDL-COT-SharingED-Threshold is not configured and higher layer parameter cg-COT-SharingOffset is configured; 0 otherwise; If a UE indicates COT sharing other than "no sharing" in a CG PUSCH within the UE's initiated COT, the UE should provide consistent COT sharing information in all the subsequent CG PUSCHs, if any, occurring within the same UE's initiated COT such that the same DL starting point and duration are maintained. |

Here, the first three items of information in Table 1 are the HARQ process number, redundancy version information, and NDI information corresponding to the current CG PUSCH, and the last item of information is used for indicating whether subsequent resource in the COT in which the current CG PUSCH is located can be shared for downlink transmission.

Services studied for eXtended Reality (XR) and cloud game evaluations include AR, VR or cloud game or the like. One of the primary services of XR/cloud game is a video stream service. The arrival rate of the video stream service may be at 30 frame-per-second (fps), 60fps, 90fps or 120fps, or the like, thus the periods corresponding to the video stream are {33.33ms, 16.67ms, 11.11ms, 8.33ms}.

Characteristics of XR data include: variable data packet size and larger mean value. Taking AR/VR with a data rate of 100Mbps as an example, the mean value of uplink data packets is 20833 bytes, the maximum value of the uplink data packets is 31250 bytes, and the minimum value of the uplink data packets is 10417 bytes. That is, the size of the data packets to be transmitted in each period is [10417 bytes, 31250 bytes]. In an actual system with 100M bandwidth, transmission of a data packet with 20833 bytes needs to occupy transmission resources across 4 slots.

3GPP supports configuration of multiple PUSCH occasions for transmission of XR big data packets within one CG period. In addition, multiple sets of CGs may be configured for transmission of the XR big data packets. When data volume of one data transmission is relatively small and there is no need to occupy multiple pre-configured PUSCH occasions, the UE may notify the base station of the unused PUSCH occasions. The base station may reallocate the unused PUSCH occasions to other UEs for data transmission, thereby improving the system efficiency.

However, in related technologies, when reporting the BSR, a larger index corresponds to a wider range of the Buffer Status (BS) value, which results in a greater discrepancy between the size of resources allocated by the network device to the terminal device and the size of information actually transmitted by the terminal device, thereby leading to a larger BSR quantization error.

Moreover, in related technologies, the reporting of the BSR does not include latency information, and thus the terminal device cannot indicate the data transmission latency requirement to the network device.

For convenience of understanding of the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least part of the following contents.

FIG. 2 is a flowchart of a communication method provided in an embodiment of the disclosure. As illustrated in FIG. 2, the method is applied to a terminal device. The method includes the following operation S201.

At the operation S201, the terminal device transmits first information. The first information is used for at least one of: data transmission, RRC parameter adjustment, RRC configuration/reconfiguration, resource scheduling, or resource allocation.

Optionally, the terminal device transmits the first information, which may include that: the terminal device transmits the first information to a network device.

Optionally, the first information may be used for the network device to perform at least one of: the data transmission, the RRC parameter adjustment, the RRC configuration/reconfiguration, the resource scheduling, or the resource allocation.

Optionally, the first information is used for the data transmission, which may include that: the first information is used for the terminal device to perform the data transmission and/or for the network device to perform the data transmission.

Optionally, the RRC parameter may include at least one of: an RRC configuration parameter, an RRC status parameter, or an RRC configuration/reconfiguration parameter. Optionally, the RRC parameter may include a resource configured to the terminal device. Optionally, the RRC configuration/reconfiguration parameter is used to perform RRC configuration/reconfiguration. Optionally, a resource for transmitting data may be allocated to the terminal device through the RRC configuration/reconfiguration.

Optionally, a resource for transmitting data may be allocated to the terminal device through the resource scheduling and/or the resource allocation.

Optionally, the resource for transmitting data allocated to the terminal device may be a resource for one data transmission. For example, the network device allocates a resource for transmitting data to the terminal device once, and the terminal device transmits data once based on the resource. Then, the terminal device receives the allocated resource for transmitting data again, and transmits data once again based on the resource.

Optionally, the resource for transmitting data allocated to the terminal device may be a periodic resource. For example, the network device may allocate a periodic resource for transmitting data to the terminal device, and the terminal device may transmit data through the periodic resource. Optionally, the period of the resource may be predefined in a protocol or indicated by the network device to the terminal device. Optionally, the period of the resource may be determined based on at least one of: a latency requirement for data to be transmitted, data volume of the data to be transmitted, or a priority of the data to be transmitted.

Optionally, the first information may be transmitted through a PUSCH, or may be transmitted through a Physical Uplink Control Channel (PUCCH).

Optionally, the first information includes information associated with data to be transmitted. Optionally, the first information may include information associated with data volume of data to be transmitted. Optionally, the first information may include information associated with latency information of data to be transmitted.

In the embodiment of the disclosure, the terminal device transmits first information, the first information is used for at least one of: data transmission, RRC parameter adjustment, RRC configuration/reconfiguration, resource scheduling, or resource allocation. In this way, at least one of: the data transmission, the RRC parameter adjustment, the RRC configuration/reconfiguration, the resource scheduling, or the resource allocation performed by the network device is performed based on the first information transmitted by the terminal device, thereby meeting the requirements of the terminal device.

FIG. 3 is a flowchart of another communication method provided in an embodiment of the disclosure. As illustrated in FIG. 3, the method is applied to a network device. The method includes the following operations S301 and S302.

At the operation S301, the network device receives first information.

At the operation S302, the network device, based on the first information, performs at least one of: data transmission, RRC parameter adjustment, RRC configuration/reconfiguration, resource scheduling, or resource allocation.

Optionally, the network device may configure an UpLink (UL) grant/UL resource to the terminal device through a Physical Downlink Control Channel (PDCCH), and the terminal device transmits the first information based on the UL grant/UL resource.

In some embodiments, the first information is carried by an RRC message or one or more first MAC CEs.

In some embodiments, the first information includes one or more first MAC CEs, or includes an RRC message, or includes one or more SRs.

In some embodiments, the first MAC CE includes a BSR MAC CE. Optionally, the BSR MAC CE may include at least one of: a Short BSR, a Short Truncated BSR, a Long BSR, a Long Truncated BSR, or the like.

In some embodiments, the first MAC CE includes a protocol-predefined MAC CE. Optionally, in any one of the embodiments in the disclosure, the protocol-predefined MAC CE may be a MAC CE predefined in a protocol before or after the disclosure. Optionally, the MAC CE predefined in the protocol after the disclosure may be referred to as a new MAC CE.

In some embodiments, different first MAC CEs correspond to the same Logical Channel (LCH) or different LCHs.

In some embodiments, different first MAC CEs correspond to the same Logical Channel Group (LCG) or different LCGs.

In some embodiments, different first MAC CEs correspond to the same Data Radio Bearer (DRB) or different DRBs.

In some embodiments, different first MAC CEs correspond to the same burst or different bursts.

In some embodiments, different first MAC CEs correspond to the same Protocol Data Unit Set (PDU Set) or different PDU Sets.

In some embodiments, different first MAC CEs correspond to the same data volume indication information or different pieces of data volume indication information.

In some embodiments, different first MAC CEs correspond to the same latency information or different pieces of latency information.

Optionally, the data volume indication information may be used to indicate at least one of the following of the data volume of the data to be transmitted: a range, a maximum value, a minimum value, a range per period, a maximum value per period, a minimum value per period, or the like.

Optionally, in any one of the embodiments in the disclosure, the burst includes a data burst or a burst transmission.

Optionally, the different first MAC CEs may be any two or more different first MAC CEs among one or more first MAC CEs transmitted through PUSCH.

Here, an example is given in which different first MAC CEs correspond to the same logical channel or different logical channels. It should be noted that different first MAC CEs corresponding to the same or different pieces of other information can refer to the example of logical channels described above, which is not limited in the embodiments of the disclosures. For example, multiple first MAC CEs include a MAC CE1, a MAC CE2, and a MAC CE3, the MAC CE1 and the MAC CE2 correspond to the same LCH, and the MAC CE2 and the MAC CE3 correspond to different LCHs. For another example, multiple first MAC CEs include a MAC CE1, a MAC CE2, and a MAC CE3, the MAC CE1 and the MAC CE2 correspond to different LCHs, and the MAC CE2 and the MAC CE3 correspond to different LCHs. For yet another example, multiple first MAC CEs include a MAC CE1, a MAC CE2, and a MAC CE3, the MAC CE1 and the MAC CE2 correspond to the same LCH, and the MAC CE2 and the MAC CE3 correspond to the same LCH.

In some embodiments, each or single first MAC CE in the one or more first MAC CEs includes data volume indication information and latency information.

As such, one first MAC CE includes the data volume indication information and the latency information.

In some embodiments, a part of the one or more first MAC CEs include data volume indication information and latency information, and the other part of the one or more first MAC CEs include data volume indication information.

As such, each or single first MAC CE in the part of the first MAC CEs includes the data volume indication information and the latency information, and each or single first MAC CE in the other part of the first MAC CEs includes the data volume indication information (in other words, each or single first MAC CE in the other part of the first MAC CEs does not include the latency information).

In some embodiments, a part of the one or more first MAC CEs include data volume indication information and latency information, and the other part of the one or more first MAC CEs include latency information.

As such, each or single first MAC CE in the part of the first MAC CEs includes the data volume indication information and the latency information, and each or single first MAC CE in the other part of the first MAC CEs includes the latency information (in other words, each or single first MAC CE in the other part of the first MAC CEs does not include the data volume indication information).

In some embodiments, a part of the one or more first MAC CEs include data volume indication information, and the other part of the one or more first MAC CEs include latency information.

As such, each or single first MAC CE in the part of the first MAC CEs includes the data volume indication information, and each or single first MAC CE in the other part of the first MAC CEs includes the latency information. In other words, each or single first MAC CE in the part of the first MAC CEs does not include the latency information, and each or single first MAC CE in the other part of the first MAC CEs does not include the data volume indication information.

In some embodiments, each or single first MAC CE in the one or more first MAC CEs includes data volume indication information.

In some embodiments, each or single first MAC CE in the one or more first MAC CEs includes latency information.

Optionally, the data volume indication information included in different first MAC CEs may be the same or different. Optionally, the latency information included in different first MAC CEs may be the same or different.

Optionally, the object or granularity of the data volume indication information included in different first MAC CEs may be the same or different. Optionally, the object or granularity of the latency information included in different first MAC CEs may be the same or different.

Optionally, the object or granularity of the data volume indication information and the object or granularity of the latency information included in the same first MAC CE may be the same or different.

Optionally, in any one of the embodiments in the disclosure, the data volume indication information includes at least one of: a data volume size, an index, or a level.

In some embodiments, at the terminal device side, the method further includes at least one of the following ten operations.

The terminal device triggers reporting.

The terminal device triggers reporting of the first information.

The terminal device generates the one or more first MAC CEs in a case where triggering of reporting occurs.

The terminal device generates the one or more first MAC CEs in a case where triggering of reporting of the first information occurs.

The terminal device generates the one or more first MAC CEs in a case where a MAC PDU including the one or more first MAC CEs is generated.

The terminal device generates the one or more first MAC CEs corresponding to reporting of the first information in a case where a MAC PDU including the one or more first MAC CEs corresponding to the reporting of the first information is generated.

The terminal device carries the one or more first MAC CEs on a PUSCH/UL resource/UL grant.

The terminal device carries the one or more first MAC CEs corresponding to the first information on a PUSCH/UL resource/UL grant.

The terminal device triggers the one or more first MAC CEs corresponding to the first information in a case where an available PUSCH/UL resource/UL grant is present.

The terminal device generates the one or more first MAC CEs corresponding to the first information in a case where an available PUSCH/UL resource/UL grant is present.

Optionally, in other embodiments, in a case where a MAC PDU including a Service Data Unit (SDU) is generated, the terminal device generates the one or more first MAC CEs, or generates the one or more first MAC CEs corresponding to the first information reporting.

In some embodiments, the one or more first MAC CEs are generated by the terminal device in a case where reporting is triggered; or the one or more first MAC CEs are generated by the terminal device in a case where the reporting of the first information is triggered; or the one or more first MAC CEs are generated by the terminal device in a case where a MAC PDU including the one or more first MAC CEs is generated; or the one or more first MAC CEs are generated by the terminal device in a case where a MAC PDU including the one or more first MAC CEs corresponding to the reporting of the first information is generated; or the one or more first MAC CEs carried on a PUSCH/UL resource/UL grant; or the one or more first MAC CEs corresponding to the first information are carried on a PUSCH/UL resource/UL grant.

In some embodiments, at the terminal device side, the terminal device transmits the first information, which includes that: the terminal device triggers and transmits the one or more SRs in a case where the terminal device triggers reporting and one of an available PUSCH, an available UL resource, or an available UL grant is absent.

Optionally, the one or more SRs correspond to one or more instances of reporting of the first information.

Optionally, at least one of the available PUSCH, the available UL resource, or the available UL grant may be configured by the network device to the terminal device. Optionally, at least one of the available PUSCH, the available UL resource, or the available UL grant can carry one or more first MAC CEs, or a resource for carrying the one or more first MAC CEs is present in at least one of the available PUSCH, the available UL resource, or the available UL grant, or at least one of the available PUSCH, the available UL resource, or the available UL grant can carry an RRC message, or a resource for carrying an RRC message is present in at least one of the available PUSCH, the available UL resource, or the available UL grant.

Optionally, in a case where the PUSCH, the UL resource, or the UL grant are all occupied, or the remaining resources in the PUSCH, the UL resource, or the UL grant cannot carry the one or more first MAC CEs or the RRC message, or no resources available for transmitting the one or more first MAC CEs or the RRC message, one of: the available PUSCH, the available UL resource, or the available UL grant is absent.

Optionally, the terminal device transmits the one or more SRs through the PUCCH.

In some embodiments, the terminal device transmits the first information, which includes that: the terminal device transmits the one or more first MAC CEs or the terminal device transmits the RRC message in a case where the terminal device triggers the reporting and one of an available PUSCH, an available UL resource, or an available UL grant is present.

Optionally, in a case where the PUSCH, the UL resource, or the UL grant is not occupied, or the PUSCH, the UL resource, or the UL grant is occupied but the remaining resources can carry the one or more first MAC CEs or the RRC message, one of the available PUSCH, the available UL resource, or the available UL grant is present.

In some embodiments, the first information includes one or more SRs. The one or more SRs are triggered and transmitted by the terminal device in a case where the terminal device triggers the reporting and one of: the available PUSCH, the available UL resource, or the available UL grant is absent.

In some embodiments, the first information includes the one or more first MAC CEs or the RRC message. The one or more first MAC CEs are or the RRC message is transmitted by the terminal device in a case where the terminal device triggers the reporting and one of: the available PUSCH, the available UL resource, or the available UL grant is present.

In some embodiments, the first information includes at least one of: at least one piece of data volume indication information, at least one BSR, at least one piece of BS information, or at least one piece of latency information.

Optionally, one first MAC CE may include one piece of data volume indication information or multiple pieces of data volume indication information.

Optionally, one first MAC CE may include one or more BSRs. Optionally, one first MAC CE may include one or more pieces of BS information.

Optionally, one first MAC CE may include one piece of latency information or multiple pieces of latency information.

Optionally, the data volume indication information and the latency information may have a one-to-one, one-to-many, or many-to-one correspondence. Exemplarily, there is a one-to-one correspondence between the data volume indication information and the latency information.

Optionally, one first MAC CE may include one or more pieces of data volume indication information and one or more pieces of latency information, where the one or more pieces of data volume indication information correspond to the one or more pieces of latency information one-to-one. Optionally, one first MAC CE may include one or more pieces of data volume indication information, and another first MAC CE may include one or more pieces of latency information, where the one or more pieces of data volume indication information correspond to the one or more pieces of latency information one-to-one.

Optionally, the data volume indication information and the BSR may have a one-to-one, one-to-many, or many-to-one correspondence. Optionally, the data volume indication information and the BS information may have a one-to-one, one-to-many, or many-to-one correspondence.

In some embodiments, the first information is associated with at least one of: LCH, LCG, DRB, UE, burst, or PDU set.

Optionally, the first information and the LCH may have a one-to-one, one-to-many, or many-to-one correspondence. Optionally, the first information and the LCG may have a one-to-one, one-to-many, or many-to-one correspondence. Optionally, the first information and the DRB may have a one-to-one, one-to-many, or many-to-one correspondence. Optionally, the first information and the UE may have a one-to-one, one-to-many, or many-to-one correspondence. Optionally, the first information and the burst may have a one-to-one, one-to-many, or many-to-one correspondence. Optionally, the first information and the PDU set may have a one-to-one, one-to-many, or many-to-one correspondence.

For example, one first MAC CE may include an LCG identity (LCG ID). For another example, one first MAC CE may correspond to one LCH, and exemplarily, one first MAC CE may correspond to one Logical Channel Identity (LCID).

For example, one first MAC CE may correspond to one or more bursts. For another example, one first MAC CE may correspond to one or more PDU Sets. Exemplarily, one first MAC CE may include an identity (or identities) and/or type(s) of the one or more bursts. Exemplarily, one first MAC CE may include an identity (or identities) and/or type(s) of the one or more PDU Sets.

Optionally, the first information may include at least one of: one or more bursts, or one or more PDU sets. Optionally, the one or more bursts or the one or more PDU sets may include the first information, i.e., the first information is carried in the one or more bursts or the one or more PDU sets.

Optionally, the first information may include at least one of: one or more bursts, or one or more PDU sets. Optionally, one piece of first information is information corresponding to the one or more bursts or information corresponding to the one or more PDU sets.

Exemplarily, the first information is the following of the one or more bursts or the one or more PDU sets: data volume size, and/or latency, and/or type.

In some embodiments, the first MAC CE includes a first index and a first level.

The first index is included in at least one index. Each or single index among the at least one index corresponds to at least one level. The first level is included in the at least one level corresponding to the first index.

Here, a first buffer status value range associated with the each or single index includes a second buffer status value range associated with each or single level in the at least one level corresponding to the each or single index.

Optionally, the data volume indication information may be indicated by the first index and the first level, or the data volume indication information may include the first index and the first level.

Optionally, all intervals of the data volume correspond to the BS values corresponding to part or all of the indexes.

Optionally, the data volume size is determined or indicated by using the first index and the first level. Optionally, the data volume size is indicated or identified by using the first index and the first level.

Optionally, each index is associated with corresponding level(s), or only a part of the indexes are associated with corresponding levels.

Optionally, in any one of the embodiments in the disclosure, the level may be replaced with others. For example, the level may be replaced with one of: a sub-index, a rank, a layer, a portion, a range, or the like.

Optionally, in a case where an interval corresponding to the first buffer status value range associated with a single index is greater than or equal to a certain threshold, the single index corresponds to multiple levels. Optionally, the threshold may be any one of values greater than or equal to 2. For example, the threshold may be 2, 10, 20, 100, 1000, 10000, or the like.

Optionally, the intervals associated with levels corresponding to different indexes among the at least one index may be the same or different.

Optionally, the numbers of levels corresponding to different indexes among the at least one index may be the same or different. Optionally, in the at least one index, a part of the indexes do not have corresponding levels, and the other part of the indexes have corresponding levels. Optionally, in the at least one index, each index has corresponding level(s).

For example, in a case where an interval corresponding to the first buffer status value range associated with a single index is less than or equal to a certain threshold, the index does not have a corresponding level, or the number of level corresponding to the index is 1 and the second buffer status value range associated with the level is the same as the first buffer status value range.

Exemplarily, the at least one index includes indexes X to Y, where X is less than Y, X and Y are numbers greater than or equal to 1 or numbers greater than or equal to a specific value.

Exemplarily, the at least one index includes indexes 0 to 31, and the number of levels corresponding to each of the indexes 0 to 31 is a fixed value. Optionally, the fixed value may be N, where N is an integer greater than or equal to 1, that is, the number of levels corresponding to each of the indexes 0 to 31 is N. For example, in a case where N is equal to 2, the levels corresponding to each of the indexes 0 to 31 are level 0 and level 1.

Also exemplarily, the at least one index includes indexes 0 to 255, and the numbers of levels corresponding to any two different indexes among the indexes 0 to 255 may be the same or different. For example, the number of levels corresponding to each of indexes 0 to 127 is N, the number of levels corresponding to each of indexes 128 to 255 is M, where M is an integer greater than or equal to 1, and N is equal to or not equal to M, for example, N is less than M.

Optionally, the second buffer status value range may be a subset of the first buffer status value range. For example, the first buffer status value range associated with the index 30 may be greater than 107669 and less than or equal to 150000, the levels corresponding to the index 30 include level 0, level 1, and level 2, the second buffer status value range associated with the level 0 may be greater than 107669 and less than or equal to 130000, the second buffer status value range associated with the level 1 may be greater than 130000 and less than or equal to 140000, and the second buffer status value range associated with the level 2 may be greater than 140000 and less than or equal to 150000.

In some embodiments, an interval corresponding to the second buffer status value range associated with the each or single level increases based on an increase in the at least one index, and/or increases based on an increase in the at least one level.

Optionally, the interval corresponding to the second buffer status value range associated with the each or single level increases based on the increase in the at least one index, but is not affected by the increase of the at least one level. Optionally, the interval corresponding to the second buffer status value range associated with the each or single level increases based on the increase in the at least one level, but is not affected by the increase of the at least one index. Optionally, the interval corresponding to the second buffer status value range associated with the each or single level increases based on not only the increase in the at least one index but also the increase of the at least one level.

In some embodiments, the interval corresponding to the second buffer status value range associated with the each or single level is a first fixed value.

Optionally, the interval corresponding to the second buffer status value range associated with at least one level corresponding to the single index is the first fixed value. Optionally, the at least one first fixed value corresponding to the single index is the same, where the at least one first fixed value corresponds to the at least one level corresponding to the single index one-to-one. Optionally, the first fixed values corresponding to different indexes are different or the same. For example, the first fixed value may be increased based on an increase in the index.

Optionally, the interval corresponding to the first buffer status value range associated with each or single index may be increased based on an increase in the index.

Optionally, in other embodiments of the disclosure, the interval corresponding to the second buffer status value range associated with each or single level is decreased based on an increase in the at least one index, and/or decreased based on an increase in the at least one level. Optionally, the interval corresponding to the first buffer status value range associated with each or single index may be decreased based on an increase in the index.

Optionally, the first buffer status value range associated with the at least one index is a continuous range. Optionally, the second buffer status value range associated with the at least one level is a continuous range.

In some embodiments, the number of the at least one level corresponding to each or single index does not change or increases based on an increase in the at least one index.

Optionally, all intervals of the data volume correspond to BS values corresponding to part or all of the indexes.

Optionally, the at least one index may be divided into multiple groups of indexes, each group of indexes includes one or more indexes, the numbers of indexes included in different groups of indexes may be the same or different, the numbers of at least one level corresponding to different indexes in one group of indexes are the same, the numbers of at least one level corresponding to different indexes in different groups of indexes are different, and the numbers of at least one level corresponding to different indexes in one group of indexes do not change or increase based on an increase in the at least one index.

Exemplarily, the at least one index includes indexes 0 to 31, the indexes 0 to 31 are divided into two groups, the number of at least one level corresponding to each or single index among the indexes 0 to 20 is a first number, and the number of at least one level corresponding to each or single index among the indexes 21 to 31 is a second number, where the second number is greater than the first number. Optionally, the first number may be an integer greater than or equal to 1, and the second number may be an integer greater than or equal to 2. For example, the first number may be 1 and the second number may be 2. For another example, the first number may be 2, and the second number may be 3. The values of the first number and the second number are not limited in the embodiments of the disclosure.

In some embodiments, the number of at least one level corresponding to each or single index is a second fixed value.

Optionally, the second fixed values corresponding to different indexes may be the same or different. For example, the second fixed values corresponding to different indexes in one group of indexes are the same, and the second fixed values corresponding to different groups of indexes are different. For another example, the second fixed value corresponding to each index among the at least one index is a third numerical value, where the third numerical value may be an integer greater than or equal to 2.

In some embodiments, at the terminal device side, the method further includes that: the terminal device receives first indication information.

In some embodiments, at the network device side, the method further includes that: the network device transmits first indication information.

Optionally, the first indication information is used for indicating that the first index mapping is enabled. Herein, the first index mapping includes that the at least one index and/or the each or single index among the at least one index corresponds to the at least one level.

Optionally, the first indication information is used for indicating that a current BSR reporting manner and/or a current index mapping is disabled.

Optionally, the index mapping corresponding to the current BSR reporting manner and/or the current index mapping are different from the first index mapping. Optionally, the index mapping corresponding to the current BSR reporting manner and/or the current index mapping may be an index mapping currently used by the terminal device.

Optionally, the terminal device receives the first indication information, which enables the network device to configure the first index mapping used by the terminal device to the terminal device, thus the terminal device can determine the first index and the first level from the first index mapping. Further, the network device can determine the second buffer status value range corresponding to the first index and the first level by using the first index mapping, and allocate resources to the terminal device based on the second buffer status value range.

Optionally, at the terminal device side, the method further includes that: the terminal device determines whether to use the first index mapping. The first index mapping includes that the at least one index and/or the each or single index among the at least one index corresponds to the at least one level. The determination is implemented based on UE, or determined by a predefined rule.

Optionally, at the network device side, the method further includes that: the network device determines whether to use the first index mapping. The first index mapping includes that the at least one index and/or the each or single index among the at least one index corresponds to the at least one level. The determination is implemented based on the network device, or determined by a predefined rule.

Optionally, at the terminal device side, the method further includes that: the terminal device transmits indication information indicating whether to use the first index mapping. The first index mapping includes that the at least one index and/or the each or single index among the at least one index corresponds to the at least one level.

Optionally, at the network device side, the method further includes that: the network device receives indication information indicating whether to use the first index mapping. The first index mapping includes that the at least one index and/or the each or single index among the at least one index corresponds to the at least one level.

In some embodiments, the first MAC CE includes a second index included in the at least one index.

Optionally, a third buffer status value range associated with each or single index among the at least one index is determined by adjusting or scaling a fourth buffer status value range associated with the each or single index.

Optionally, all intervals of the data volume correspond to BS values corresponding to part or all of the indexes.

Optionally, each or single index among the at least one index is associated with a third buffer status value range, the third buffer status value range associated with the each or single index is less than a fourth buffer status value range associated with the each or single index. Optionally, the fourth buffer status value range may be the same as or different from the first buffer status value range.

Optionally, the fourth buffer status value range associated with the each or single index is predefined by a protocol.

Optionally, the data volume indication information may be indicated by the second index or may include the second index.

Optionally, the fourth buffer status value range associated with each or single index may be predefined in a protocol before or after the disclosure.

Optionally, a fourth buffer status value range associated with the each or single index is adjusted or scaled, which may include that: an endpoint value of the fourth buffer status value range associated with the each or single index is adjusted or scaled.

Optionally, the third buffer status value range/fourth buffer status value range associated with at least one index is a continuous range.

In some embodiments, an endpoint value of the third buffer status value range associated with the each or single index is determined based on a result of dividing an endpoint value of the fourth buffer status value range associated with the each or single index by a value of the each or single index.

In some embodiments, an endpoint value of the third buffer status value range associated with the each or single index is determined by dividing an endpoint value of the fourth buffer status value range associated with the each or single index by a specific value.

Optionally, in any one of the embodiments in the disclosure, the endpoint value of the range may include: a left endpoint value and/or a right endpoint value.

In some embodiments, at the terminal device side, the method further includes that: the terminal device receives the second indication information.

In some embodiments, at the network device side, the method further includes that: the network device transmits second indication information.

Optionally, the second indication information is used for indicating that a second index mapping is enabled, where the second index mapping includes that: the at least one index and/or the each or single index among the at least one index is associated with the third buffer status value range.

Optionally, the second indication information is used for indicating that a current BSR reporting manner and/or a current index mapping is disabled.

Optionally, the index mapping corresponding to the current BSR reporting manner and/or the current index mapping are different from the second index mapping.

Optionally, at the terminal device side, the method further includes that: the terminal device determines whether to use the second index mapping, where the second index mapping includes that: the at least one index and/or the each or single index among the at least one index is associated with the third buffer status value range. The determination is implemented based on UE, or determined by a predefined rule.

Optionally, at the network device side, the method further includes that: the network device determines whether to use the second index mapping, where the second index mapping includes that: the at least one index and/or the each or single index among the at least one index is associated with the third buffer status value range. The determination is implemented based on the network device, or determined by a predefined rule.

Optionally, at the terminal device side, the method further includes that: the terminal device transmits indication information indicating whether to use the second index mapping, where the second index mapping includes that: the at least one index and/or the each or single index among the at least one index is associated with the third buffer status value range.

Optionally, at the network device side, the method further includes that: the network device receives indication information indicating whether to use the second index mapping, where the second index mapping includes that: the at least one index and/or the each or single index among the at least one index is associated with the third buffer status value range.

In some embodiments, the first MAC CE includes a third index included in the at least one index.

The intervals corresponding to fifth buffer status value ranges associated with different indexes among the at least one index are the same or different.

Optionally, the data volume indication information may be indicated by the third index or may include the third index.

Optionally, all intervals of the data volume correspond to BS values corresponding to part or all of the indexes.

Optionally, all intervals of the data volume correspond to BS values corresponding to part or all of the indexes, and correspond to values corresponding to the BS or a BSR table.

In some embodiments, at the terminal device side, the method further includes that: the terminal device receives third indication information.

In some embodiments, at the network device side, the method further includes that: the network device transmits third indication information.

Optionally, the third indication information is used for indicating that the third index mapping is enabled, where the third index mapping includes that: the at least one index and/or the each or single index among the at least one index is associated with the fifth buffer status value range.

Optionally, the third indication information is used for indicating that a current BSR reporting manner and/or a current index mapping is disabled.

Optionally, the index mapping corresponding to the current BSR reporting manner and/or the current index mapping are different from the third index mapping.

Optionally, at the terminal device side, the method further includes that: the terminal device determines whether to use the third index mapping, where the third index mapping includes that: the at least one index and/or the each or single index among the at least one index is associated with the fifth buffer status value range. The determination is implemented based on UE, or determined by a predefined rule.

Optionally, at the network device side, the method further includes that: the network device determines whether to use the third index mapping, where the third index mapping includes that: the at least one index and/or the each or single index among the at least one index is associated with the fifth buffer status value range.

Optionally, at the terminal device side, the method further includes that: the terminal device transmits indication information indicating whether to use the third index mapping. The third index mapping includes that: the at least one index and/or the each or single index among the at least one index is associated with the fifth buffer status value range.

Optionally, at the network device side, the method further includes that: the network device receives indication information indicating whether to use the third index mapping. The third index mapping includes that: the at least one index and/or the each or single index among the at least one index is associated with the fifth buffer status value range.

In some embodiments, a buffer status value or an endpoint value of a buffer status value range associated with a first one of the at least one index is greater than a first threshold or equal to a second threshold.

Optionally, the first threshold and the second threshold may be the same or different, for example, the first threshold may be greater than, less than or equal to the second threshold.

Optionally, the buffer status value associated with the first one of the at least one index or the left endpoint value or the right endpoint value of the buffer status value range associated with the first one of the at least one index is greater than the first threshold or equal to the second threshold.

Optionally, the first threshold and/or the second threshold may be greater than or equal to the BS value associated with the first one of indexes in the BSR table in the related technologies, or may be a specific integer among the BS values in the BSR table in the related technologies, or may be greater than or equal to the maximum one of the BS values in the BSR table in the related technologies. Optionally, the specific integer may be any one of the BS values in the BSR table in the related technologies. Optionally, the BSR table in the related technologies may be the BSR table in a protocol before or after the disclosure.

Optionally, the first threshold and/or the second threshold may be any one of integers greater than or equal to 0. Exemplarily, the first threshold and/or the second threshold may be 10000. In this way, the buffer status value associated with the first one of the at least one index or the endpoint value of the buffer status value range associated with the first one of the at least one index corresponds to a large data volume, thus an index mapping or a first table including at least one index in the present solution is suitable for transmission of data to be transmitted with the large data volume. For example, in a case where the data volume of the data to be transmitted is greater than a certain threshold value, or in a case where the service corresponding to the data to be transmitted belongs to a large data transmission service, it is suitable to use the index mapping or a first table including at least one index in the present solution.

Optionally, the first threshold and/or the second threshold may be configured by the network device to the terminal device, or may be determined by the terminal device itself, or may be indicated by the terminal device to the network device, or may be predefined by a protocol.

In some embodiments, the at least one index is included in a first table. The first table is determined from at least one table.

Optionally, the first table may include the first index mapping. Optionally, the first table may include at least one index, and/or each or single index among the at least one index corresponds to at least one level. Optionally, the first table may further include the first buffer status value range associated with each or single index, and/or the second buffer status value range associated with each or single level in at least one level corresponding to each or single index.

Optionally, the first table may include a second index mapping. Optionally, the first table may include at least one index and/or a third buffer status value range associated with each or single index among the at least one index.

Optionally, the first table may include a second index mapping. Optionally, the first table may include at least one index and/or a fifth buffer status value range associated with each or single index among the at least one index.

Optionally, the at least one table may be configured by the network device to the terminal device, or may be determined by the terminal device itself, or may be indicated by the terminal device to the network device, or may be predefined by a protocol, or may be generated by the terminal device through at least one table generation parameter transmitted by the network device to the terminal device, or may be generated by the network device through at least one table generation parameter transmitted by the terminal device to the network device.

Optionally, the first table may be one or more of the at least one table. For example, the first table may be a superposition of multiple tables in the at least one table.

Optionally, at the terminal device side, the terminal device may determine the first table from the at least one table. Optionally, at the network device side, the network device may determine the first table from the at least one table.

In some embodiments, the first table is determined from the at least one table based on third information. Herein, the third information includes at least one of: an LCH, an LCG, whether a PDU Set is present, a type of the PDU Set, a priority of the PDU Set, data volume information of data to be transmitted, data volume indication information, or latency information.

Optionally, at the terminal device side, the terminal device may determine the first table from the at least one table based on the third information. Optionally, at the network device side, the network device may determine the first table from the at least one table based on the third information.

Optionally, at least one of information included in the third information may be configured by the network device to the terminal device, or may be determined by the terminal device itself, or may be indicated by the terminal device to the network device, or may be predefined by a protocol.

In some embodiments, different tables in the at least one table correspond to different LCHs or LCIDs, or correspond to the same LCH or LCID.

In some embodiments, different tables in the at least one table correspond to different LCGs or the same LCG.

In some embodiments, information of whether a PDU Set is present corresponding to different tables in the at least one table is different or the same.

In some embodiments, different tables in the at least one table correspond to different types of PDU Sets or the same type of PDU Set.

In some embodiments, different tables in the at least one table correspond to different priorities of PDU Sets or the same priority of PDU Set.

In some embodiments, different tables in the at least one table correspond to different pieces of data volume information of data to be transmitted or the same data volume information of data to be transmitted.

In some embodiments, different tables in the at least one table correspond to different pieces of data volume indication information or the same data volume indication information.

In some embodiments, different tables in the at least one table correspond to different pieces of latency information or the same latency information.

Exemplarily, for the PDU set, different tables are used for different pieces of data volume information and/or different pieces of data volume indication information and/or different pieces of latency information and/or different types and/or different priorities.

Here, different tables corresponding to the same LCH or different LCHs are described as an example. It should be noted that different tables corresponding to the same or different pieces of other information can refer to the example of the LCH, which is not limited in the embodiments of the disclosures. For example, multiple tables include Table 1, Table 2, and Table 3, where the Table 1 and the Table 2 correspond to the same LCH, and the Table 2 and the Table 3 correspond to different LCHs. For another example, multiple tables include Table 1, Table 2, and Table 3, where the Table 1 and the Table 2 correspond to different LCHs, and the Table 2 and the Table 3 correspond to different LCHs. For yet another example, multiple tables include Table 1, Table 2, and Table 3, where the Table 1 and the Table 2 correspond to the same LCH, and the Table 2 and the Table 3 correspond to the same LCH. For still another example, multiple tables include Table 1 and Table 2, and at least one of the following corresponding to the Table 1 and the Table 2 are different: information of whether or not a PDU Set is present; type of the PDU Set; priority of the PDU Set; data volume information of data to be transmitted; data volume indication information; or latency information. For example, the type of the PDU Set corresponding to the Table 1 is a first type, the type of the PDU Set corresponding to the Table 2 is the second type, and/or at least one of the following corresponding to the Table 1 and the Table 2 are the same: priority of the PDU Set; data volume information of data to be transmitted; data volume indication information; or latency information. For another example, the type of the PDU Set corresponding to the Table 1 is the first type, and the priority of the PDU Set corresponding to the Table 1 is a first priority; the type of the PDU Set corresponding to the Table 2 is a second type, and the priority of the PDU Set corresponding to the Table 2 is a second priority.

In some embodiments, at the terminal device side, the method further includes that: the terminal device receives fourth indication information.

In some embodiments, at the network device side, the method further includes that: the network device transmits fourth indication information.

Optionally, the fourth indication information indicates that at least part of the at least one table is enabled.

Optionally, the fourth indication information indicates that at least one of the following is enabled: at least part of the at least one table, a current BSR reporting manner, or a current table.

Optionally, the fourth indication information indicates that at least one of the following is disabled: at least part of the at least one table, a current BSR reporting manner, or a current table.

Optionally, the fourth indication information indicates that the following is enabled: table(s) corresponding to at least part of at least one table generation parameter.

Optionally, the fourth indication information indicates that at least one of the following is enabled: table(s) corresponding to at least part of at least one table generation parameter, a current BSR reporting manner, or a current table.

Optionally, the fourth indication information indicates that at least one of the following is disabled: table(s) corresponding to at least part of at least one table generation parameter, a current BSR reporting manner, or a current table.

Optionally, the first table is included in the enabled at least part of the at least one table or is included in the enabled table(s) corresponding to at least part of at least one table generation parameter.

Optionally, the first table is not included in the disabled at least part of the at least one table or is not included in the disabled table(s) corresponding to the at least part of the at least one table generation parameter.

Optionally, the table corresponding to the current BSR reporting manner and/or the current table are different from the first table. Optionally, the table corresponding to the current BSR reporting manner and/or the current table may be a table currently used by the terminal device.

Optionally, at the terminal device side, the method further includes that: the terminal device determines whether to use the first table. The determination is implemented based on UE, or determined by a predefined rule.

Optionally, at the network device side, the method further includes that: the network device determines whether to use the first table. The determination is implemented based on the network device, or determined by a predefined rule.

Optionally, at the terminal device side, the method further includes that: the terminal device transmits indication information indicating whether to use the first table.

Optionally, at the network device side, the method further includes that: the network device receives indication information indicating whether to use the first table.

In some embodiments, the at least one index is included in the first table.

Optionally, at the terminal device side, the method further includes that: the terminal device receives at least one table generation parameter, or the terminal device determines at least one table generation parameter based on a pre-configuration; the terminal device determines the first table based on the at least one table generation parameter.

Optionally, at the network device side, the method further includes that: the network device transmits at least one table generation parameter; and/or the network device determines the first table based on the at least one table generation parameter.

Optionally, the at least one table generation parameter may be predefined by a protocol.

In some embodiments, at the terminal device side, the terminal device determines the first table based on the at least one table generation parameter, which includes that: the terminal device determines a first table generation parameter from the at least one table generation parameter based on third information; the terminal device generates the first table based on the first table generation parameter. Alternatively, the terminal device generates at least one table based on the at least one table generation parameter; and the terminal device determines the first table from the at least one table based on third information.

In some embodiments, at the network device side, the network device determines the first table based on the at least one table generation parameter, which includes that: the network device determines a first table generation parameter from the at least one table generation parameter based on third information; and the network device generates the first table based on the first table generation parameter. Alternatively, the network device generates at least one table based on the at least one table generation parameter; and the network device determines the first table from the at least one table based on third information.

The third information includes at least one of: an LCH, an LCG, whether a PDU Set is present, a type of the PDU Set, a priority of the PDU Set, data volume information of data to be transmitted, data volume indication information, or latency information.

In some embodiments, the at least one index is included in the first table.

In some embodiments, at the terminal device side, the method further includes that: the terminal device receives table indication information. The table indication information indicates a first table generation parameter or the first table or indicates a first table generation parameter to be used or the first table to be used.

In some embodiments, at the network device side, the method further includes that: the network device transmits table indication information. The table indication information indicates a first table generation parameter or the first table or indicates a first table generation parameter to be used or the first table to be used.

In some embodiments, at the terminal device side, the terminal device selects a first table generation parameter from at least one table generation parameter, or the terminal device selects the first table from at least one table.

In some embodiments, at the network device side, the network device selects the first table generation parameter from at least one table generation parameter, or the network device selects the first table from at least one table.

In some embodiments, at the terminal device side, the terminal device predefines the first table generation parameter or the first table, or the first table generation parameter to be used or the first table to be used.

In some embodiments, at the network device side, the network device predefines the first table generation parameter or the first table, or the first table generation parameter to be used or the first table to be used.

Optionally, in any one of the embodiments in the disclosure, the first table generation parameter is used for generating the first table, the first table generation parameter is included in the at least one table generation parameter, and the first table is included in the at least one table.

In some embodiments, a LCID of the first MAC CE and/or at least one bit in the first MAC CE are associated with the first table.

In some embodiments, the LCID of the first MAC CE and/or the at least one bit in the first MAC CE are associated with a first table generation parameter used for generating the first table.

Optionally, the LCID and the table may have a one-to-one, many-to-one, or one-to-many correspondence. For example, the LCID and the table may have a one-to-one correspondence.

Optionally, the LCID and the table generation parameter may have a one-to-one, many-to-one, or one-to-many correspondence. For example, the LCID and the table generation parameter may have a one-to-one correspondence.

Optionally, at least one bit in the first MAC CE may be at least one bit other than the LCID in the first MAC CE. Optionally, at least one bit in the first MAC CE may be at least one bit in the buffer status information.

Optionally, in other embodiments, at least one corresponding bit in the first MAC CE is associated with the first table and/or the first table generation parameter used for generating the first table. Exemplarily, the first table and/or the first table generation parameter for generating the first table are associated with the first MAC CE through at least one reserved bit corresponding to the first MAC CE.

Optionally, different table generation parameters in the at least one table generation parameter correspond to different LCHs or LCIDs, or the same LCH or LCID; and/or different table generation parameters in the at least one table generation parameter correspond to different LCGs or the same LCG; and/or information of whether the PDU Set is present corresponding to different table generation parameters in the at least one table generation parameter are different or the same; and/or different table generation parameters in the at least one table generation parameter correspond to different types or the same type of the PDU Set; and/or different table generation parameters in the at least one table generation parameter correspond to different priorities or the same priority of the PDU Set; and/or different table generation parameters in the at least one table generation parameter correspond to different pieces of or the same data volume information of data to be transmitted; and/or different table generation parameters in the at least one table generation parameter correspond to different pieces of or the same data volume indication information; and/or different table generation parameters in the at least one table generation parameter correspond to different pieces of or the same latency information.

In some embodiments, the table generation parameter includes at least one of: a starting value of a buffer status value, an ending value of the buffer status value, or a difference between two adjacent buffer status values. The difference is a fixed value, or the difference is determined based on an index corresponding to a preceding buffer status value of the two adjacent buffer status values.

In some embodiments, the first information includes at least one piece of latency information.

In some embodiments, the first information includes latency information greater than or equal to a first duration.

In some embodiments, the first information includes latency information less than or equal to a second duration.

In some embodiments, the first information does not include latency information less than or equal to a first duration.

In some embodiments, the first information does not include latency information greater than or equal to the second duration.

In some embodiments, in a case where a channel quality is less than a first threshold, and/or an information error rate/a number of information errors is greater than a second threshold, and/or a number of received and/or transmitted Negative Acknowledgements (NACKS) is greater than a third threshold, and/or a transmission duration exceeds a first duration, and/or a first timer expires, the first information includes latency information greater than or equal to a third duration, or the first information does not includes latency information less than a third duration, or the first information includes at least one piece of latency information.

Optionally, any one of the durations (for example, at least one of the first duration, the second duration, or the third duration) or the latency information in the embodiments of the disclosure may be determined based on a timer mechanism or may be determined by another mechanism.

In some embodiments, for data corresponding to latency information greater than or equal to a first duration or a third duration in the first information, the data is not scheduled for transmission, or a transmittable resource corresponding to the data is cancelled.

In some embodiments, for data corresponding to latency information less than or equal to a second duration in the first information, the data is allocated with a resource for transmission, or a transmittable resource corresponding to the data is not cancelled.

In some embodiments, for data corresponding to latency information not satisfying a service transmission requirement or an LCH transmission requirement in the first information, the data is not scheduled for transmission, or a transmittable resource corresponding to the data is cancelled.

In some embodiments, for data corresponding to latency information satisfying a service transmission requirement or an LCH transmission requirement in the first information, the data is allocated with a resource for transmission, or a transmittable resource corresponding to the data is not cancelled.

Optionally, the latency information may be understood in the same manner as a duration or a time unit. Optionally, in any one of the embodiments in the disclosure, the time unit may include at least one of: one or more frames, one or more subframes, one or more slots, or one or more symbols.

Optionally, at least one of the first duration, the second duration, the first threshold, the second threshold, or the third duration may be configured by the network device to the terminal device, or may be determined by the terminal device itself, or may be indicated by the terminal device to the network device, or may be predefined by a protocol.

Optionally, the first duration may be greater than the second duration, or the first duration may be less than or equal to the second duration.

Optionally, the third duration may be greater than the first duration, or the third duration may be less than or equal to the first duration.

Optionally, the latency information may have a one-to-one correspondence with the data volume indication information, or the latency information may have a one-to-many or many-to-one correspondence with the data volume indication information.

Optionally, in any embodiment of the disclosure, the latency information may include latency information of data to be transmitted, or the latency information may include latency information of remaining data in data to be transmitted that has not been completely transmitted on the current PUSCH (i.e., remaining transmission time of data to be transmitted), or the latency information may include remaining transmission time of the PDU Set, or the latency information may include remaining transmission time of the burst, or the latency information may include remaining transmission time of the PDU, or the latency information may include remaining transmission time of the packet, or the latency information may include remaining transmission time of the packet group.

Optionally, the channel instruction may be determined by a measurement value obtained by measuring the reference signal. Optionally, the reference signal may include at least one of: a Synchronization Signal Block (SSB) or a Channel State Information-Reference Signal (CSI-RS). Here, the SSB may also be referred to as a Synchronization Signal/Physical Broadcast Channel Block (SS/PBCH block). Optionally, the measurement value may include measurement parameter value(s) of at least one of: a Reference Signal Received Power (RSRP), a Reference Signal Received Quality (RSRQ), a Received Signal Strength Indicator (RSSI), a Signal to Interference plus Noise Ratio (SINR), a Received Signal Code Power (RSCP), or a Signal Noise Ratio (SNR).

Optionally, the information error rate may include an information reception error rate and/or an information transmission error rate, or may include an information reception error rate and/or an information transmission error rate within preset duration.

Optionally, the number of information errors may include the number of information reception errors and/or the number of information transmission errors, or may include the number of information reception errors and/or the number of information transmission errors within preset duration.

Optionally, the number of received and/or transmitted NACKs may include: the number of received and/or transmitted NACKs within preset duration.

Optionally, the transmission duration may include: a duration within which at least one of data to be transmitted, a PDU Set, a burst, a packet, a PDU, or a packet group has been transmitted, or total transmission duration, or tolerable transmission duration.

Optionally, the first timer may be started when data to be transmitted, the PDU Set, the burst, the packet, the PDU, or the packet group arrives, or the first timer may be started when grouping the packets, or the first timer may be started when available. Optionally, the timing duration of the first timer may be configured by the network device to the terminal device, or may be determined by the terminal device itself, or may be indicated by the terminal device to the network device, or may be predefined by a protocol.

In some embodiments, the first information includes latency information for a packet, a packet group, data, a PDU Set, a PDU, or a burst having at least one of a specific priority, a specific type, or a specific importance.

Optionally, in any one of the embodiments in the disclosure, the data may include data to be transmitted, data currently transmitted, or data that has not been completely transmitted.

Optionally, the specific priority may include one or more priorities. Optionally, the specific priority may include the highest priority, the lowest priority, the second highest priority, or the like.

Optionally, the specific type may include one or more types. Optionally, the specific type may include an AR data type, a VR data type, a cloud game data type, or the like.

Optionally, the specific importance may include one or more importance. Optionally, the particular importance may include the highest importance, the lowest importance, the second highest importance, or the like.

For example, the first information includes latency information of the packet having at least one of the specific priority, the specific type, or the specific importance. For example, the first information includes latency information of the packet group having at least one of the specific priority, the specific type, or the specific importance. For example, the first information includes latency information of the data having at least one of the specific priority, the specific type, or the specific importance. For example, the first information includes latency information of the PDU set having at least one of the specific priority, the specific type, or the specific importance. For example, the first information includes latency information of the PDU having at least one of the specific priority, the specific type, or the specific importance. For example, the first information includes latency information of the burst having at least one of the specific priority, the specific type, or the specific importance.

In some embodiments, the latency information is related to at least one of: a reference point, an information Propagation Delay (PD), a time difference between the terminal device and the network device, a time difference in uplink and/or downlink, a Timing Advance (TA), an uplink delay, or a downlink delay.

Alternatively, the reference point may be referred to as a reference time point.

Optionally, the information PD may include a time difference between a time when information is transmitted by the terminal device and a time when the information is received by the network device, and/or a time difference between a time when information is transmitted by the network device and a time when the information is received by the terminal device.

Optionally, in a random access procedure, the network device may determine the TA value by measuring the received preamble, and transmit the TA value to the terminal device through a Timing Advance Command field of a Random Access Response (RAR).

In some embodiments, the latency information is generated using a first time as a reference.

In some embodiments, the latency information is determined based on a delay generated using a first time as a reference and an information propagation delay.

In some embodiments, the latency information is determined based on a delay generated using a first time as a reference, an information propagation delay, and a time difference between the terminal device and a network device.

In some embodiments, the latency information is determined based on a delay generated using a first time as a reference, an information propagation delay, and a downlink delay.

In some embodiments, the latency information is determined based on a delay generated using a first time as a reference, and a TA.

In some embodiments, the latency information is determined based on a delay generated using a first time as a reference, and at least one of: an information propagation delay, a time difference between the terminal device and a network device, a downlink delay, or a TA.

Herein, the first time includes at least one of the following corresponding to a Physical Uplink Shared Channel (PUSCH): a time unit, a starting time, an ending time, a boundary of the PUSCH, an upper boundary of the PUSCH, a lower boundary of the PUSCH, a boundary of a UL grant, an upper boundary of the UL grant, or a lower boundary of the UL grant.

Optionally, the PUSCH may include a PUSCH carrying one or more first MAC CEs.

Optionally, the time unit corresponding to the PUSCH may include: all time units of the PUSCH, or a starting time unit corresponding to the PUSCH, or an ending time unit corresponding to the PUSCH. For example, the starting time unit corresponding to the PUSCH may be a starting symbol. For example, the ending time unit corresponding to the PUSCH may be an ending symbol.

Optionally, the latency information generated using the first time as a reference may be a time difference between a required transmission completion time for at least one of the data to be transmitted, the PDU Set, the burst, the packet, the PDU, or the packet group, and the first time.

In some embodiments, the latency information is determined by subtracting the information propagation latency from the delay generated using the first time as a reference.

In some embodiments, the latency information is determined by subtracting both the information propagation delay and the time difference between the terminal device and the network device from the delay generated using the first time as a reference.

In some embodiments, the latency information is determined by subtracting both the information propagation delay and the downlink delay from the delay generated using the first time as a reference.

In some embodiments, the latency information is determined by subtracting the TA from the delay generated using the first time as a reference.

In some embodiments, the latency information is determined by subtracting, from the delay generated using the first time as a reference, at least one of: the information propagation delay, the time difference between the terminal device and the network device, the uplink delay, the downlink delay, or the TA.

In some embodiments, the first duration is determined based on one of: either one of or a sum of at least two of an information propagation delay, a network device processing duration, a time difference between the terminal device and a network device, an uplink delay, a downlink delay, or a TA.

In some embodiments, the third duration is determined based on a sum of: a retransmission duration, and either one of or a sum of at least two of the information propagation delay, the network device processing duration, the time difference between the terminal device and the network device, the uplink delay, the downlink delay, or the TA.

Optionally, the network device processing duration may include: a duration for processing the PUSCH by the network device, a duration of the network device from the beginning of receiving the PUSCH to the completion of parsing one or more MAC CEs, a duration of the network device from the beginning of receiving the PUSCH to the completion of parsing the first information, or a duration of the network device from the beginning of receiving the PUSCH to the transmission of the UL grant.

Several methods for determining the third duration are schematically listed as follows. It should be noted that the third duration may be determined by methods other than the determination methods listed below, which is not limited in the embodiments of the disclosure. For example, the third duration may be determined based on a sum of the retransmission duration and at least one of the information propagation delay, or the time difference between the terminal device and the network device. For another example, the third duration may be determined based on a sum of the retransmission duration, the network device processing duration and at least one of the information propagation delay, or the time difference between the terminal device and the network device. For yet another example, the third duration may be determined based on a sum of the retransmission duration, the downlink delay information and at least one of the information propagation delay, or the time difference between the terminal device and the network device. For still another example, the third duration may be determined based on a sum of the retransmission duration, the downlink delay information, the network device processing duration and at least one of the information propagation delay, or the time difference between the terminal device and the network device. For still another example, the third duration may be determined based on a sum of the retransmission duration, the downlink delay information, the network device processing duration and at least one of the information propagation delay, or the time difference between the terminal device and the network device. For still another example, the third duration may be determined based on a sum of the TA and the retransmission duration. For still another example, the third duration may be determined based on a sum of the TA, the retransmission duration, and the network device processing duration.

In some embodiments, the terminal device transmits the first information, which includes that: the terminal device transmits the first information in one of the following eleven cases, in other words, the first information is transmitted by the terminal device in at least one of the following eleven cases.

A UCI or a CG-UCI or a Dynamic Grant UCI (DG-UCI) or a new UCI or a PUCCH is present.

A Buffer Status Report (BSR) and one of a UCI, a CG-UCI, a DG-UCI, a new UCI, or a PUCCH are reported simultaneously.

A BSR and one of a UCI, a CG-UCI, a DG-UCI, a new UCI, or a PUCCH are carried in the same resource.

A BSR and one of a UCI, a CG-UCI, a DG-UCI, a new UCI, or a PUCCH are reported within a time period.

The terminal device reports a UCI, a CG-UCI, a DG-UCI, a new UCI, or a PUCCH.

Dynamic indication information or a UCI or a CG-UCI or a DG-UCI or a new UCI or a PUCCH indicates that a CG PUSCH resource is used and/or is not used.

Dynamic indication information or a UCI or a CG-UCI or a DG-UCI or a new UCI or a PUCCH indicates an unused CG PUSCH resource.

Dynamic indication information or a UCI or a CG-UCI or a DG-UCI or a new UCI or a PUCCH is present and indicates that a CG PUSCH resource is used and/or is not used.

Dynamic indication information or a UCI or a CG-UCI or a DG-UCI or a new UCI or a PUCCH indicates that a PUSCH resource is used and/or is not used.

Dynamic indication information or a UCI or a CG-UCI or a DG-UCI or a new UCI or a PUCCH indicates an unused PUSCH resource.

Dynamic indication information or a UCI or a CG-UCI or a DG-UCI or a new UCI or a PUCCH indicates a CG PUSCH resource that is not used, or indicates whether an unused CG PUSCH resource is present, or indicates a used CG PUSCH resource, or indicates that at least part of a CG PUSCH resource is used.

Optionally, in any one of the embodiments in the disclosure, the same resource may include the same PUSCH resource or the same UL grant resource.

Optionally, the indication that the PUSCH resource is used and/or is not used includes at least one of: indication of an unused CG PUSCH resource, indication of whether an unused CG PUSCH resource is present, indication of a used CG PUSCH resource, indication of at least part of the used CG PUSCH resource (or which part of the CG PUSCH resource is used), or indicating that at least part of the CG PUSCH resource is used.

Optionally, when the UE reports the BS information, the UE does not report the BS information corresponding to the LCH/LCG/Burst/PDU Set that corresponds to the UCI.

Optionally, if the MAC CE carrying the BS information and the UCI are simultaneously carried, the UE does not report the BS information corresponding to the LCH/LCG/Burst/PDU Set that corresponds to the UCI when reporting the BS information.

Optionally, when there are two LCHs/LCGs/Bursts/PDU Sets for which the BS is triggered, and one of the two LCHs/LCGs/Bursts/PDU Sets is an LCH/LCG/Burst/PDU Set corresponding to the UCI, the UE reports a short BS.

Optionally, the UCI is used to indicate a case where there is an unused CG PUSCH. Once such information is indicated in advance, the network device knows that uplink resources are over-allocated and the LCH associated with these CG occasions will have no remaining data to be transmitted. In this case, once the BSR is included in the first CG PUSCH opportunity and the UCI indicates an unused CG PUSCH present from the third opportunity, there is no need to report the BS information of the LCHs associated with these CGs. For example, assuming that BSRs have been triggered for two LCGs (e.g., LCG1 and LCG2), and LCG1 is associated with a CG configuration, if the two LCGs have data available for transmission when a MAC PDU including the BSR is to be constructed, and if the UE knows in advance the unused resources present in subsequent CG PUSCH occasions, it is better to not report the BS of the LCG1, and/or the UE will report a short BSR.

In some embodiments, the dynamic indication information or the UCI or the CG-UCI or the DG-UCI or the new UCI or the PUCCH is configured for at least one of: each or single CG, each or single MAC entity, each or single terminal device, each or single LCH, each or single LCG, each or single service, each or single DG, each or single CG group, or each or single CG pair.

In some embodiments, the dynamic indication information or the UCI or the CG-UCI or the DG-UCI or the new UCI or the PUCCH is enabled for at least one of: each or single CG, each or single MAC entity, each or single UE, each or single LCH, each or single LCG, each or single service, each or single DG, each or single CG group, or each or single CG pair.

In some embodiments, at least part of one or more CG resources configured by a network device to the terminal device carry the first information.

In some embodiments, each or single CG resource among one or more CG resources configured by a network device to the terminal device includes one or more CG occasions, where at least part of the one or more CG occasions carries the first information.

Optionally, in any one of the embodiments in the disclosure, the CG resource may be a resource corresponding to the CG configuration, or a resource determined based on the CG period in the CG configuration.

In some embodiments, the first information corresponds to an LCH(s) other than LCH(s) corresponding to a current PUSCH, and/or the first information includes a short MAC CE or a truncated short MAC CE.

In some embodiments, in a case where an LCH(s)/LCG(s) other than LCH(s)/LCG(s) corresponding to a current PUSCH and the LCH/LCG corresponding to the current PUSCH exist, the first information corresponds to the LCH(s) other than the LCH(s) corresponding to current PUSCH, and/or the first information includes a short MAC CE or a truncated short MAC CE.

In this way, the first information only corresponds to LCH(s) other than the LCH(s) corresponding to the current PUSCH, but does not correspond to the LCH(s)/LCG(s) corresponding to the current PUSCH, and/or the first information includes the short MAC CE or the truncated short MAC CE, thereby reducing reported information and improving the information transmission efficiency.

In some embodiments, the first information or at least one of the following associated with the first information: LCH, LCG, DRB, UE, burst, or PDU Set corresponds to one of: a non-current CG, a currently unused CG, a currently unused CG group, or a currently unused CG pair.

For example, the first information corresponds to the non-current CG. For another example, the LCH associated with the first information corresponds to the non-current CG.

In some embodiments, the first information or at least one of the following associated with the first information: LCH, LCG, DRB, UE, burst, or PDU Set corresponds to a DG.

For example, the first information corresponds to the DG. For another example, the LCH associated with the first information corresponds to the DG.

In some embodiments, the following contents may be separately embodied, that is, the following contents are unrelated to the description related to the first information described above. Alternatively, in other embodiments, the following contents may be used in conjunction with the first information.

In some embodiments, different Quality of Service (QoS) flows correspond to the different PDU sets or the different bursts.

In some embodiments, the same QoS flow corresponds to the different PDU sets or the different bursts.

Optionally, the PDU set or the burst is associated with the first information.

Optionally, when the present embodiment is separately implemented, an embodiment of the disclosure provides a communication method, which is applied to a communication device including the terminal device or the network device. The method includes that: QoS flow(s) corresponding to information received and/or transmitted by the communication device may correspond to the different PDU sets or the different bursts.

In some embodiments, at the terminal device side, the terminal device or an AS of the terminal device performs different processing on the different PDU sets or the different bursts or different QoS flows, based on the QoS flow(s).

In some embodiments, at the terminal device side, the terminal device or an AS of the terminal device performs different processing on the different PDU sets or the different bursts or different QoS flows, based on differences among the PDU Sets or differences among the bursts or differences among the QoS flows.

In some embodiments, at the network device side, the network device or an AS of the network device performs different processing on the different PDU sets or the different bursts or different QoS flows based on the QoS flow(s).

In some embodiments, at the network device side, the network device or an AS of the network device performs different processing on the different PDU sets or the different bursts or different QoS flows based on differences among the PDU Sets or differences among the bursts or differences among the QoS flows.

Different processing are performed on the different PDU sets or the different bursts or the different QoS flows, which may include that: different processing are performed on the different PDU sets, different processing are performed on the different bursts, or different processing are performed on the different QoS flows.

Optionally, in any one of the embodiments in the disclosure, the AS may include at least one of: a Packet Data Convergence Protocol (PDCP) layer, a Radio Link Control (RLC) layer, a MAC layer, a Service Data Adaptation Protocol (SDAP) layer, or the like.

Optionally, in any one of the embodiments in the disclosure, the QoS flow may be replaced with a QoS flow identity.

Optionally, when the present embodiment is separately implemented, an embodiment of the disclosure provides a communication method, which is applied to a communication device including the terminal device or the network device. The method includes that: the communication device or the AS of the communication device performs different processing on different PDU sets or different bursts or different QoS flows based on differences among the PDU Sets or differences among the bursts or differences among the QoS flows.

In some embodiments, the differences among the PDU Sets or the differences among the bursts or the differences among the QoS flows includes but is not limited to differences in terms of at least one of: priority, type, or importance.

For example, the PDU sets are different, which includes that priorities and/or types and/or importance of the PDU sets are different. For another example, the bursts are different, which includes that priorities and/or types and/or importance of the bursts are different. For yet another example, the QoS flows are different, which includes that priorities and/or types and/or importance of the QoS flows are different.

In some embodiments, at the terminal device side, the differences among the PDU Sets or the differences among the bursts or the differences among the QoS flows are carried in a data packet, or are obtained by the terminal device through interlayer interaction, or are obtained by the terminal device through interaction with a network device.

In some embodiments, at the network device side, the differences among the PDU Sets or the differences among the bursts or the differences among the QoS flows are carried in a data packet, or are obtained by the network device through interlayer interaction, or are obtained by the network device through interaction with a terminal device.

Optionally, the terminal device interacts with the network device, which may include that: the terminal device interacts with an access network device, or the terminal device interacts with a core network device.

Optionally, the packet may carry at least one of the following of the PDU set, or the burst, or the QoS flow: the priority, the type, or the importance, thereby obtaining the differences among the PDU Sets or the differences among the bursts or the differences among the QoS flows. Optionally, the packet may carry at least one of the following of the PDU set, or the burst, or the QoS flow: different priorities, different types, or different importance (that is, the differences among the PDU Sets or the differences among the bursts or the differences among the QoS flows).

Optionally, in any one of the embodiments in the disclosure, the terminal device may interact with the network device, which may include that: the terminal device interacts with the access network device, and/or the terminal device interacts with the core network device.

In some embodiments, different processing are performed on different PDU sets or different bursts or different QoS flows, which may be enabled based on a network indication (such as at least one of a base station indication, a core network indication, or an Application Function (AF) indication), or may be enabled based on a configuration parameter or a QoS parameter or information carried in a packet. Exemplarily, the network device indicates an AS to enable that different processing are performed on different PDU sets or different bursts or different QoS flows before the AS enables that different processing are performed on different PDU sets or different bursts or different QoS flows. Exemplarily, depending on whether there are different PDU sets, different bursts, or different QoS flows, the AS enables that different processing are performed on different PDU sets or different bursts or different QoS flows by using differences in at least one of the priority, the type, or the importance (optionally, other configurations or parameters may be used).

In some embodiments, at the terminal device side, the terminal device or the AS of the terminal device performs different processing on different PDU sets or different bursts or different QoS flows based on fifth indication information as well as the QoS flow(s).

In some embodiments, at the terminal device side, the terminal device or the AS of the terminal device performs different processing on the different PDU sets or the different bursts or the different QoS flows based on fifth indication information as well as the differences among the PDU Sets, or the differences among the bursts or the differences among the QoS flows.

In some embodiments, at the network device side, the network device or the AS of the network device performs different processing on the different PDU sets or the different bursts or the different QoS flows based on fifth indication information as well as the QoS flow(s).

In some embodiments, at the network device side, the network device or the AS of the network device performs different processing on the different PDU sets or the different bursts or the different QoS flows based on fifth indication information as well as the differences among the PDU Sets, or the differences among the bursts or the differences among the QoS flows.

Herein, the fifth indication information is used for indicating whether to perform different processing on the different PDU Sets or the different bursts or the different QoS flows.

Optionally, different processing are performed on the different PDU sets or the different bursts or the different QoS flows after the fifth indication information indicates that the different processing are performed on the different PDU sets or the different bursts or the different QoS flows. Optionally and accordingly, the different processing are not performed on the different PDU sets or the different bursts or the different QoS flows after the fifth indication information indicates that the different processing are not performed on the different PDU sets or the different bursts or the different QoS flows.

In some embodiments, at the terminal device side, the fifth indication information is configured by an application layer of the terminal device, or is configured by a network device to the terminal device, or is configured by a core network device to the terminal device, or is configured by a base station device to the terminal device, or is configured by an application server to the terminal device, or is determined by the terminal device.

In some embodiments, at the network device side, the fifth indication information is configured by an application layer of the network device, or is indicated by a terminal device to the network device, or is configured by a core network device to the network device, or is configured by an application server to the network device, or is determined by the network device.

Optionally, the fifth indication information is information determined by the terminal device, which may include that: the fifth indication information is information determined by the terminal device based on the pre-configuration. Optionally, the fifth indication information is information determined by the network device, which may include that: the fifth indication information is information determined by the network device based on the pre-configuration.

In some embodiments, the first processing is performed on the PDU set or the burst, which may be enabled based on a network indication (such as at least one of a base station indication, a core network indication, or an AF indication), or may be enabled based on a configuration parameter or a QoS parameter or information carried in a packet. Exemplarily, the network device indicates an AS to enable that the first processing is performed on the PDU set or the burst before the AS enables that the first processing is performed on the PDU set or the burst. Exemplarily, depending on whether there are the PDU set or the burst, the AS enables that the first processing is performed on the PDU set or the burst by using a configuration, or a value, or a parameter of at least one of the priority, the type, or the importance.

Optionally, the PDU set or the burst is either, partial, or specific.

In some embodiments, at the terminal device side, the terminal device or an AS of the terminal device performs first processing on the PDU Set(s) or the burst(s), the first processing is performed in a unit of the PDU Set or the burst, where the first processing includes at least one of: packet loss, retransmission, priority determination or modification, storage, reordering, transmission via different paths (for example, transmission using at least one of different RLCs/PDCPs/LCHs/MACs/carriers), duplication transmission (for example, whether the duplication transmission is enabled, transmissions using different duplication transmission paths), or repetition transmission (for example, whether the repetition transmission is enabled, transmissions using different repetition numbers).

In some embodiments, at the network device side, the network device or an AS of the network device performs a first processing on the PDU Set or the burst, the first processing being in a unit of the PDU Set or the burst, where the first processing includes at least one of: packet loss, retransmission, priority determination or modification, storage, reordering, transmission via different paths (for example, transmission using at least one of different RLCs/PDCPs/LCHs/MACs/carriers), duplication transmission (for example, whether the duplication transmission is enabled, transmissions using different duplication transmission paths), or repetition transmission (for example, whether the repetition transmission is enabled, transmissions using different repetition numbers).

Optionally, when the present embodiment is separately implemented, an embodiment of the disclosure provides a communication method, which is applied to a communication device including the terminal device or the network device. The method includes that: the communication device or the AS of the communication device performs first processing on the PDU Set or the burst, the first processing is performed in a unit of the PDU Set or the burst, where the first processing includes at least one of: packet loss, retransmission, priority determination or modification, storage, reordering, transmission via different paths, duplication transmission, or repetition transmission.

In some embodiments, at the terminal device side, the terminal device or the AS of the terminal device performs the first processing on the PDU Set(s) or the burst(s) based on sixth indication information.

In some embodiments, at the network device side, the network device or the AS of the network device performs the first processing on the PDU Set(s) or the burst(s) based on sixth indication information.

Herein, the sixth indication information is used for indicating consistent processing of the PDU Set(s) or the burst(s), or indicating whether the processing is required for all packets in the PDU Set(s) or all packets in the burst(s), or indicating one or more of the first processing to be used.

Optionally, the consistent processing of the PDU Set(s) or the burst(s), which may include that: the uniform/same processing is performed on the same PDU Set or different PDU Sets, or the uniform/same processing is performed on the same burst or different bursts.

In some embodiments, at the terminal device side, the sixth indication information is configured by an application layer of the terminal device, or is configured by a network device to the terminal device, or is configured by a core network device to the terminal device, or is configured by a base station device to the terminal device, or is configured by an application server to the terminal device, or is determined by the terminal device.

In some embodiments, at the network device side, the sixth indication information is configured by an application layer of the network device, or is indicated by a terminal device to the network device, or is configured by a core network device to the network device, or is configured by an application server to the network device, or is determined by the network device.

Optionally, the sixth indication information is information determined by the terminal device, which may include that: the sixth indication information is information determined by the terminal device based on the pre-configuration. Optionally, the sixth indication information is information determined by the network device, which may include that: the sixth indication information is information determined by the network device based on the pre-configuration.

In some embodiments, if different pieces of second information for the PDU Set(s) or the burst(s) or the QoS flow(s) and sixth indication information do not coexist, processing is performed based on one of the second information or the sixth indication information. For example, if different pieces of second information for the PDU Set(s) or the burst(s) or the QoS(s) flow and sixth indication information do not coexist, at the terminal device side, the terminal device performs the processing based on one of the second information or the sixth indication information. If different pieces of second information for the PDU Set(s) or the burst(s) or the QoS flow(s) and sixth indication information do not coexist, at the network device side, the network device performs the processing based on one of the second information or the sixth indication information.

Optionally, the PDU set or the burst is either, partial, or specific.

The sixth indication information is used for indicating consistent processing of the PDU Set(s) or the burst(s), or indicating whether the processing is required for all packets in the PDU Set(s) or all packets in the burst(s), or indicating one or more of the first processing to be used. The first processing includes at least one of: packet loss, retransmission, priority determination or modification, storage, reordering, transmission via different paths (for example, transmission using at least one of different RLCs/PDCPs/LCHs/MACs/carriers), duplication transmission (for example, whether the duplication transmission is enabled, transmissions using different duplication transmission paths), or repetition transmission (for example, whether the repetition transmission is enabled, transmissions using different repetition numbers).

Optionally, in a case where the second information is present, the processing is performed based on the second information. Optionally, in a case where the sixth indication information is present, the processing is performed based on the sixth indication information. Optionally, in a case where the second information is present in a first time unit and the sixth indication information is present in a second time unit, the processing is performed based on the second information in the first time unit and the processing is performed based on the sixth indication information in the second time unit. Herein, the first time unit may be before or after the second time unit, the first time unit and the second time unit do not overlap.

For example, when there are only different pieces of information of the PDU set or the burst or the QoS flow, or there is only the second indication information, the processing is performed based on a respective rule.

For example, in a case where there are different pieces of second information of the PDU set, the burst, or the QoS flow, the processing is performed based on differences among the PDU sets, differences among the bursts, or differences among the QoS flows. For another example, in a case where there is sixth indication information for indicating consistent processing of the PDU Set(s) or the burst(s), or indicating whether the processing is required for all packets in the PDU Set(s) or all packets in the burst(s), or indicating one or more of the first processing to be used, the processing is performed based on a respective rule. For example, the PDU Set or the burst is consistently processed, or the processing is performed depending on whether all packets in the PDU Set(s) or all packets in the burst(s) are processed, or the processing is performed based on one or more of packet loss, retransmission, priority determination or modification, storage, reordering, transmission via different paths (for example, transmission using at least one of different RLCs/PDCPs/LCHs/MACs/carriers), duplication transmission (for example, whether the duplication transmission is enabled, transmissions using different duplication transmission paths), or repetition transmission (for example, whether the repetition transmission is enabled, transmissions using different repetition numbers).

Optionally, in any one of the embodiments in the disclosure, the processing is performed based on differences among the PDU sets, differences among the bursts, or differences among the QoS flows, which may include that: different processing are performed on different PDU sets, different bursts, or different QoS flows based on the differences among the PDU sets, the differences among the bursts, or the differences among the QoS flows.

In some embodiments, if different pieces of second information for the PDU Set(s) or the burst(s) or the QoS flow(s) and sixth indication information coexist, processing is performed based on a combination of the second information and the sixth indication information, or processing is performed based on one of the second information or the sixth indication information, or processing is firstly performed based on one of the second information or the sixth indication information and then processing is performed based on the other one of the second information or the sixth indication information, or processing is performed based on information with a higher priority among the second information and the sixth indication information, or the PDU Set(s) or the burst(s) having at least one of a specific priority, a specific type, or a specific importance is processed based on the sixth indication information or first processing is performed on the PDU Set(s) or the burst(s) having at least one of a specific priority, a specific type, or a specific importance, or the PDU Set(s) or the burst(s) having at least one of a specific priority, a specific type, or a specific importance is not processed based on the sixth indication information or first processing is not performed on the PDU Set(s) or the burst(s) having at least one of a specific priority, a specific type, or a specific importance.

The sixth indication information is used for indicating consistent processing of the PDU Set(s) or the burst(s), or indicating whether the processing is required for all packets in the PDU Set(s) or all packets in the burst(s), or indicating one or more of the first processing to be used. The first processing includes at least one of: packet loss, retransmission, priority determination or modification, storage, reordering, transmission via different paths (for example, transmission using at least one of different RLCs/PDCPs/LCHs/MACs/carriers), duplication transmission (for example, whether the duplication transmission is enabled, transmissions using different duplication transmission paths), or repetition transmission (for example, whether the repetition transmission is enabled, transmissions using different repetition numbers).

For example, when different pieces of second information for the PDU Set or the burst or the QoS flow and sixth indication information coexist, at the terminal device side, the terminal device performs the processing based on a combination of the second information and the sixth indication information, or the terminal device performs the processing based on one of the second information or the sixth indication information, or the terminal device first performs processing based on one of the second information or the sixth indication information and then performs processing based on the other one of the second information or the sixth indication information, or the terminal device performs processing based on information having a higher priority between the second information and the sixth indication information, or the terminal device performs processing on the PDU Set or the burst having at least one of a specific priority, a specific type, or a specific importance based on the sixth indication information or the terminal device performs a first processing on the PDU Set or the burst having at least one of a specific priority, a specific type, or a specific importance, or the terminal device does not perform the processing on the PDU Set or the burst having at least one of a specific priority, a specific type, or a specific importance based on the sixth indication information or the terminal device does not perform the first processing on the PDU Set or the burst having at least one of a specific priority, a specific type, or a specific importance.

For example, when different pieces of second information for the PDU Set or the burst or the QoS flow and sixth indication information coexist, at the network device side, the network device performs the processing based on a combination of the second information and the sixth indication information, or the network device performs the processing based on one of the second information or the sixth indication information, or the network device firstly performs processing based on one of the second information or the sixth indication information and then performs processing based on the other one of the second information or the sixth indication information, or the network device performs processing based on information with a higher priority among the second information and the sixth indication information, or the network device performs processing on the PDU Set(s) or the burst(s) having at least one of a specific priority, a specific type, or a specific importance based on the sixth indication information or the network device performs first processing on the PDU Set(s) or the burst(s) having at least one of a specific priority, a specific type, or a specific importance, or the network device does not perform the processing on the PDU Set(s) or the burst(s) having at least one of a specific priority, a specific type, or a specific importance based on the sixth indication information or the network device does not perform the first processing on the PDU Set(s) or the burst(s) having at least one of a specific priority, a specific type, or a specific importance.

For the network device or the terminal device, optionally, the first processing is performed, which may include: performing packet loss, retransmission, priority determination or modification, storage, reordering, transmission via different paths (for example, transmission using at least one of different RLCs/PDCPs/LCHs/MACs/carriers), duplication transmission (for example, whether the duplication transmission is enabled, transmissions using different duplication transmission paths), repetition transmission (for example, whether the repetition transmission is enabled, transmissions using different repetition numbers). Optionally, for PDU set(s) or burst(s) other than the PDU set(s) or burst(s) having at least one of a specific priority, a specific type, or a specific importance, the processing is not performed based on the sixth indication information, or packet loss, a retransmission, priority determination or modification, storage, reordering, transmission via different paths (for example, transmission using at least one of different RLCs/PDCPs/LCHs/MACs/-carriers), duplication transmission (for example, whether the duplication transmission is enabled, transmissions using different duplication transmission paths), repetition transmission (for example, whether the repetition transmission is enabled, transmissions using different repetition numbers) are not performed.

Optionally, examples of the processing in combination with the two kinds of information are described as follows. For example, the processing is performed not only based on differences among the PDU sets or differences among the bursts or differences among the QoS flows, but also based on the sixth indication information for indicating whether processing is required for all packets in the PDU Set(s) or all packets in the burst(s), or based on the sixth indication information for indicating one or more of the first processing to be used.

Optionally, the processing is firstly performed based on the one of the second information or the sixth indication information and then the processing is performed based on the other one of the second information or the sixth indication information, which may include that: the processing is performed alternately based on the second information and the sixth indication information. For example, one of the second information or the sixth indication information is used for processing in one or more current transmission periods, and the other one of the second information or the sixth indication information is used for processing in one or more subsequent transmission periods. For example, within a period of time, one of the second information or the sixth indication information is firstly used for processing, and within another period of time, the other one of the second information or the sixth indication information is used for processing.

Optionally, the priorities of the second information and the sixth indication information may be configured by the network device to the terminal device, or may be determined by the terminal device itself, or may be indicated by the terminal device to the network device, or may be predefined in a protocol.

Optionally, in any one of the embodiments in the disclosure, the processing is not performed based on the sixth indication information, which may include that: in the PDU set(s) or the burst(s) having at least one of a specific priority, a specific type, or a specific importance, even if some packets are missed, the packets that are not missed are required to be transmitted, or the packets are transmitted in a case where the first timer expires, or the packets are transmitted based on a manner that not all packets need to be transmitted.

In some embodiments, different PDU Sets or different bursts or different QoS flows correspond to different first processing. The first processing includes at least one of: packet loss, retransmission, priority determination or modification, storage, reordering, transmission via different paths (for example, transmission using at least one of different RLCs/PDCPs/LCHs/MACs/carriers), duplication transmission (for example, whether the duplication transmission is enabled, transmissions using different duplication transmission paths), repetition transmission (for example, whether the repetition transmission is enabled, transmissions using different repetition numbers).

Optionally, the retransmission processing includes the number (i.e., X) of retransmissions, or retransmission or no retransmission.

For example, different PDU sets correspond to different packet loss processing. For another example, different bursts correspond to different retransmission processing.

For example, for different PDU sets, packet loss processing of entire PDU Set is performed for some PDU sets, and packet loss processing of the PDU (regardless of the entire PDU Set) is performed for some PDU sets. For example, for different bursts, packet loss processing of entire burst is performed for some bursts, and packet loss processing of the PDU (regardless of the entire burst) is performed for some bursts.

For example, for different PDU sets, retransmission processing of entire PDU Set is performed for some PDU sets, and retransmission processing of the PDU (regardless of the entire PDU Set) is performed for some PDU sets. For example, for different bursts, retransmission processing of entire burst is performed for some bursts, and retransmission processing of the PDU (regardless of the entire burst) is performed for some bursts.

In some embodiments, the different PDU Sets or the different bursts or the different QoS flows correspond to different duration of a packet loss timer, or one of the different PDU Sets or one of the different bursts or one of the different QoS flows is configured with a packet loss timer and another of the different PDU Sets or another of the different bursts or another of the different QoS flows is not configured with a packet loss timer.

In some embodiments, the different PDU Sets or the different bursts or the different QoS flows correspond to different packet loss timers. For example, one is a timer for the PDU and another is a timer for the PDU Set.

Optionally, in a case where the packet loss timer expires, or in a case where the packet loss timer for the PDU set expires, or in a case where the packet loss timer for any PDU in the PDU set expires, the PDU set, or the burst, or the QoS flow corresponding to the packet loss timer may be discarded, or the packets in the PDU set, or the burst, or the QoS flow corresponding to the packet loss timer may be discarded.

Optionally, the timer for the PDU set may be started or maintained for each PDU in the PDU set, or may be started or maintained for only partial PDUs in the PDU set. Optionally, the partial PDUs may be the specific PDU, the first PDU, and/or the last PDU.

Optionally, the foregoing first information may include first sub-information and second sub-information. Hereinafter, the communication method of the embodiments in the disclosure will be described with reference to three embodiments, in which the first embodiment may correspond to a method for reporting the first sub-information (e.g., BS information), the second embodiment may correspond to a method for reporting the second sub-information (e.g., latency information), and the third embodiment may correspond to a method for reporting the BSR or the first information.

In the first embodiment: a UE transmits the first sub-information to a network device.

Optionally, the network device may include an access network device and/or a core network device.

Optionally, the first sub-information is used for the network device to perform scheduling or resource allocation.

Optionally, the first sub-information is carried by a MAC CE or an RRC.

Optionally, the first sub-information is one or more first MAC CEs.

Optionally, the first MAC CE is based on a BSR MAC CE in the related technologies, or based on a new BSR MAC CE. Optionally, different first MAC CEs correspond to different LCHs/LCGs/ DRBs.

Optionally, different first MAC CEs correspond to different data volume sizes (corresponding to the above-described data volume indication information) and/or latency information.

Optionally, each of the different first MAC CEs corresponds to data volume size and latency information. Alternatively, a part of the different first MAC CEs correspond to data volume and latency information, and another part of the different first MAC CEs correspond to data volume. Alternatively, each of the different first MAC CEs corresponds to data volume size.

Optionally, in a case where the first sub-information is multiple first MAC CEs, the UE may trigger a first reporting and/or carry one or more first MAC CEs on one PUSCH or one available UL resource.

Optionally, the first reporting may correspond to one or more MAC CEs.

Optionally, the one or more first MAC CEs may be the BSR MAC CE in the related technologies or may be the new BSR MAC CE.

Optionally, one available PUSCH or UL grant may carry the one or more MAC CEs.

Optionally, if no PUSCH or UL grant is available and the first reporting is triggered, one or more SRs are triggered.

Optionally, the first sub-information includes BS information. Further, the first sub-information may include latency information.

Optionally, the UE triggers the first reporting, and reports the first reporting when there are available UL resources. For example, when the UE triggers a BSR and there are available UL resources, the UE reports the BSR MAC CE.

Optionally, the related description of the indication manner of the first sub-information, or the value of the first sub-information, or the display value of the first sub-information, or the reporting of the first sub-information, or the first sub-information, or the generation of the first sub-information, or the carrying of the first sub-information, or the first reporting manner, or the first sub-information carried in the first MAC CE includes descriptions of the following four options.

In the first option: the BS index in the related technologies is further divided into levels. For example, the BS value corresponding to the index is further divided into several levels.

Optionally, a new bit is added into the BSR MAC CE for indicating a level within the range corresponding to the BS index on basis of the BS index in the related technologies.

Optionally, the step between levels may be larger as the index is larger, or may be fixed.

Optionally, the number of the levels may be larger as the index is larger. Optionally, the intervals corresponding to the BS values that correspond to different levels are the same, in other words, the steps are the same.

Optionally, the first option may be applicable to the table in the related technologies or may be only applicable to one or more BSR tables of the XR.

FIG. 4 is a diagram of a MAC CE format provided in an embodiment of the disclosure. As illustrated in FIG. 4, the MAC CE in FIG. 4 includes one byte (i.e., Oct 1), and the one byte includes eight bits, where the first three bits are used for setting the LCG/LC/RB ID, and the last five bits are used for setting a Buffer Size.

Optionally, in any one of the embodiments in the disclosure, the Buffer Size may include data volume indication information and/or latency information.

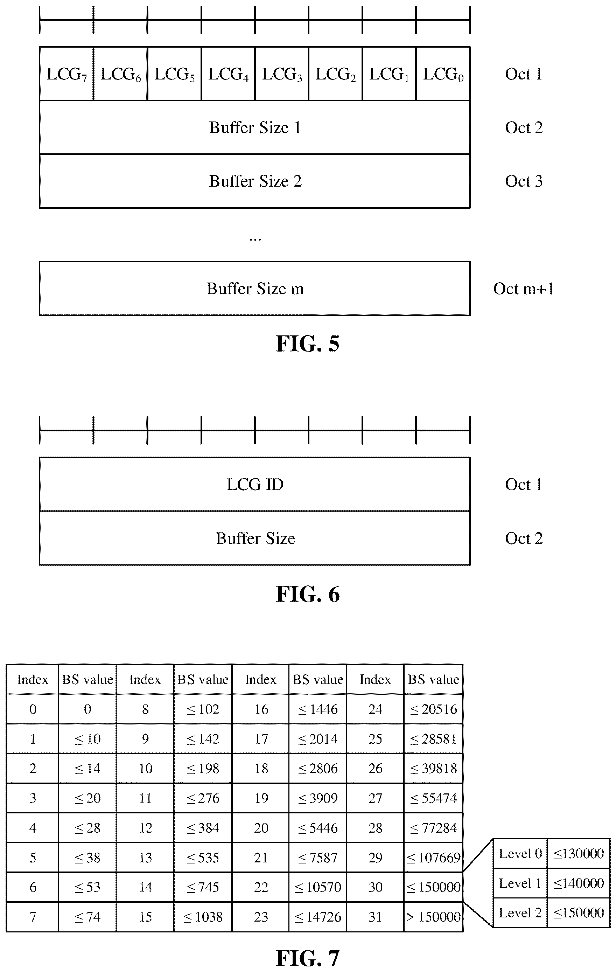

FIG. 5 is a diagram of another MAC CE format provided in an embodiment of the disclosure. As illustrated in FIG.

5, the MAC CE in FIG. 5 includes m+1 bytes, which are Oct 1, Oct 2, Oct 3, up to Oct m+1, respectively. The first byte in the m+1 bytes is used for setting the LCG ID, that is, the LCG ID can be set in LCG0 to LCG7. The last m bytes in the m+1 bytes are used for setting the Buffer Size, for example, Buffer Size 1, Buffer Size 2, up to Buffer Size m may be set. Here, the size of the MAC CE in FIG. 5 is variable, for example, the size of the MAC CE in FIG. 5 varies depending on the value of m.

FIG. 6 is a diagram of yet another MAC CE format provided in an embodiment of the disclosure. As illustrated in FIG. 6, the MAC CE in FIG. 6 includes two bytes, i.e., Oct 1 and Oct 2, respectively. The first byte Oct 1 is used for setting the LCG ID, and the second byte Oct 2 is used for setting the Buffer Size.

Optionally, in the embodiments corresponding to FIGS. 5 and 6, the LCG may be replaced with LC or RB.

The table is explained by taking an example corresponding to FIG. 4 where 5 bits are used to set the buffer size in the MAC CE. The 5 bits provide 2^5 = 32 index values, which are indexes from 0 to 31, the index 0 represents BSR with 0 byte, and the index value 31 represents BSR with 150000 bytes.

FIG. 7 is a diagram of a buffer size level of a 5-bit buffer size field provided in an embodiment of the disclosure. As illustrated in FIG. 7, the table corresponding to FIG. 7 may also be a table corresponding to the first option.

In FIG. 7, each Index has a corresponding BS value, and one Index may further correspond to multiple levels. For example, the levels corresponding to the Index 30 include: level 0, level 1, and level 2, where the second buffer status value associated with level 0 is ≤ 130000, the second buffer status value associated with level 2 is ≤ 140000, and the second buffer status value associated with level 3 is ≤ 150000.

It should be noted that FIG. 7 merely illustrates levels corresponding to the index 30 and a second buffer status value associated with each level. However, in other embodiments, at least part of other indexes should also have multiple levels and a second buffer status value associated with each level. For example, each of indexes 0 through 31 has a corresponding level or corresponding levels and a second buffer status value associated with each level. For another example, each of the indexes 8 to 31 has a corresponding level or corresponding levels and a second buffer status value associated with each level.

Optionally, in any one of the embodiments in the disclosure, in a case where one index corresponds to one level, the buffer status value associated with the index is the same as the buffer status value associated with the level.

In the second option: the generation formula of the BS values of the BSR table is modified to reduce the BSR range corresponding to a large BS index. For example, scaling is performed based on the BS value in the related technologies. For example, on basis of the BS value calculation formula, the BS value is multiplied by the reciprocal of the index.

Optionally, the second option is applicable to one or more BSR tables of the XR.

In the third option: in a case of large data volume, a new BSR table is designed.

Optionally, the new BSR table may be a table obtained through the first option or the second option.

Optionally, the steps of the BS values are equally spaced. Optionally, Index 0 corresponds to a large data volume. For example, in some embodiments, 0 in the BS values of FIG. 7 may be replaced with 10000 or a value ≤ 10000, and the subsequent BS values are values greater than 10000, thus the table can be applicable for transmission with large data volume.

Optionally, the new table may be one or more tables.

Optionally, the UE selects a BSR table to be used based on the LCH or the size of the data volume. Different BSR tables correspond to different MAC CE LCIDs.

In the fourth option: variable BSR table.

Optionally, the network device configures multiple sets of BSR table generation parameters, where the parameters include at least one of: start (corresponding to the starting value of the buffer status value described above), end (corresponding to the ending value of the buffer status value described above), step (corresponding to a difference value between two adjacent buffer status values), and whether the steps are fixed or changeable. Optionally, the changing rule of the steps may be related to the index.

Optionally, the network device configures one set of BSR table generation parameters (and then the new BSR table generation parameters can be reconfigured by RRC). For example, when the BSR table generation parameters do not meet the requirements, the new BSR table generation parameters are reconfigured by RRC.

Optionally, the network device may indicate whether to enable the new BSR table.

Optionally, in a case where multiple sets of BSR table generation parameters are configured, the UE may select to use a new BSR table and/or a certain set of BSR table generation parameters based on the data volume size or the LCH. Optionally, multiple BSR tables may be generated based on the multiple sets of BSR tables generation parameters, and one BSR table among the multiple BSR tables may be selected, or one set of BSR table generation parameters is selected from multiple sets of BSR table generation parameters.

Optionally, in a case where one set of BSR table generation parameters is configured, the UE may select a new BSR table to be used based on the size of the data volume or the LCH.

Optionally, a different MAC CE LCID may be used to distinguish which table is used.

Optionally, a different MAC CE LCID or a new bit in a BSR MAC CE may be used to indicate which set of parameters is used.

Table 2 is a diagram of a relationship between indexes and corresponding BS values.

Table 2

| Index | BS value |
|-------|----------|
| 0 | Start |
| 1 | ≤ Start + step |
| 2 | ≤ Start+2step |
| 3 | ≤ Start+3step |
| 4 | ≤ Start+4step |
| 5 | ≤ Start+5step |
| 6 | ≤ Start+6step |

In the embodiment, at the network device side, the network device receives the first sub-information. The first sub-information may be used for at least one of: data transmission, parameter adjustment, RRC reconfiguration, scheduling, or resource allocation.

In the embodiment, a method for reporting information such as data volume in a case where a large data volume service has data to be transmitted is provided, thereby ensuring service transmission requirements while avoiding excessive resource allocation. The embodiment may be used in conjunction with other embodiments or may be separately used.

In the second embodiment: the UE transmits second sub-information to the network device, where the second sub-information includes latency information.

Optionally, the network device is a base station.

Optionally, the second sub-information is used for the network device to perform scheduling or resource allocation.

Optionally, the second sub-information is carried by a MAC CE or an RRC.

Optionally, the second sub-information is carried in a new MAC CE or a BSR MAC CE.

Optionally, the second sub-information corresponds to an LCH/LCG/DRB, or a UE, or a burst, or a PDU Set.

Optionally, the latency information includes latency information with a latency value greater than or equal to a first duration, or the latency information includes latency information with a latency value less than or equal to a second duration, or the latency information includes at most X pieces of latency information. Herein, X may be an integer greater than or equal to 1.

Optionally, if no PUSCH or UL grant is available and reporting of the second sub-information is triggered, one or more SRs are triggered.

Optionally, if there is available PUSCH or UL grant and the reporting of second sub-information is triggered, one or more MAC CEs are triggered, or RRC reporting is triggered.

Optionally, the latency information is latency information of up to data or current data.

Optionally, the latency information has a characteristic of one of the following options, or a generation method/calculation method/indication method of the reported latency value includes one of the following options, or the reported latency value is one of the following options.

Option 1: when the latency information is generated or multiplexed, the added value is generated using the time of the boundary (slot/symbol, upper boundary, or lower boundary) of the reported resource (PUSCH) as a reference.

Option 2: when the latency information is generated or multiplexed, the added value is generated using the time of the boundary (slot/symbol, upper boundary, or lower boundary) of the reported resource (PUSCH) as a reference, and meanwhile the propagation delay PD value estimated by the UE is subtracted.

Option 3: when the latency information is generated or multiplexed, the added value is generated using the time of the boundary (slot/symbol, upper boundary, or lower boundary) of the reported resource (PUSCH) as a reference, and meanwhile the PD+ (downlink (DL) latency difference between the UE and the network device) value estimated by the UE is subtracted.

Option 4: when the latency information is generated or multiplexed, the added value is generated using the time of the boundary (slot/symbol, upper boundary, or lower boundary) of the reported resource (PUSCH) as a reference, and meanwhile the TA value is subtracted.

Optionally, the second reporting or latency information reporting/carrying includes one of the following options.

Option a: if the expected latency is less than the first time, the reporting is not performed. Optionally, the first time may be: the PD, or PD + base station processing time.

Option b: in a case where the channel quality is less than a first threshold or the error rate is greater than a second threshold, if the expected latency is less than a third duration, the reporting is not performed. Optionally, the third duration may be one of: PD + retransmission, or PD + retransmission + base station processing time, or PD+ (DL latency difference between the UE and the network device) value + retransmission, or PD+ (DL latency difference between the UE and the network device) value + retransmission + base station processing time, or TA + retransmission, or TA + retransmission + base station processing time.

In the embodiment, at the network device side, the network device receives the second sub-information. The second sub-information may be used for at least one of: data transmission, parameter adjustment, RRC reconfiguration, scheduling, or resource allocation.

Optionally, data whose latency exceeds the first duration or the third duration is not scheduled for transmission, or the corresponding transmittable resources are canceled. Optionally, data whose latency is less than or equal to the second duration is allocated with resources for transmission, or the corresponding transmissible resources are not cancelled.

Optionally, if the latency does not satisfy the service/LCH transmission requirement, the data of the service/LCH is not scheduled for transmission, or the corresponding transmittable resources are canceled. Optionally, if the latency meets the service/LCH transmission requirement, the data of the service/LCH is allocated with resources for transmission, or the corresponding transmissible resources are not cancelled.

In the embodiment, a method for reporting the latency information is provided, which ensures the latency transmission requirement, avoids the resource waste and improves the system capacity. The embodiment may be used in conjunction with other embodiments or may be separately used.

In the third embodiment: the UE reports the first information to the network device.

Optionally, when there is a UCI or a CG-UCI or a DG-UCI or a new UCI or PUCCH, or when a UCI or a CG-UCI or a DG-UCI or a new UCI or a PUCCH is reported, or when a UCI or a CG-UCI or a DG-UCI or a new UCI or a PUCCH indicates that a CG PUSCH resource is and/or is not used, or when dynamically indicating that a CG PUSCH resource is and/or is not used, or when dynamic indication information or a UCI or a CG-UCI or a DG-UCI or a new UCI or a PUCCH is present and indicates unused CG PUSCH resource, or when dynamic indication information or a UCI or a CG-UCI or a DG-UCI or a new UCI or a PUCCH is present and indicates that a CG PUSCH resource is and/or is not used, or the indication result of the dynamic indication information or a UCI or a CG-UCI or a DG-UCI or a new UCI or a PUCCH is an unused CG PUSCH resource, the UE reports the first information using the first manner.

Optionally, the UE reports the first information or the BSR, or transmits the first MAC CE or the BSR MAC CE.

Optionally, the network device configures multiple CG configurations or configures one CG to the UE.

Optionally, the multiple CG configurations or the one CG configuration include(s) one or more CG occasions per CG period.

Optionally, the UE uses a dynamic indication, or the UE uses a PUCCH, a UCI, a CG-UCI, a DG-UCI, or a new UCI to indicate the unused CG PUSCH resource, or indicate whether there is an unused CG PUSCH resource, or indicate which part of the CG PUSCH resource is used, or indicate that part of the CG PUSCH resource is used.

Optionally, the indication to use and/or not use the CG PUSCH resource includes at least one of the following forms: indicating the unused CG PUSCH resource, or indicating whether an unused CG PUSCH resource is present, or indicate which part of the CG PUSCH resource is used, or indicate that part of the CG PUSCH resource is used.

Optionally, the UCI is configured per CG, or the UCI is configured per MAC entity, or the UCI is configured per UE, or the UCI is configured per LCH/LCG, or the UCI is configured per service, or the UCI is configured per DG, or the UCI is configured per CG group/pair.

Optionally, the UCI is enabled per CG, or the UCI is enabled per MAC entity, or the UCI is enabled per UE, or the UCI is enabled per LCH/LCG, or the UCI is enabled per service, or the UCI is enabled per DG, or the UCI is enabled per CG group/pair.

Optionally, the first manner includes one of the following options.

Option 1: the UE uses enhanced BSR (latency information, latency information + BS) or first MAC CE to report the first information.

Option 2: the UE only reports the BS of LCH(s) other than the LCH(s) corresponding to the PUSCH in the BSR (in other words, the UE reports BS information of other LCHs).

For example, only information corresponding to a non-current CG or a corresponding CG or a corresponding CG group or a corresponding CG pair may be reported, where the information is carried information, information that can be carried, or information to be carried.

Optionally, the carried information is BS information (which may further include latency information). Optionally, the carried information is the first information. Optionally, the carried information is information of one of LCH/LCG/Burst/PDU Set/Service/DRB.

For another example, only information corresponding to the DG may be reported. The information is carried information, information that can be carried, or information to be carried.

Optionally, the carried information is BS information (which may further include latency information). Optionally, the carried information is the first information. Optionally, the carried information is information of one of LCH/LCG/Burst/PDU Set/Service/DRB.

In the embodiment, at the network device side, the network device receives the reporting. The reporting may be used for at least one of: data transmission, parameter adjustment, RRC reconfiguration, scheduling, or resource allocation.

In the embodiment, a method for reporting the BSR or the first information is provided, which reduces redundant reporting of the BS information, avoids the resource waste and improves the system capacity. The embodiment may be used in conjunction with other embodiments or may be separately used.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the content disclosed by the present disclosure as long as they do not violate the conception of the present disclosure. For another example, various embodiments described in the present disclosure and/or the technical features in various embodiments can be arbitrarily combined with the technologies in related technologies without conflict, and the technical solutions obtained after the combination should also fall within the scope of protection of the present disclosure.

It should also be understood that in the various method embodiments of the present disclosure, the size of the serial numbers of the above-mentioned various processes do not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or the data is a first direction from a station to user equipment in a cell. The term "uplink" is used to denote that the transmission direction of the signals or the data is a second direction from the user equipment in the cell to the station. The term "sidelink" is used to denote that the transmission direction of the signals or the data is a third direction from first user equipment to second user equipment. For example, "downlink signal" means that the transmission direction of the signal is the first direction. In addition, in the embodiments of the present disclosure, the term "and/or" refers to only an association relationship for describing associated objects and represents that three relationships may exist. Specifically, A and/or B may represent three cases: i.e., only A exists, both A and B exist, and only B exists. Furthermore, character "/" in the disclosure usually represents that previous and next associated objects form an "or" relationship.

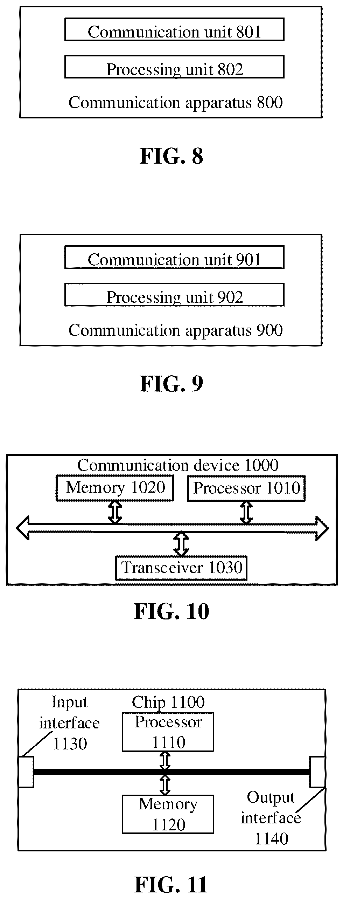

FIG. 8 is a structural diagram of a communication apparatus provided in an embodiment of the disclosure. As illustrated in FIG. 8, the communication apparatus 800 includes a communication unit 801.

The communication unit 801 is configured to transmit first information. The first information is used for at least one of: data transmission, RRC parameter adjustment, RRC reconfiguration, resource scheduling, or resource allocation.

In some embodiments, the communication apparatus 800 may be applied to a terminal device.

Optionally, the communication apparatus 800 includes a processing unit 802, configured to determine the first information.

In some embodiments, the first information is carried by an RRC message or one or more first MAC CEs.

Alternatively, the first information includes one or more first MAC CEs, or includes an RRC message, or includes one or more SRs.

In some embodiments, the first MAC CE includes a BSR MAC CE, or a protocol-predefined MAC CE.

In some embodiments, different first MAC CEs correspond to the same LCH or different LCHs; and/or different first MAC CEs correspond to the same LCG or different LCGs; and/or different first MAC CEs correspond to the same DRB or different DRBs; and/or different first MAC CEs correspond to the same burst or different bursts; and/or different first MAC CEs correspond to the same PDU Set or different PDU Sets; and/or different first MAC CEs correspond to the same data volume indication information or different pieces of data volume indication information; and/or different first MAC CEs correspond to the same latency information or different pieces of latency information.

In some embodiments, each or single first MAC CE among the one or more first MAC CEs includes data volume indication information and latency information; or a part of the one or more first MAC CEs includes data volume indication information and latency information, and the other part of the one or more first MAC CEs includes data volume indication information; or a part of the one or more first MAC CEs includes data volume indication information and latency information, and the other part of the one or more first MAC CEs includes latency information; or a part of the one or more first MAC CEs includes data volume indication information, and the other part of the one or more first MAC CEs includes latency information; or each or single first MAC CE among the one or more first MAC CEs includes data volume indication information; or each or single first MAC CE among the one or more first MAC CEs includes latency information.

In some embodiments, the processing unit 802 is further configured to at least one of: trigger a reporting; trigger reporting of the first information; generate the one or more first MAC CEs in a case where triggering of reporting occurs; generate the one or more first MAC CEs in a case where triggering of reporting of the first information occurs; generate the one or more first MAC CEs in a case where a MAC PDU including the one or more first MAC CEs is generated; generate the one or more first MAC CEs corresponding to reporting of the first information in a case where a MAC PDU including the one or more first MAC CEs corresponding to the reporting of the first information is generated; carry the one or more first MAC CEs on a PUSCH/UL resource/UL grant; carry the one or more first MAC CEs corresponding to the first information on a PUSCH/UL resource/UL grant; trigger the one or more first MAC CEs corresponding to the first information in a case where an available PUSCH/UL resource/UL grant is present; or generate the one or more first MAC CEs corresponding to the first information in a case where an available PUSCH/UL resource/UL grant is present.

In some embodiments, the communication unit 801 is further configured to: trigger and transmit the one or more SRs in a case where the terminal device triggers reporting and one of an available PUSCH, an available UL resource, or an available UL grant is absent; and/or transmit the one or more first MAC CEs or the RRC message in a case where the terminal device triggers the reporting and one of an available PUSCH, an available UL resource, or an available UL grant is present.

In some embodiments, the first information includes at least one of: at least one piece of data volume indication information, at least one BSR, at least one piece of BS information, or at least one piece of latency information.

In some embodiments, the first information is associated with at least one of: an LCH, an LCG, a DRB, a UE, a burst, or a PDU Set.

In some embodiments, the first MAC CE includes a first index and a first level.

The first index is included in at least one index; each or single index among the at least one index corresponds to at least one level; the first level is included in the at least one level corresponding to the first index.

A first buffer status value range associated with the each or single index includes a second buffer status value range associated with each or single level among the at least one level corresponding to the each or single index.

In some embodiments, an interval corresponding to the second buffer status value range associated with the each or single level increases based on an increase in the at least one index, and/or increases based on an increase in the at least one level; or an interval corresponding to the second buffer status value range associated with the each or single level is a first fixed value.

In some embodiments, a number of the at least one level corresponding to the each or single index increases based on an increase in the at least one index; or a number of the at least one level corresponding to the each or single index is a second fixed value.

In some embodiments, the communication unit 801 is further configured to: receive first indication information, where the first indication information is used for indicating that a first index mapping is enabled, and the first index mapping includes: the at least one index and/or the each or single index among the at least one index corresponds to the at least one level; and/or the first indication information being used for indicating that a current BSR reporting manner and/or a current index mapping is disabled.

In some embodiments, the processing unit 802 is further configured to: determine whether to use the first index mapping, where the first index mapping includes: the at least one index and/or the each or single index among the at least one index corresponds to the at least one level.

In some embodiments, the communication unit 801 is further configured to: transmit indication information indicating whether to use the first index mapping, where the first index mapping includes: the at least one index and/or the each or single index among the at least one index corresponds to the at least one level.

In some embodiments, the first MAC CE includes a second index, where the second index is included in at least one index.

A third buffer status value range associated with each or single index among the at least one index is determined by adjusting or scaling a fourth buffer status value range associated with the each or single index; or each or single index among the at least one index is associated with a third buffer status value range, the third buffer status value range associated with the each or single index is less than a fourth buffer status value range associated with the each or single index.

The fourth buffer status value range associated with the each or single index is predefined by a protocol.

In some embodiments, an endpoint value of the third buffer status value range associated with the each or single index is determined based on a result of dividing an endpoint value of the fourth buffer status value range associated with the each or single index by a value of the each or single index.

Alternatively, an endpoint value of the third buffer status value range associated with the each or single index is determined by dividing an endpoint value of the fourth buffer status value range associated with the each or single index by a specific value.

In some embodiments, the communication unit 801 is further configured to: receive second indication information, where the second indication information is used for indicating that a second index mapping is enabled, and the second index mapping includes: the at least one index and/or the each or single index among the at least one index is associated with the third buffer status value range; and/or the second indication information being used for indicating that a current BSR reporting manner and/or a current index mapping is disabled.

In some embodiments, the processing unit 802 is further configured to: determine whether to use the second index mapping, where the second index mapping includes: the at least one index and/or the each or single index among the at least one index is associated with the third buffer status value range.

In some embodiments, the communication unit 801 is further configured to: transmit indication information indicating whether to use the second index mapping, where the second index mapping includes: the at least one index and/or the each or single index among the at least one index is associated with the third buffer status value range.

In some embodiments, the first MAC CE includes a third index, where the third index is included in at least one index.

Intervals corresponding to fifth buffer status value ranges associated with different indexes among the at least one index are the same or different.

In some embodiments, the communication unit 801 is further configured to: receive third indication information, where the third indication information is used for indicating that the third index mapping is enabled, and the third index mapping includes: the at least one index and/or the each or single index among the at least one index is associated with the fifth buffer status value range; and/or the third indication information is used for indicating that a current BSR reporting manner and/or a current index mapping is disabled.

In some embodiments, the processing unit 802 is further configured to: determine whether to use the third index mapping, where the third index mapping includes: the at least one index and/or the each or single index among the at least one index is associated with the fifth buffer status value range.

In some embodiments, the communication unit 801 is further configured to: transmit indication information indicating whether to use the third index mapping, where the third index mapping includes: the at least one index and/or the each or single index among the at least one index is associated with the fifth buffer status value range.

In some embodiments, a buffer status value or an endpoint value of a buffer status value range associated with a first one of the at least one index is greater than a first threshold or equal to a second threshold.

In some embodiments, the at least one index is included in a first table, where the first table is determined from at least one table.

In some embodiments, the first table is determined from the at least one table based on third information, where the third information includes at least one of: a LCH, a LCG, whether a PDU Set exists, a type of the PDU Set, a priority of the PDU Set, data volume information of data to be transmitted, data volume indication information, or latency information.

In some embodiments, different tables among the at least one table correspond to different LCHs or LCIDs, or correspond to the same LCH or LCID; and/or different tables among the at least one table correspond to different LCGs or the same LCG; and/or information of whether a PDU Set exists corresponding to different tables among the at least one table is different or the same; and/or different tables among the at least one table correspond to different types of PDU Sets or the same type of PDU Set; and/or different tables among the at least one table correspond to different priorities of PDU Sets or the same priority of PDU Set; and/or different tables among the at least one table correspond to different pieces of data volume information of data to be transmitted or the same data volume information of data to be transmitted; and/or different tables among the at least one table correspond to different pieces of data volume indication information or the same data volume indication information; and/or different tables among the at least one table correspond to different pieces of latency information or the same latency information.

In some embodiments, the communication unit 801 is further configured to: receive fourth indication information, where the fourth indication information indicates that the following is enabled: at least part of the at least one table, a current BSR reporting manner, a current table; or the fourth indication information indicates that at least one of the following is disabled: at least part of the at least one table, a current BSR reporting manner, or a current table; or the fourth indication information indicates that the following is enabled: table(s) corresponding to at least part of at least one table generation parameter, a current BSR reporting manner, a current table; or the fourth indication information indicates that at least one of the following is disabled: table(s) corresponding to at least part of at least one table generation parameter, a current BSR reporting manner, or a current table.

The first table is included in the enabled at least part of the at least one table or is included in the enabled table(s) corresponding to the at least part of the at least one table generation parameter, or the first table is not included in the disabled at least part of the at least one table or is not included in the disabled table(s) corresponding to the at least part of the at least one table generation parameter.

In some embodiments, the processing unit 802 is further configured to determine whether to use the first table.

In some embodiments, the communication unit 801 is further configured to send indication information indicating whether to use the first table.

In some embodiments, the at least one index is included in the first table. The communication unit 801 is further configured to: receive at least one table generation parameter. The processing unit 802 is further configured to: determine the first table based on the at least one table generation parameter.

In some embodiments, the processing unit 802 is further configured to: determine at least one table generation parameter based on a pre-configuration, and determine the first table based on the at least one table generation parameter.

In some embodiments, the processing unit 802 is further configured to: determine a first table generation parameter from the at least one table generation parameter based on third information, and generate the first table based on the first table generation parameter; or generate at least one table based on the at least one table generation parameter, and determine the first table from the at least one table based on third information.

The third information includes at least one of: a LCH, a LCG, whether a PDU Set exists, a type of the PDU Set, a priority of the PDU Set, data volume information of data to be transmitted, data volume indication information, or latency information.

In some embodiments, the at least one index is included in a first table. The communication unit 801 is further configured to: receive table indication information, where the table indication information indicates a first table generation parameter or the first table, or indicates a first table generation parameter to be used or the first table to be used.

Alternatively, the first table generation parameter is selected by the communication apparatus 800 from at least one table generation parameter, or the first table is selected by the communication apparatus 800 from at least one table.

Alternatively, a first table generation parameter or the first table, or a first table generation parameter to be used or the first table to be used is predefined by the communication apparatus 800.

The first table generation parameter is used for generating the first table, the first table generation parameter is included in the at least one table generation parameter, and the first table is included in the at least one table.

In some embodiments, a LCID of the first MAC CE and/or at least one bit in the first MAC CE are associated with the first table; and/or the LCID of the first MAC CE and/or the at least one bit in the first MAC CE are associated with a first table generation parameter used for generating the first table.

In some embodiments, the table generation parameter includes at least one of: a starting value of a buffer status value, an ending value of the buffer status value, or a difference between two adjacent buffer status values. The difference is a fixed value, or the difference is determined based on an index corresponding to a preceding buffer status value of the two adjacent buffer status values.

In some embodiments, the first information includes at least one piece of latency information; or the first information includes latency information greater than or equal to a first duration; or the first information includes latency information less than or equal to a second duration; or the first information does not include latency information less than or equal to a first duration; or the first information does not include latency information greater than or equal to a second duration; or in a case where a channel quality is less than a first threshold, and/or an information error rate/a number of information errors is greater than a second threshold, and/or a number of received and/or transmitted Negative Acknowledgements (NACKs) is greater than a third threshold, and/or a transmission duration exceeds a first duration, and/or a first timer expires, the first information includes latency information greater than or equal to a third duration, or the first information does not include latency information less than a third duration, or the first information includes at least one piece of latency information; or data corresponding to latency information greater than or equal to a first duration or a third duration in the first information is not scheduled for transmission, or a transmittable resource corresponding to the data is cancelled; or data corresponding to latency information less than or equal to a second duration in the first information is allocated with a resource for transmission, or a transmittable resource corresponding to the data is not cancelled; or data corresponding to latency information not satisfying a service transmission requirement or a LCH transmission requirement in the first information is not scheduled for transmission, or a transmittable resource corresponding to the data is cancelled; or data corresponding to latency information satisfying a service transmission requirement or a LCH transmission requirement in the first information is allocated with a resource for transmission, or a transmittable resource corresponding to the data is not cancelled.

In some embodiments, the first information includes latency information of a packet, a packet group, data, a PDU Set, a PDU, or a burst having at least one of a specific priority, a specific type, or a specific importance.

In some embodiments, the latency information is related to at least one of: a reference point, an information propagation delay, a time difference between the communication apparatus 800 and a network device, a time difference in uplink and/or downlink, a TA, an uplink delay, or a downlink delay.

In some embodiments, the latency information is generated using a first time as a reference; or the latency information is determined based on a delay generated using a first time as a reference and an information propagation delay; or the latency information is determined based on a delay generated using a first time as a reference, an information propagation delay, and a time difference between the communication apparatus 800 and a network device; or the latency information is determined based on a delay generated using a first time as a reference, an information propagation delay, and a downlink delay; or the latency information is determined based on a delay generated using a first time as a reference and a TA; or the latency information is determined based on a delay generated using a first time as a reference, and at least one of: an information propagation delay, a time difference between the communication apparatus 800 and a network device, an uplink delay, a downlink delay, or a TA.

The first time includes at least one of the following corresponding to a PUSCH: a time unit, a starting time, an ending time, a boundary of the PUSCH, an upper boundary of the PUSCH, a lower boundary of the PUSCH, a boundary of an UL grant, an upper boundary of the UL grant, or a lower boundary of the UL grant.

In some embodiments, the latency information is determined by subtracting the information propagation latency from the delay generated using the first time as the reference; or the latency information is determined by subtracting both the information propagation delay and the time difference between the communication apparatus 800 and the network device from the delay generated using the first time as the reference; or the latency information is determined by subtracting both the information propagation delay and the downlink delay from the delay generated using the first time as the reference; or the latency information is determined by subtracting the TA from the delay generated using the first time as the reference; or the latency information is determined by subtracting, from the delay generated using the first time as the reference, at least one of: the information propagation delay, the time difference between the communication apparatus 800 and the network device, the uplink delay, the downlink delay, or the TA.

In some embodiments, the first duration is determined based on one of the following: either one of or a sum of at least two of an information propagation delay, a network device processing duration, a time difference between the terminal device and a network device, an uplink delay, a downlink delay, or a TA; and/or the third duration is determined based on a sum of: a retransmission duration, and either one of or a sum of at least two of the information propagation delay, the network device processing duration, the time difference between the terminal device and the network device, the uplink delay, the downlink delay, or the TA.

In some embodiments, the communication unit 801 is further configured to: transmit the first information in one of the following cases.

A UCI or a CG-UCI or a DG-UCI or a new UCI or a PUCCH is present.

A BSR and one of a UCI, a CG-UCI, a DG-UCI, a new UCI, or a PUCCH are reported simultaneously.

A BSR and one of a UCI, a CG-UCI, a DG-UCI, a new UCI, or a PUCCH are carried in the same resource.

A BSR and one of a UCI, a CG-UCI, a DG-UCI, a new UCI, or a PUCCH are reported within a time period.

The communication apparatus 800 reports a UCI, or a CG-UCI, or a DG-UCI, or a new UCI, or a PUCCH.

Dynamic indication information or a UCI or a CG-UCI or a DG-UCI or a new UCI or a PUCCH indicates that a CG PUSCH resource is used and/or is not used.

Dynamic indication information or a UCI or a CG-UCI or a DG-UCI or a new UCI or a PUCCH indicates an unused CG PUSCH resource.

Dynamic indication information or a UCI or a CG-UCI or a DG-UCI or a new UCI or a PUCCH is present and indicates that a CG PUSCH resource is used and/or is not used.

Dynamic indication information or a UCI or a CG-UCI or a DG-UCI or a new UCI or a PUCCH indicates that a PUSCH resource is used and/or is not used.

Dynamic indication information or a UCI or a CG-UCI or a DG-UCI or a new UCI or a PUCCH indicates an unused PUSCH resource.

Dynamic indication information or a UCI or a CG-UCI or a DG-UCI or a new UCI or a PUCCH indicates a CG PUSCH resource that is not used, or indicates whether an unused CG PUSCH resource is present, or indicates a used CG PUSCH resource, or indicates at least part of a used CG PUSCH resource, or indicates that at least part of a CG PUSCH resource is used.

In some embodiments, the dynamic indication information or the UCI or the CG-UCI or the DG-UCI or the new UCI or the PUCCH is configured for at least one of: each or single CG, each or single MAC entity, each or single communication apparatus 800, each or single LCH, each or single LCG, each or single service, each or single DG, each or single CG group, or each or single CG pair; or the dynamic indication information or the UCI or the CG-UCI or the DG-UCI or the new UCI or the PUCCH is enabled for at least one of: each or single CG, each or single MAC entity, each or single UE, each or single LCH, each or single LCG, each or single service, each or single DG, each or single CG group, or each or single CG pair.

In some embodiments, at least part of one or more CG resources configured by a network device to the communication apparatus 800 carry the first information; and/or each or single CG resource among the one or more CG resources configured by the network device to the communication apparatus 800 includes one or more CG occasions, at least part of the one or more CG occasions carrying the first information.

In some embodiments, the first information corresponds to LCH(s) other than LCH(s) corresponding to a current PUSCH, and/or the first information includes a short MAC CE or a truncated short MAC CE.

In some embodiments, in a case where LCH(s)/LCG(s) other than LCH(s)/LCG(s) corresponding to a current PUSCH and the LCH/LCG corresponding to the current PUSCH exist, the first information corresponds to the LCH other than the LCH corresponding to the current PUSCH, and/or the first information includs a short MAC CE or a truncated short MAC CE.

In some embodiments, the first information or at least one of the following associated with the first information: a LCH, a LCG, a DRB, a UE, a burst, or a PDU Set corresponds to one of: a non-current CG, a currently unused CG, a currently unused CG group, or a currently unused CG pair; or the first information or at least one of the following associated with the first information: an LCH, an LCG, a DRB, a UE, a burst, or a PDU Set corresponds to a DG.

In some embodiments, different QoS flows correspond to the different PDU Sets or the different bursts, or the same QoS flow corresponds to the different PDU Sets or the different bursts.

In some embodiments, the communication apparatus 800 or an AS of the communication apparatus 800 performs different processing on the different PDU Sets or the different bursts or different QoS flows, based on the QoS flow(s) or based on differences among the PDU Sets or differences among the bursts or differences among the QoS flows.

In some embodiments, the differences among the PDU Sets or the differences among the bursts or the differences among the QoS flows include differences in terms of at least one of: priority, type, or importance.

In some embodiments, the differences among the PDU Sets or the differences among the bursts or the differences among the QoS flows are carried in a data packet, or are obtained by the communication apparatus 800 through interlayer interaction, or are obtained by the communication apparatus 800 through interaction with a network device.

In some embodiments, the communication apparatus 800 or an AS of the communication apparatus 800 performs different processing on the different PDU Sets or the different bursts or the different QoS flows based on fifth indication information as well as the QoS flow(s), or based on fifth indication information as well as the differences among the PDU Sets or the differences among the bursts or the differences among the QoS flows.

The fifth indication information is used for indicating whether to perform different processing on the different PDU Sets or the different bursts or the different QoS flows.

In some embodiments, the fifth indication information is configured by an application layer of the communication apparatus 800, or is configured by a network device to the communication apparatus 800, or is configured by a core network device to the communication apparatus 800, or is configured by a base station device to the communication apparatus 800, or is configured by an application server to the communication apparatus 800, or is determined by the communication apparatus 800.

In some embodiments, the communication apparatus 800 or an AS of the communication apparatus 800 performs first processing on the PDU Set(s) or the burst(s), where the first processing is performed in a unit of the PDU Set or the burst. The first processing includes at least one of: packet loss, retransmission, priority determination or modification, storage, reordering, transmission via different paths, duplication transmission, or repetition transmission.

In some embodiments, the communication apparatus 800 or an AS of the communication apparatus 800 performs the first processing on the PDU Set(s) or the burst(s) based on sixth indication information. The sixth indication information is used for indicating consistent processing of the PDU Set(s) or the burst(s), or indicating whether processing is required for all packets in the PDU Set(s) or all packets in the burst(s), or indicating one or more of the first processing to be used.

In some embodiments, the sixth indication information is configured by an application layer of the communication apparatus 800, or is configured by a network device to the communication apparatus 800, or is configured by an application server to the communication apparatus 800, or is determined by the communication apparatus 800.

In some embodiments, if different pieces of second information for the PDU Set(s) or the burst(s) or the QoS flow(s) and sixth indication information do not coexist, processing is performed based on one of the second information or the sixth indication information.

The sixth indication information is used for indicating consistent processing of the PDU Set(s) or the burst(s), or indicating whether processing is required for all packets in the PDU Set(s) or all packets in the burst(s), or indicating one or more of first processing to be used. The first processing includes at least one of: packet loss, retransmission, priority determination or modification, storage, reordering, transmission via different paths, duplication transmission, or repetition transmission.

In some embodiments, if different pieces of second information for the PDU Set(s) or the burst(s) or the QoS flow(s) and sixth indication information coexist, processing is performed based on a combination of the second information and the sixth indication information, or processing is performed based on one of the second information or the sixth indication information, or processing is firstly performed based on one of the second information or the sixth indication information and then processing is performed based on the other one of the second information or the sixth indication information, or processing is performed based on information with a higher priority among the second information and the sixth indication information, or the PDU Set(s) or the burst(s) having at least one of a specific priority, a specific type, or a specific importance is processed based on the sixth indication information or first processing is performed on the PDU Set(s) or the burst(s) having at least one of a specific priority, a specific type, or a specific importance, or the PDU Set(s) or the burst(s) having at least one of a specific priority, a specific type, or a specific importance is not processed based on the sixth indication information or first processing is not performed on the PDU Set(s) or the burst(s) having at least one of a specific priority, a specific type, or a specific importance.

The sixth indication information is used for indicating consistent processing of the PDU Set(s) or the burst(s), or indicating whether processing is required for all packets in the PDU Set(s) or all packets in the burst(s), or indicating one or more of first processing to be used. The first processing includes at least one of: packet loss, retransmission, priority determination or modification, storage, reordering, transmission via different paths, duplication transmission, or repetition transmission.

In some embodiments, the different PDU Sets or the different bursts or the different QoS flows correspond to different first processing.

The first processing includes at least one of: packet loss, retransmission, priority determination or modification, storage, reordering, transmission via different paths, duplication transmission, or repetition transmission.

In some embodiments, the different PDU Sets or the different bursts or the different QoS flows correspond to different durations of a packet loss timer, or one of the different PDU Sets or one of the different bursts or one of the different QoS flows is configured with a packet loss timer and another of the different PDU Sets or another of different bursts or another of different QoS flows is not configured with a packet loss timer.

In some embodiments, the different PDU Sets or the different bursts or the different QoS flows correspond to different packet loss timers.

FIG. 9 is a structural diagram of another communication apparatus provided in an embodiment of the disclosure. As illustrated in FIG. 9, the communication apparatus 900 includes a communication unit 901 and a processing unit 902.

The communication unit 901 is configured to receive first information;

The processing unit 902 is configured to perform at least one of: data transmission, RRC parameter adjustment, RRC configuration/reconfiguration, resource scheduling, or resource allocation.

In some embodiments, the communication apparatus 900 may be applied to a network device.

In some embodiments, the first information is carried by an RRC message or one or more first MAC CEs.

Alternatively, the first information includes one or more first MAC CEs, or includes an RRC message, or includes one or more SRs.

In some embodiments, the first MAC CE includes a cache status report BSR MAC CE, or a protocol-predefined MAC CE.

In some embodiments, different first MAC CEs correspond to the same LCH or different LCHs; and/or different first MAC CEs correspond to the same LCG or different LCGs; and/or different first MAC CEs correspond to the same DRB or different DRBs; and/or different first MAC CEs correspond to the same burst or different bursts; and/or different first MAC CEs correspond to the same PDU Set or different PDU Sets; and/or different first MAC CEs correspond to the same data volume indication information or different pieces of data volume indication information; and/or different first MAC CEs correspond to the same latency information or different pieces of latency information.

In some embodiments, each or single first MAC CE among the one or more first MAC CEs includes data volume indication information and latency information; or a part of the one or more first MAC CEs includes data volume indication information and latency information, and the other part of the one or more first MAC CEs includes data volume indication information; or a part of the one or more first MAC CEs includes data volume indication information and latency information, and the other part of the one or more first MAC CEs includes latency information; or a part of the one or more first MAC CEs includes data volume indication information, and the other part of the one or more first MAC CEs includes latency information; or each or single first MAC CE among the one or more first MAC CEs includes data volume indication information; or each or single first MAC CE among the one or more first MAC CEs includes latency information.

In some embodiments, the one or more first MAC CEs are generated by a terminal device in a case where triggering of reporting occurs; or the one or more first MAC CEs are generated by a terminal device in a case where triggering of reporting of the first information occurs; or the one or more first MAC CEs are generated by a terminal device in a case where a MAC PDU comprising the one or more first MAC CEs is generated; or the one or more first MAC CEs are generated by a terminal device in a case where a MAC PDU comprising the one or more first MAC CEs corresponding to reporting of the first information is generated; or the one or more first MAC CEs are carried on a PUSCH/UL resource/UL grant; or the one or more first MAC CEs corresponding to the first information are carried on a PUSCH/UL resource/UL grant; or the one or more first MAC CEs corresponding to the first information are triggered in a case where an available PUSCH/UL resource/UL grant is present; or the one or more first MAC CEs corresponding to the first information are generated in a case where an available PUSCH/UL resource/UL grant is present.

In some embodiments, the first information includes the one or more SRs, and the one or more SRs are triggered and transmitted in a case where a terminal device triggers reporting and one of an available PUSCH, an available UL resource, or an available UL grant is absent; and/or the first information includes the one or more first MAC CEs or the RRC message, and the one or more first MAC CEs or the RRC message is transmitted in a case where the terminal device triggers the reporting and one of the available PUSCH, the available UL resource, or the available UL grant is present.

In some embodiments, the first information includes at least one of: at least one piece of data volume indication information, at least one BSR, at least one piece of BS information, or at least one piece of latency information.

In some embodiments, wherein the first information is associated with at least one of: an LCH, an LCG, a DRB, a UE, a burst, or a PDU Set.

In some embodiments, the first MAC CE includes a first index and a first level.

The first index is included in at least one index, each or single index among the at least one index corresponding to at least one level; and the first level is included in the at least one level corresponding to the first index.

A first buffer status value range associated with the each or single index includes: a second buffer status value range associated with each or single level among the at least one level corresponding to the each or single index.

In some embodiments, an interval corresponding to the second buffer status value range associated with the each or single level increases based on an increase in the at least one index, and/or increases based on an increase in the at least one level; or an interval corresponding to the second buffer status value range associated with the each or single level is a first fixed value.

In some embodiments, a number of the at least one level corresponding to the each or single index increases based on an increase in the at least one index; or a number of the at least one level corresponding to the each or single index is a second fixed value.

In some embodiments, the communication unit 901 is further configured to: transmit the first indication information, where the first indication information is used for indicating that a first index mapping is enabled, and the first index mapping includes: the at least one index and/or the each or single index among the at least one index corresponds to the at least one level; and/or the first indication information being used for indicating that a current BSR reporting manner and/or a current index mapping is disabled.

In some embodiments, the processing unit 902 is further configured to: determine whether to use the first index map, where the first index mapping includes: the at least one index and/or the each or single index among the at least one index corresponds to the at least one level.

In some embodiments, the communication unit 901 is further configured to: receive indication information indicating whether to use the first index mapping, where the first index mapping includes: the at least one index and/or the each or single index among the at least one index corresponds to the at least one level.

In some embodiments, the first MAC CE includes a second index, where the second index is included in at least one index.

A third buffer status value range associated with each or single index among the at least one index is determined by adjusting or scaling a fourth buffer status value range associated with the each or single index; or each or single index among the at least one index is associated with a third buffer status value range, the third buffer status value range associated with the each or single index is less than a fourth buffer status value range associated with the each or single index.

The fourth buffer status value range associated with the each or single index is predefined by a protocol.

In some embodiments, an endpoint value of the third buffer status value range associated with the each or single index is determined based on a result of dividing an endpoint value of the fourth buffer status value range associated with the each or single index by a value of the each or single index.

Alternatively, an endpoint value of the third buffer status value range associated with the each or single index is determined by dividing an endpoint value of the fourth buffer status value range associated with the each or single index by a specific value.

In some embodiments, the communication unit 901 is further configured to: transmit second indication information, where the second indication information is used for indicating that a second index mapping is enabled, and the second index mapping includes: the at least one index and/or the each or single index among the at least one index is associated with the third buffer status value range; and/or the second indication information being used for indicating that a current BSR reporting manner and/or a current index mapping is disabled.

In some embodiments, the determining unit 902 is further configured to: determine whether to use the second index mapping, where the second index mapping includes: the at least one index and/or the each or single index among the at least one index is associated with the third buffer status value range.

In some embodiments, the communication unit 901 is further configured to: receive indication information indicating whether to use the second index mapping, where the second index mapping includes: the at least one index and/or the each or single index among the at least one index is associated with the third buffer status value range.

In some embodiments, the first MAC CE includes a third index, where the third index is included in at least one index.

Intervals corresponding to fifth buffer status value ranges associated with different indexes among the at least one index are the same or different.

In some embodiments, the communication unit 901 is further configured to: transmit third indication information, where the third indication information is used for indicating that the third index mapping is enabled, and the third index mapping includes: the at least one index and/or the each or single index among the at least one index is associated with the fifth buffer status value range; and/or the third indication information is used for indicating that a current BSR reporting manner and/or a current index mapping is disabled.

In some embodiments, the determining unit 902 is further configured to: determine whether to use the third index mapping, where the third index mapping includes: the at least one index and/or the each or single index among the at least one index is associated with the fifth buffer status value range.

In some embodiments, the communication unit 901 is further configured to: receive indication information indicating whether to use the third index mapping, where the third index mapping includes: the at least one index and/or the each or single index among the at least one index is associated with the fifth buffer status value range.

In some embodiments, a buffer status value or an endpoint value of a buffer status value range associated with a first one of the at least one index is greater than a first threshold or equal to a second threshold.

In some embodiments, the at least one index is included in a first table, where the first table is determined from at least one table.

In some embodiments, the first table is determined from the at least one table based on third information, where the third information includes at least one of: a LCH, a LCG, whether a PDU Set exists, a type of the PDU Set, a priority of the PDU Set, data volume information of data to be transmitted, data volume indication information, or latency information.

In some embodiments, different tables among the at least one table correspond to different LCHs or LCIDs, or correspond to the same LCH or LCID; and/or different tables among the at least one table correspond to different LCGs or the same LCG; and/or information of whether a PDU Set exists corresponding to different tables among the at least one table is different or the same; and/or different tables among the at least one table correspond to different types of PDU Sets or the same type of PDU Set; and/or different tables among the at least one table correspond to different priorities of PDU Sets or the same priority of PDU Set; and/or different tables among the at least one table correspond to different pieces of data volume information of data to be transmitted or the same data volume information of data to be transmitted; and/or different tables among the at least one table correspond to different pieces of data volume indication information or the same data volume indication information; and/or different tables among the at least one table correspond to different pieces of latency information or the same latency information.

In some embodiments, the communication unit 901 is further configured to: transmit fourth indication information, where the fourth indication information indicates that the following is enabled: at least part of the at least one table, a current BSR reporting manner, a current table; or the fourth indication information indicates that at least one of the following is disabled: at least part of the at least one table, a current BSR reporting manner, or a current table; or the fourth indication information indicates that the following is enabled: table(s) corresponding to at least part of at least one table generation parameter, a current BSR reporting manner, a current table; or the fourth indication information indicates that at least one of the following is disabled: table(s) corresponding to at least part of at least one table generation parameter, a current BSR reporting manner, or a current table.

The first table is included in the enabled at least part of the at least one table or is included in the enabled table(s) corresponding to the at least part of the at least one table generation parameter, or the first table is not included in the disabled at least part of the at least one table or is not included in the disabled table(s) corresponding to the at least part of the at least one table generation parameter.

In some embodiments, the processing unit 902 is further configured to determine whether to use the first table.

In some embodiments, the communication unit 901 is further configured to receive indication information indicating whether to use the first table.

In some embodiments, the at least one index is included in a first table. The communication unit 901 is further configured to: transmit at least one table generation parameter; and/or the processing unit 902 is further configured to: determine the first table based on the at least one table generation parameter.

In some embodiments, the processing unit 902 is further configured to: determine a first table generation parameter from the at least one table generation parameter based on third information, and generate the first table based on the first table generation parameter; or generate at least one table based on the at least one table generation parameter, and determine the first table from the at least one table based on third information.

The third information includes at least one of: a LCH, a LCG, whether a PDU Set exists, a type of the PDU Set, a priority of the PDU Set, data volume information of data to be transmitted, data volume indication information, or latency information.

In some embodiments, the at least one index is included in a first table. The communication unit 901 is further configured to: transmit table indication information, where the table indication information indicates a first table generation parameter or the first table, or indicates a first table generation parameter to be used or the first table to be used.

Alternatively, the first table generation parameter is selected by the communication apparatus 900 from at least one table generation parameter, or the first table is selected by the communication apparatus 900 from at least one table.

Alternatively, a first table generation parameter or the first table, or a first table generation parameter to be used or the first table to be used is predefined by the communication apparatus 900.

The first table generation parameter is used for generating the first table, the first table generation parameter is included in the at least one table generation parameter, and the first table is included in the at least one table.

In some embodiments, a LCID of the first MAC CE and/or at least one bit in the first MAC CE are associated with the first table; and/or the LCID of the first MAC CE and/or the at least one bit in the first MAC CE are associated with a first table generation parameter used for generating the first table.

In some embodiments, the table generation parameter includes at least one of: a starting value of a buffer status value, an ending value of the buffer status value, or a difference between two adjacent buffer status values. The difference is a fixed value, or the difference is determined based on an index corresponding to a preceding buffer status value of the two adjacent buffer status values.

In some embodiments, the first information includes at least one piece of latency information; or the first information includes latency information greater than or equal to a first duration; or the first information includes latency information less than or equal to a second duration; or the first information does not include latency information less than or equal to a first duration; or the first information does not include latency information greater than or equal to a second duration; or in a case where a channel quality is less than a first threshold, and/or an information error rate/a number of information errors is greater than a second threshold, and/or a number of received and/or transmitted Negative Acknowledgements (NACKs) is greater than a third threshold, and/or a transmission duration exceeds a first duration, and/or a first timer expires, the first information includes latency information greater than or equal to a third duration, or the first information does not include latency information less than a third duration, or the first information includes at least one piece of latency information; or data corresponding to latency information greater than or equal to a first duration or a third duration in the first information is not scheduled for transmission, or a transmittable resource corresponding to the data is cancelled; or data corresponding to latency information less than or equal to a second duration in the first information is allocated with a resource for transmission, or a transmittable resource corresponding to the data is not cancelled; or data corresponding to latency information not satisfying a service transmission requirement or a LCH transmission requirement in the first information is not scheduled for transmission, or a transmittable resource corresponding to the data is cancelled; or data corresponding to latency information satisfying a service transmission requirement or a LCH transmission requirement in the first information is allocated with a resource for transmission, or a transmittable resource corresponding to the data is not cancelled.

In some embodiments, the first information includes latency information of a packet, a packet group, data, a PDU Set, a PDU, or a burst having at least one of a specific priority, a specific type, or a specific importance.

In some embodiments, the latency information is related to at least one of: a reference point, an information propagation delay, a time difference between the communication apparatus 900 and a network device, a time difference in uplink and/or downlink, a TA, an uplink delay, or a downlink delay.

In some embodiments, the latency information is generated using a first time as a reference; or the latency information is determined based on a delay generated using a first time as a reference and an information propagation delay; or the latency information is determined based on a delay generated using a first time as a reference, an information propagation delay, and a time difference between the terminal device and the communication apparatus 900; or the latency information is determined based on a delay generated using a first time as a reference, an information propagation delay, and a downlink delay; or the latency information is determined based on a delay generated using a first time as a reference and a TA; or the latency information is determined based on a delay generated using a first time as a reference, and at least one of: an information propagation delay, a time difference between the terminal device and the communication apparatus 900, a downlink delay, or a TA.

The first time includes at least one of the following corresponding to a PUSCH: a time unit, a starting time, an ending time, a boundary of the PUSCH, an upper boundary of the PUSCH, a lower boundary of the PUSCH, a boundary of an UL grant, an upper boundary of the UL grant, or a lower boundary of the UL grant.

In some embodiments, the latency information is determined by subtracting the information propagation latency from the delay generated using the first time as the reference; or the latency information is determined by subtracting both the information propagation delay and the time difference between the terminal device and the communication apparatus 900 from the delay generated using the first time as the reference; or the latency information is determined by subtracting both the information propagation delay and the downlink delay from the delay generated using the first time as the reference; or the latency information is determined by subtracting the TA from the delay generated using the first time as the reference; or the latency information is determined by subtracting, from the delay generated using the first time as the reference, at least one of: the information propagation delay, the time difference between the terminal device and the communication apparatus 900, the downlink delay, or the TA.

In some embodiments, the first duration is determined based on one of the following: either one of or a sum of at least two of an information propagation delay, a communication apparatus 900 processing duration, a time difference between a terminal device and the communication apparatus 900, a downlink delay, or a TA; and/or the third duration is determined based on a sum of: a retransmission duration, and either one of or a sum of at least two of the information propagation delay, the network device processing duration, the time difference between the terminal device and the communication apparatus 900, the downlink delay, or the TA.

In some embodiments, the first information is transmitted by the terminal device in at least one of the following cases.

A UCI or a CG-UCI or a DG-UCI or a new UCI or a PUCCH is present.

A BSR and one of a UCI, a CG-UCI, a DG-UCI, a new UCI, or a PUCCH are reported simultaneously.

A BSR and one of a UCI, a CG-UCI, a DG-UCI, a new UCI, or a PUCCH are carried in the same resource.

A BSR and one of a UCI, a CG-UCI, a DG-UCI, a new UCI, or a PUCCH are reported within a time period.

The terminal device reports a UCI, or a CG-UCI, or a DG-UCI, or a new UCI, or a PUCCH.

Dynamic indication information or a UCI or a CG-UCI or a DG-UCI or a new UCI or a PUCCH indicates that a CG PUSCH resource is used and/or is not used.

Dynamic indication information or a UCI or a CG-UCI or a DG-UCI or a new UCI or a PUCCH indicates an unused CG PUSCH resource.

Dynamic indication information or a UCI or a CG-UCI or a DG-UCI or a new UCI or a PUCCH is present and indicates that a CG PUSCH resource is used and/or is not used.

Dynamic indication information or a UCI or a CG-UCI or a DG-UCI or a new UCI or a PUCCH indicates that a PUSCH resource is used and/or is not used.

Dynamic indication information or a UCI or a CG-UCI or a DG-UCI or a new UCI or a PUCCH indicates an unused PUSCH resource.

Dynamic indication information or a UCI or a CG-UCI or a DG-UCI or a new UCI or a PUCCH indicates a CG PUSCH resource that is not used, or indicates whether an unused CG PUSCH resource is present, or indicates a used CG PUSCH resource, or indicates at least part of a used CG PUSCH resource, or indicates that at least part of a CG PUSCH resource is used.

In some embodiments, the dynamic indication information or the UCI or the CG-UCI or the DG-UCI or the new UCI or the PUCCH is configured for at least one of: each or single CG, each or single MAC entity, each or single terminal device, each or single LCH, each or single LCG, each or single service, each or single DG, each or single CG group, or each or single CG pair; or the dynamic indication information or the UCI or the CG-UCI or the DG-UCI or the new UCI or the PUCCH is enabled for at least one of: each or single CG, each or single MAC entity, each or single UE, each or single LCH, each or single LCG, each or single service, each or single DG, each or single CG group, or each or single CG pair.

In some embodiments, at least part of one or more CG resources configured by the communication apparatus 900 to the terminal device carry the first information; and/or each or single CG resource among the one or more CG resources configured by the communication apparatus 900 to the terminal device includes one or more CG occasions, at least part of the one or more CG occasions carrying the first information.

In some embodiments, the first information corresponds to LCH(s) other than LCH(s) corresponding to a current PUSCH, and/or the first information includes a short MAC CE or a truncated short MAC CE.

In some embodiments, in a case where LCH(s)/LCG(s) other than LCH(s)/LCG(s) corresponding to a current PUSCH and the LCH/LCG corresponding to the current PUSCH exist, the first information corresponds to the LCH other than the LCH corresponding to the current PUSCH, and/or the first information includes a short MAC CE or a truncated short MAC CE.

In some embodiments, the first information or at least one of the following associated with the first information: a LCH, a LCG, a DRB, a UE, a burst, or a PDU Set corresponds to one of: a non-current CG, a currently unused CG, a currently unused CG group, or a currently unused CG pair; or the first information or at least one of the following associated with the first information: an LCH, an LCG, a DRB, a UE, a burst, or a PDU Set corresponds to a DG.

In some embodiments, different QoS flows correspond to the different PDU Sets or the different bursts, or the same QoS flow corresponds to the different PDU Sets or the different bursts.

In some embodiments, the communication apparatus 900 or an AS of the communication apparatus 900 performs different processing on the different PDU Sets or the different bursts or different QoS flows, based on the QoS flow(s) or based on differences among the PDU Sets or differences among the bursts or differences among the QoS flows.

In some embodiments, the differences among the PDU Sets or the differences among the bursts or the differences among the QoS flows include differences in terms of at least one of: priority, type, or importance.

In some embodiments, the differences among the PDU Sets or the differences among the bursts or the differences among the QoS flows are carried in a data packet, or are obtained by the communication apparatus 900 through interlayer interaction, or are obtained by the communication apparatus 900 through interaction with a terminal device.

In some embodiments, the communication apparatus 900 or an AS of the communication apparatus 900 performs different processing on the different PDU Sets or the different bursts or the different QoS flows based on fifth indication information as well as the QoS flow(s), or based on fifth indication information as well as the differences among the PDU Sets or the differences among the bursts or the differences among the QoS flows.

The fifth indication information is used for indicating whether to perform different processing on the different PDU Sets or the different bursts or the different QoS flows.

In some embodiments, the fifth indication information is configured by an application layer of the communication apparatus 900, or is indicated by a terminal device to the communication apparatus 900, or is configured by a core network device to the communication apparatus 900, or is configured by an application server to the communication apparatus 900, or is determined by the communication apparatus 900.

In some embodiments, the communication apparatus 900 or an AS of the communication apparatus 900 performs first processing on the PDU Set(s) or the burst(s), where the first processing is performed in a unit of the PDU Set or the burst. The first processing includes at least one of: packet loss, retransmission, priority determination or modification, storage, reordering, transmission via different paths, duplication transmission, or repetition transmission.

In some embodiments, the communication apparatus 900 or an AS of the communication apparatus 900 performs the first processing on the PDU Set(s) or the burst(s) based on sixth indication information. The sixth indication information is used for indicating consistent processing of the PDU Set(s) or the burst(s), or indicating whether processing is required for all packets in the PDU Set(s) or all packets in the burst(s), or indicating one or more of the first processing to be used.

In some embodiments, wherein the sixth indication information is configured by an application layer of the communication apparatus 900, or is indicated by a terminal device to the communication apparatus 900, or is configured by an application server to the communication apparatus 900, or is determined by the communication apparatus 900.

In some embodiments, if different pieces of second information for the PDU Set(s) or the burst(s) or the QoS flow(s) and sixth indication information do not coexist, processing is performed based on one of the second information or the sixth indication information.

The sixth indication information is used for indicating consistent processing of the PDU Set(s) or the burst(s), or indicating whether processing is required for all packets in the PDU Set(s) or all packets in the burst(s), or indicating one or more of first processing to be used. The first processing includes at least one of: packet loss, retransmission, priority determination or modification, storage, reordering, transmission via different paths, duplication transmission, or repetition transmission.

In some embodiments, if different pieces of second information for the PDU Set(s) or the burst(s) or the QoS flow(s) and sixth indication information coexist, processing is performed based on a combination of the second information and the sixth indication information, or processing is performed based on one of the second information or the sixth indication information, or processing is firstly performed based on one of the second information or the sixth indication information and then processing is performed based on the other one of the second information or the sixth indication information, or processing is performed based on information with a higher priority among the second information and the sixth indication information, or the PDU Set(s) or the burst(s) having at least one of a specific priority, a specific type, or a specific importance is processed based on the sixth indication information or first processing is performed on the PDU Set(s) or the burst(s) having at least one of a specific priority, a specific type, or a specific importance, or the PDU Set(s) or the burst(s) having at least one of a specific priority, a specific type, or a specific importance is not processed based on the sixth indication information or first processing is not performed on the PDU Set(s) or the burst(s) having at least one of a specific priority, a specific type, or a specific importance.

The sixth indication information is used for indicating consistent processing of the PDU Set(s) or the burst(s), or indicating whether processing is required for all packets in the PDU Set(s) or all packets in the burst(s), or indicating one or more of first processing to be used. The first processing includes at least one of: packet loss, retransmission, priority determination or modification, storage, reordering, transmission via different paths, duplication transmission, or repetition transmission.

In some embodiments, the different PDU Sets or the different bursts or the different QoS flows correspond to different first processing.

The first processing includes at least one of: packet loss, retransmission, priority determination or modification, storage, reordering, transmission via different paths, duplication transmission, or repetition transmission.

In some embodiments, the different PDU Sets or the different bursts or the different QoS flows correspond to different durations of a packet loss timer, or one of the different PDU Sets or one of the different bursts or one of the different QoS flows is configured with a packet loss timer and another of the different PDU Sets or another of different bursts or another of different QoS flows is not configured with a packet loss timer.

In some embodiments, the different PDU Sets or the different bursts or the different QoS flows correspond to different packet loss timers.

Those skilled in the art would appreciate that the relevant description of the above communication apparatuses according to the embodiments of the present disclosure may be understood with reference to the relevant description of the communication methods according to the embodiments of the present disclosure.

FIG. 10 is a structural diagram of a communication device provided in an embodiment of the disclosure. The communication device 1000 may include one of: a terminal device or a network device. The communication device 1000 illustrated in FIG. 10 may include a processor 1010 and a memory 1020. The memory 1020 stores a computer program. The processor 1010 is configured to call the computer program stored in the memory 1020 and run the computer program to cause the communication device 1000 to perform the method in any one of the foregoing embodiments. Optionally, the processor 1010 is configured to call the computer program stored in the memory 1020 and run the computer program to cause the terminal device to perform the method in any one of the foregoing embodiments. Optionally, the processor 1010 is configured to call the computer program stored in the memory 1020 and run the computer program to cause the network device to perform the method in any one of the foregoing embodiments.

Optionally, the memory 1020 may be a separate device independent of the processor 1010 or may be integrated in the processor 1010.

In some embodiments, as illustrated in FIG. 10, the communication device 1000 may further include a transceiver 1030, and the processor 1010 may control the transceiver 1030 to communicate with other devices. Specifically, the processor 1010 may control the transceiver 1030 to transmit information or data to other devices, or receive information or data from other devices.

The transceiver 1030 may include a transmitter and a receiver. The transceiver 1030 may further include one or more antennas.

In some embodiments, the communication device 1000 may specifically be the network device in the embodiments of the disclosure, and the communication device 1000 may perform corresponding processes performed by the network device in various methods of the embodiments of the disclosure, which are not elaborated here for the sake of brevity.

In some embodiments, the communication device 1000 may specifically be the terminal device in the embodiments of the disclosure, and the communication device 1000 may perform corresponding processes performed by the terminal device in various methods of the embodiments of the disclosure, which are not elaborated here for the sake of brevity.

An embodiment of the disclosure also provides a computer storage medium having stored thereon one or more programs that, when executed by one or more processors, cause the one or more processors to perform the communication method in any one of the embodiments of the disclosure.

In some embodiments, the computer-readable storage medium may be applied to the terminal device or the network device in the embodiments of the disclosure, and the computer program causes the computer to execute corresponding processes implemented by the terminal device or the network device in various methods of the embodiments of the disclosure, which are not elaborated here for the sake of brevity.

FIG. 11 is a structural diagram of a chip according to an embodiment of the disclosure. The chip 1100 illustrated in FIG. 11 includes a processor 1110, configured to invoke and run a computer program from a memory to perform the method in any one of the embodiments in the disclosure.

In some embodiments, as illustrated in FIG. 11, the chip 1100 may further include a memory 1120, and the processor 1110 may invoke and run a computer program from the memory 1120 to implement the methods in the embodiments of the present disclosure.

The memory 1120 may be a separate device independent of the processor 1110, or may be integrated in the processor 1110.

In some embodiments, the chip 1100 may further include an input interface 1130. The processor 1110 may control the input interface 1130 to communicate with other devices or chips. Specifically, the processor 1110 may control the input interface 1530 to acquire information or data transmitted by other devices or chips.

In some embodiments, the chip 1100 may further include an output interface 1140. The processor 1110 may control the output interface 1140 to communicate with other devices or chips. Specifically, the processor 1110 may control the output interface 1140 to output information or data to other devices or chips.

In some embodiments, the chip may be applied to the network device in the embodiments of the disclosure, and the chip may perform corresponding processes performed by the network device in various methods of the embodiments of the disclosure, which are not elaborated here for the sake of brevity.

In some embodiments, the chip may be applied to the terminal device in the embodiments of the disclosure, and the chip may perform corresponding processes performed by the terminal device in various methods of the embodiments of the disclosure, which are not elaborated here for the sake of brevity.

It should be understood that the chip mentioned in the embodiments of the present disclosure may also be referred to as a system-level chip, a system chip, a chip system, or a system-on-chip chip, or the like.

An embodiment of the disclosure further provides a computer program product including a computer storage medium. The computer storage medium stores a computer program including indications executable by at least one processor that, when executed by the at least one processor, perform the communication method in any one of the embodiments of the disclosure.

In some embodiments, the computer program product may be applied to the terminal device or the network device in the embodiments of the disclosure, and the computer program indications cause the computer to execute corresponding processes performed by the terminal device or the network device in various methods of the embodiments of the present disclosure, which are not elaborated here for the sake of brevity.

Optionally, the computer program product in the embodiment of the disclosure may also be referred to as a software product in other embodiments.

An embodiment of the disclosure further provides a computer program that causes a computer to execute the communication method in any one of the embodiments of the disclosure.

In some embodiments, the computer program may be applied to the terminal device or the network device in the embodiments of the disclosure, and the computer program causes a computer to execute corresponding processes performed by the terminal device or the network device in various methods of the embodiments of the present disclosure when the computer program is run on the computer, which are not elaborated here for the sake of brevity.

The processor, the communication apparatus or the chip in the embodiments of the disclosure may be an integrated circuit chip having signal processing capability. In implementation, the various operations of the above method embodiments may be accomplished by integrated logic circuit of hardware or indications in the form of software in a processor. The processor, the communication apparatus, or the chip described above may include an integration of any one or more of: a general purpose processor, an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a Graphics Processing Unit (GPU), an embedded neural-network processing unit (NPU), a controller, a microcontroller, a microprocessor, a programmable logic device, a discrete gate or transistor logic device, or a discrete hardware component. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and other storage medium mature in the art. The storage medium is located in the memory, and the processor reads information in the memory and completes the operations of the above methods in combination with its hardware.

It is understood that the memory or the computer storage medium in embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory or the computer storage medium described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

Those of ordinary skill in the art would appreciate that the various exemplary units and algorithm operations described in connection with the embodiments in the present disclosure can be implemented in electronic hardware or a combination of computer software and electronic hardware. Whether these functions are performed in hardware or software depends on the specific application and design constraints of the technical solutions. Those of ordinary skill may use a different method for each particular application to implement the described functionality, but such implementation should not be considered outside the scope of the present disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided in the present disclosure, it should be understood that the disclosed systems, devices and methods may be implemented in other ways. For example, the above-described embodiments of the devices are only schematic, for example, the division of the unit is only a logical function division, and in practice, there may be another division method, for example, multiple units or components may be combined or integrated into another system, or some features may be ignored or not performed. Furthermore, the coupling or direct coupling or communication connection between each other illustrated or discussed may be indirect coupling or communication connection through some interfaces, devices or units, and may be electrical, mechanical or other forms.

The units illustrated as separate components may or may not be physically separate, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

In any one of the embodiments of the disclosure, a time interval, a time period, within a time range, within a time duration, or within a time window, or the like may include both the endpoint times, or may include part of the endpoint times (for example, including the left endpoint time but not including the right endpoint time, or including the right endpoint time but not including the left endpoint time), or may not include the endpoint times.

The functions may be stored in a computer readable storage medium if implemented in the form of software functional units and sold or used as stand-alone products. In view of this understanding, the technical solutions of the present disclosure in essence, or the part that contributes to the related technologies, or the part of the technical solutions can be embodied in the form of a software product. The computer software product is stored in a storage medium and includes indications that enables a computer device (which may be a personal computer, server, network device, or the like) to perform all or part of the operations of the methods described in various embodiments of the present disclosure. The aforementioned storage medium includes a USB flash disk, a removable hard disk, a ROM, a RAM, a magnetic disk or an optical disk and other medium capable of storing program codes.

The above-mentioned is only the specific implementation of the present disclosure, but the scope of protection of the present disclosure is not limited thereto. Any variation or substitution readily conceivable by those skilled in the art within the scope of the technology disclosed in the present disclosure shall be covered by the scope of protection of the present disclosure. Therefore, the scope of protection of the present disclosure should be subject to the scope of protection of the claims.

**Claims**

1. A communication method, comprising:
   transmitting, by the terminal device, first information, the first information being used for at least one of: data transmission, Radio Resource Control (RRC) parameter adjustment, RRC reconfiguration, resource scheduling, or resource allocation.

2. The method of claim 1, wherein

   the first information is carried by an RRC message or one or more first Media Access Control Control Elements (MAC CEs); or
   the first information comprises one or more first MAC CEs, or comprises an RRC message, or comprises one or more Scheduling Requests (SRs).

3. The method of claim 2, wherein the first MAC CE comprises a Buffer Status Report (BSR) MAC CE, or a protocol-predefined MAC CE.

4. The method of claim 2 or 3, wherein

   different first MAC CEs correspond to the same Logical Channel (LCH) or different LCHs; and/or
   different first MAC CEs correspond to the same Logical Channel Group (LCG) or different LCGs; and/or
   different first MAC CEs correspond to the same Data Radio Bearer (DRB) or different DRBs; and/or
   different first MAC CEs correspond to the same burst or different bursts; and/or
   different first MAC CEs correspond to the same Protocol Data Unit Set (PDU Set) or different PDU Sets; and/or
   different first MAC CEs correspond to the same data volume indication information or different pieces of data volume indication information; and/or
   different first MAC CEs correspond to the same latency information or different pieces of latency information.

5. The method of any one of claims 2 to 4, wherein

   each or a single first MAC CE among the one or more first MAC CEs comprises data volume indication information and latency information; or
   a part of the one or more first MAC CEs comprise data volume indication information and latency information, and the other part of the one or more first MAC CEs comprise data volume indication information; or
   a part of the one or more first MAC CEs comprise data volume indication information and latency information, and the other part of the one or more first MAC CEs comprise latency information; or
   a part of the one or more first MAC CEs comprise data volume indication information, and the other part of the one or more first MAC CEs comprise latency information; or
   each or a single first MAC CE among the one or more first MAC CEs comprises data volume indication information; or
each or a single first MAC CE among the one or more first MAC CEs comprises latency information.

6. The method of any one of claims 2 to 5, further comprising at least one of:

triggering, by the terminal device, reporting;
triggering, by the terminal device, reporting of the first information;
generating, by the terminal device, the one or more first MAC CEs in a case where triggering of reporting occurs;
generating, by the terminal device, the one or more first MAC CEs in a case where triggering of reporting of the first information occurs;
generating, by the terminal device, the one or more first MAC CEs in a case where a Media Access Control Protocol Data Unit (MAC PDU) comprising the one or more first MAC CEs is generated;
generating, by the terminal device, the one or more first MAC CEs corresponding to reporting of the first information in a case where a MAC PDU comprising the one or more first MAC CEs corresponding to the reporting of the first information is generated;
carrying, by the terminal device, the one or more first MAC CEs on a Physical Uplink Shared Channel (PUSCH)/Uplink (UL) resource/Uplink (UL) grant;
carrying, by the terminal device, the one or more first MAC CEs corresponding to the first information on a PUSCH/UL resource/UL grant;
triggering, by the terminal device, the one or more first MAC CEs corresponding to the first information in a case where an available PUSCH/UL resource/UL grant is present; or
generating, by the terminal device, the one or more first MAC CEs corresponding to the first information in a case where an available PUSCH/UL resource/UL grant is present.

7. The method of any one of claims 2 to 6, wherein transmitting, by the terminal device, the first information comprises:

triggering and transmitting, by the terminal device, the one or more SRs in a case where the terminal device triggers reporting and one of an available Physical Uplink Shared Channel (PUSCH), an available Uplink (UL) resource, or an available UL grant is absent; and/or
transmitting, by the terminal device, the one or more first MAC CEs or transmitting, by the terminal device, the RRC message in a case where the terminal device triggers the reporting and one of the available PUSCH, the available UL resource, or the available UL grant is present.

8. The method of any one of claims 1 to 7, wherein the first information comprises at least one of: at least one piece of data volume indication information, at least one Buffer Status Report (BSR), at least one piece of Buffer Status (BS) information, or at least one piece of latency information.

9. The method of any one of claims 1 to 8, wherein the first information is associated with at least one of: a Logical Channel (LCH), a Logical Channel Group (LCG), a Data Radio Bearer (DRB), User Equipment (UE), a burst, or a Protocol Data Unit Set (PDU Set).

10. The method of any one of claims 2 to 7, wherein the first MAC CE comprises a first index and a first level;

wherein the first index is comprised in at least one index, each or a single index among the at least one index corresponding to at least one level; and the first level is comprised in the at least one level corresponding to the first index; and
a first buffer status value range associated with the each or the single index comprises: a second buffer status value range associated with each or a single level among the at least one level corresponding to the each or the single index.

11. The method of claim 10, wherein an interval corresponding to the second buffer status value range associated with the each or the single level increases based on an increase in the at least one index, and/or increases based on an increase in the at least one level; or
wherein an interval corresponding to the second buffer status value range associated with the each or the single level is a first fixed value.

12. The method of claim 10 or 11, wherein

a number of the at least one level corresponding to the each or the single index increases based on an increase in the at least one index; or

a number of the at least one level corresponding to the each or the single index is a second fixed value.

13. The method of any one of claims 10 to 12, further comprising at least one of:

receiving, by the terminal device, first indication information, the first indication information being used for indicating that a first index mapping is enabled, and/or the first indication information being used for indicating that a current Buffer Status Report (BSR) reporting manner and/or a current index mapping are disabled;

determining, by the terminal device, whether to use the first index mapping; or

transmitting, by the terminal device, indication information indicating whether to use the first index mapping;

wherein the first index mapping comprises: the at least one index and/or the each or the single index among the at least one index correspond to the at least one level.

14. The method of any one of claims 2 to 7, wherein the first MAC CE comprises a second index, the second index being comprised in at least one index;

wherein a third buffer status value range associated with each or a single index among the at least one index is determined by adjusting or scaling a fourth buffer status value range associated with the each or the single index; or each or a single index among the at least one index is associated with a third buffer status value range, the third buffer status value range associated with the each or the single index being less than a fourth buffer status value range associated with the each or the single index; and

wherein the fourth buffer status value range associated with the each or the single index is predefined by a protocol.

15. The method of claim 14, wherein an endpoint value of the third buffer status value range associated with the each or the single index is determined based on a result of dividing an endpoint value of the fourth buffer status value range associated with the each or the single index by a value of the each or the single index; or

an endpoint value of the third buffer status value range associated with the each or the single index is determined by dividing an endpoint value of the fourth buffer status value range associated with the each or the single index by a specific value.

16. The method of claim 14 or 15, further comprising at least one of:

receiving, by the terminal device, second indication information, the second indication information being used for indicating that a second index mapping is enabled, and/or the second indication information being used for indicating that a current Buffer Status Report (BSR) reporting manner and/or a current index mapping are disabled;

determining, by the terminal device, whether to use the second index mapping; or

transmitting, by the terminal device, indication information indicating whether to use the second index mapping;

wherein the second index mapping comprises: the at least one index and/or the each or the single index among the at least one index are associated with the third buffer status value range.

17. The method of any one of claims 2 to 7, wherein the first MAC CE comprises a third index, the third index being comprised in at least one index;

wherein intervals corresponding to fifth buffer status value ranges associated with different indexes among the at least one index are the same or different.

18. The method of claim 17, further comprising at least one of:

receiving, by the terminal device, third indication information, the third indication information being used for indicating that a third index mapping is enabled, and/or the third indication information being used for indicating that a current Buffer Status Report (BSR) reporting manner and/or a current index mapping are disabled;

determining, by the terminal device, whether to use the third index mapping; or

transmitting, by the terminal device, indication information indicating whether to use the third index mapping;

wherein the third index mapping comprises: the at least one index and/or each or a single index among the at least one index are associated with the fifth buffer status value range.

19. The method of any one of claims 10 to 18, wherein a buffer status value or an endpoint value of a buffer status value range associated with a first one of the at least one index is greater than a first threshold or equal to a second threshold.

20. The method of any one of claims 10 to 19, wherein the at least one index is comprised in a first table, the first table being determined from at least one table.

21. The method of claim 20, wherein the first table is determined from the at least one table based on third information, wherein
the third information comprises at least one of: a Logical Channel (LCH), a Logical Channel Group (LCG), whether a Protocol Data Unit Set (PDU Set) exists, a type of the PDU Set, a priority of the PDU Set, data volume information of data to be transmitted, data volume indication information, or latency information.

22. The method of claim 20 or 21, wherein different tables among the at least one table correspond to different Logical Channels (LCHs) or Logical Channel Identities (LCIDs), or correspond to the same LCH or LCID; and/or

different tables among the at least one table correspond to different Logical Channel Groups (LCGs) or the same LCG; and/or
information of whether a Protocol Data Unit Set (PDU Set) exists corresponding to different tables among the at least one table is different or the same; and/or
different tables among the at least one table correspond to different types of PDU Sets or the same type of PDU Set; and/or
different tables among the at least one table correspond to different priorities of PDU Sets or the same priority of PDU Set; and/or
different tables among the at least one table correspond to different pieces of data volume information of data to be transmitted or the same data volume information of data to be transmitted; and/or
different tables among the at least one table correspond to different pieces of data volume indication information or the same data volume indication information; and/or
different tables among the at least one table correspond to different pieces of latency information or the same latency information.

23. The method of any one of claims 20 to 22, further comprising at least one of:

receiving, by the terminal device, fourth indication information;
determining, by the terminal device, whether to use the first table; or
transmitting, by the terminal device, indication information indicating whether to use the first table;
wherein the fourth indication information indicates that the following is enabled: at least part of the at least one table, a current Buffer Status Report (BSR) reporting manner, a current table; or the fourth indication information indicates that at least one of the following is disabled: at least part of the at least one table, a current BSR reporting manner, or a current table; or the fourth indication information indicates that the following is enabled: table(s) corresponding to at least part of at least one table generation parameter, a current BSR reporting manner, a current table; or the fourth indication information indicates that at least one of the following is disabled: table(s) corresponding to at least part of at least one table generation parameter, a current BSR reporting manner, or a current table; and
the first table is comprised in the enabled at least part of the at least one table or is comprised in the enabled table(s) corresponding to the at least part of the at least one table generation parameter, or the first table is not comprised in the disabled at least part of the at least one table or is not comprised in the disabled table(s) corresponding to the at least part of the at least one table generation parameter.

24. The method of any one of claims 10 to 23, wherein the at least one index is comprised in a first table, and wherein the method further comprises:

receiving, by the terminal device, at least one table generation parameter, or determining, by the terminal device, at least one table generation parameter based on a pre-configuration; and
determining, by the terminal device, the first table based on the at least one table generation parameter.

25. The method of claim 24, wherein determining, by the terminal device, the first table based on the at least one table generation parameter comprises:

determining, by the terminal device, a first table generation parameter from the at least one table generation parameter based on third information; and generating, by the terminal device, the first table based on the first table generation parameter, or

generating, by the terminal device, at least one table based on the at least one table generation parameter; and determining, by the terminal device, the first table from the at least one table based on third information;

wherein the third information comprises at least one of: a Logical Channel (LCH), a Logical Channel Group (LCG), whether a Protocol Data Unit Set (PDU Set) exists, a type of the PDU Set, a priority of the PDU Set, data volume information of data to be transmitted, data volume indication information, or latency information.

26. The method of any one of claims 10 to 25, wherein the at least one index is comprised in a first table, and wherein the method further comprises:

, by the terminal device, table indication information, the table indication information indicating a first table generation parameter or the first table, or indicating a first table generation parameter to be used or the first table to be used; or

selecting, by the terminal device, a first table generation parameter from at least one table generation parameter, or selecting, by the terminal device, the first table from at least one table; or

predefining, by the terminal device, a first table generation parameter or the first table, or a first table generation parameter to be used or the first table to be used;

wherein the first table generation parameter is used for generating the first table, the first table generation parameter is comprised in the at least one table generation parameter, and the first table is comprised in the at least one table.

27. The method of any one of claims 20 to 26, wherein a Logical Channel Identify (LCID) of the first MAC CE and/or at least one bit in the first MAC CE are associated with the first table; and/or

the LCID of the first MAC CE and/or the at least one bit in the first MAC CE are associated with a first table generation parameter used for generating the first table.

28. The method of any one of claims 23 to 27, wherein the table generation parameter comprises at least one of: a starting value of a buffer status value, an ending value of the buffer status value, or a difference between two adjacent buffer status values;

wherein the difference is a fixed value, or the difference is determined based on an index corresponding to a preceding buffer status value of the two adjacent buffer status values.

29. The method of any one of claims 1 to 28, wherein the first information comprises at least one piece of latency information; or

the first information comprises latency information greater than or equal to a first duration; or

the first information comprises latency information less than or equal to a second duration; or

the first information does not comprise latency information less than or equal to a first duration; or

the first information does not comprise latency information greater than or equal to a second duration; or

a channel quality is less than a first threshold, and/or an information error rate/a number of information errors is greater than a second threshold, and/or a number of received and/or transmitted Negative Acknowledgements (NACKs) is greater than a third threshold, and/or a transmission duration exceeds a first duration, and/or a first timer expires, the first information comprises latency information greater than or equal to a third duration, or the first information does not comprise latency information less than a third duration, or the first information comprises at least one piece of latency information; or

data corresponding to latency information greater than or equal to a first duration or a third duration in the first information is not scheduled for transmission, or a transmittable resource corresponding to the data is cancelled; or

data corresponding to latency information less than or equal to a second duration in the first information is allocated with a resource for transmission, or a transmittable resource corresponding to the data is not cancelled; or

data corresponding to latency information not satisfying a service transmission requirement or a Logical Channel (LCH) transmission requirement in the first information is not scheduled for transmission, or a transmittable resource corresponding to the data is cancelled; or

data corresponding to latency information satisfying a service transmission requirement or an LCH transmission requirement in the first information is allocated with a resource for transmission, or a transmittable resource corresponding to the data is not cancelled.

30. The method of claim 29, wherein the first information comprises latency information of a packet, a packet group, data, a Protocol Data Unit Set (PDU Set), a PDU, or a burst having at least one of a specific priority, a specific type, or a specific importance.

31. The method of claim 29 or 30, wherein the latency information is related to at least one of: a reference point, an information propagation delay, a time difference between the terminal device and a network device, a time difference in uplink and/or downlink, a Timing Advance (TA), an uplink delay, or a downlink delay.

32. The method of any one of claims 29 to 31, wherein the latency information is generated using a first time as a reference; or

the latency information is determined based on a delay generated using a first time as a reference and an information propagation delay; or
the latency information is determined based on a delay generated using a first time as a reference, an information propagation delay, and a time difference between the terminal device and a network device; or
the latency information is determined based on a delay generated using a first time as a reference, an information propagation delay, and a downlink delay; or
the latency information is determined based on a delay generated using a first time as a reference and a Timing Advance (TA); or
the latency information is determined based on a delay generated using a first time as a reference, and at least one of: an information propagation delay, a time difference between the terminal device and a network device, an uplink delay, a downlink delay, or a Timing Advance (TA);
wherein the first time comprises at least one of the following corresponding to a Physical Uplink Shared Channel (PUSCH): a time unit, a starting time, an ending time, a boundary of the PUSCH, an upper boundary of the PUSCH, a lower boundary of the PUSCH, a boundary of an Uplink (UL) grant, an upper boundary of the UL grant, or a lower boundary of the UL grant.

33. The method of claim 32, wherein

the latency information is determined by subtracting the information propagation latency from the delay generated using the first time as the reference; or
the latency information is determined by subtracting both the information propagation delay and the time difference between the terminal device and the network device from the delay generated using the first time as the reference; or
the latency information is determined by subtracting both the information propagation delay and the downlink delay from the delay generated using the first time as the reference; or
the latency information is determined by subtracting the TA from the delay generated using the first time as the reference; or
the latency information is determined by subtracting, from the delay generated using the first time as the reference, at least one of: the information propagation delay, the time difference between the terminal device and the network device, the uplink delay, the downlink delay, or the TA.

34. The method of any one of claims 29 to 33, wherein

the first duration is determined based on one of the following: either one of or a sum of at least two of an information propagation delay, a network device processing duration, a time difference between the terminal device and a network device, an uplink delay, a downlink delay, or a Timing Advance (TA); and/or
the third duration is determined based on a sum of: a retransmission duration, and either one of or a sum of at least two of the information propagation delay, the network device processing duration, the time difference between the terminal device and the network device, the uplink delay, the downlink delay, or the TA.

35. The method of any one of claims 1 to 34, wherein transmitting, by the terminal device, the first information comprises: transmitting, by the terminal device, the first information in one of the following cases:

Uplink Control Information (UCI) or a Configured Grant UCI (CG-UCI) or a Dynamic Grant UCI (DG-UCI) or a new UCI or a Physical Uplink Control Channel (PUCCH) is present;

a Buffer Status Report (BSR) and one of a UCI, a CG-UCI, a DG-UCI, a new UCI, or a PUCCH are reported simultaneously;

a BSR and one of a UCI, a CG-UCI, a DG-UCI, a new UCI, or a PUCCH are carried in the same resource;

a BSR and one of a UCI, a CG-UCI, a DG-UCI, a new UCI, or a PUCCH are reported within a time period;

the terminal device reports a UCI, or a CG-UCI, or a DG-UCI, or a new UCI, or a PUCCH;

dynamic indication information or a UCI or a CG-UCI or a DG-UCI or a new UCI or a PUCCH indicates that a CG Physical Uplink Shared Channel (PUSCH) resource is used and/or is not used;

dynamic indication information or a UCI or a CG-UCI or a DG-UCI or a new UCI or a PUCCH indicates an unused CG PUSCH resource;

dynamic indication information or a UCI or a CG-UCI or a DG-UCI or a new UCI or a PUCCH is present and indicates that a CG PUSCH resource is used and/or is not used;

dynamic indication information or a UCI or a CG-UCI or a DG-UCI or a new UCI or a PUCCH indicates that a PUSCH resource is used and/or is not used;

dynamic indication information or a UCI or a CG-UCI or a DG-UCI or a new UCI or a PUCCH indicates an unused PUSCH resource; or

dynamic indication information or a UCI or a CG-UCI or a DG-UCI or a new UCI or a PUCCH indicates a CG PUSCH resource that is not used, or indicates whether an unused CG PUSCH resource is present, or indicates a used CG PUSCH resource, or indicates at least part of a used CG PUSCH resource, or indicates that at least part of a CG PUSCH resource is used.

36. The method of claim 35, wherein the dynamic indication information or the UCI or the CG-UCI or the DG-UCI or the new UCI or the PUCCH is configured for at least one of: each or a single CG, each or a single Media Access Control (MAC) entity, each or a single terminal device, each or a single Logical Channel (LCH), each or a single Logical Channel Group (LCG), each or a single service, each or a single DG, each or a single CG group, or each or a single CG pair; or

the UCI or the CG-UCI or the DG-UCI or the new UCI or the PUCCH is enabled for at least one of: each or a single CG, each or a single MAC entity, each or a single UE, each or a single LCH, each or a single LCG, each or a single service, each or a single DG, each or a single CG group, or each or a single CG pair.

37. The method of any one of claims 1 to 36, wherein at least part of one or more Configured Grant (CG) resources configured by a network device to the terminal device carry the first information; and/or

each or a single CG resource among the one or more CG resources configured by the network device to the terminal device comprises one or more CG occasions, at least part of the one or more CG occasions carrying the first information.

38. The method of any one of claims 1 to 37, wherein the first information corresponds to a Logical Channel (LCH) other than an LCH corresponding to a current Physical Uplink Shared Channel (PUSCH), and/or the first information comprises a short Media Access Control Control Element (MAC CE) or a truncated short MAC CE.

39. The method of any one of claims 1 to 38, in a case where a Logical Channel (LCH)/Logical Channel Group (LCG) other than an LCH/LCG corresponding to a current Physical Uplink Shared Channel (PUSCH) and the LCH/LCG corresponding to the current PUSCH exist, the first information corresponds to the LCH other than the LCH corresponding to the current PUSCH, and/or the first information comprises a short Media Access Control Control Element (MAC CE) or a truncated short MAC CE.

40. The method of any one of claims 1 to 39, wherein the first information or at least one of the following associated with the first information: a Logical Channel (LCH), a Logical Channel Group (LCG), a Data Radio Bearer (DRB), User Equipment (UE), a burst, or a Protocol Data Unit Set (PDU Set) corresponds to one of: a non-current Configured Grant (CG), a currently unused CG, a currently unused CG group, or a currently unused CG pair; or

the first information or at least one of the following associated with the first information: an LCH, an LCG, a DRB, a UE, a burst, or a PDU Set corresponds to a Dynamic Grant (DG).

41. The method of any one of claims 4, 9, 30, or 40, wherein different Quality of Service (QoS) flows correspond to the different PDU Sets or the different bursts, or the same QoS flow corresponds to the different PDU Sets or the different bursts.

42. The method of any one of claims 4, 9, 30, 40, or 41, wherein the terminal device or an Access Stratum (AS) of the terminal device performs different processing on the different PDU Sets or the different bursts or different Quality of Service (QoS) flows, based on the QoS flow(s) or based on differences among the PDU Sets or differences among the bursts or differences among the QoS flows.

43. The method of claim 42, wherein the differences among the PDU Sets or the differences among the bursts or the differences among the QoS flows comprise differences in terms of at least one of: priority, type, or importance.

44. The method of claim 42 or 43, wherein the differences among the PDU Sets or the differences among the bursts or the differences among the QoS flows are carried in a data packet, or are obtained by the terminal device through interlayer interaction, or are obtained by the terminal device through interaction with a network device.

45. The method of any one of claims 42 to 44, wherein the terminal device or the AS of the terminal device performs different processing on the different PDU Sets or the different bursts or the different QoS flows based on fifth indication information as well as the QoS flow(s), or based on fifth indication information as well as the differences among the PDU Sets or the differences among the bursts or the differences among the QoS flows; wherein the fifth indication information is used for indicating whether to perform different processing on the different PDU Sets or the different bursts or the different QoS flows.

46. The method of claim 45, wherein the fifth indication information is configured by an application layer of the terminal device, or is configured by a network device to the terminal device, or is configured by a core network device to the terminal device, or is configured by a base station device to the terminal device, or is configured by an application server to the terminal device, or is determined by the terminal device.

47. The method of any one of claims 4, 9, 30, and 40 to 46, wherein the terminal device or an Access Stratum (AS) of the terminal device performs first processing on the PDU Set(s) or the burst(s), the first processing being performed in a unit of the PDU Set or the burst; wherein
the first processing comprises at least one of: packet loss, retransmission, priority determination or modification, storage, reordering, transmission via different paths, duplication transmission, or repetition transmission.

48. The method of claim 47, wherein the terminal device or the AS of the terminal device performs the first processing on the PDU Set(s) or the burst(s) based on sixth indication information;
wherein the sixth indication information is used for indicating consistent processing of the PDU Set(s) or the burst(s), or indicating whether processing is required for all packets in the PDU Set(s) or all packets in the burst(s), or indicating one or more of the first processing to be used.

49. The method of claim 48, wherein the sixth indication information is configured by an application layer of the terminal device, or is configured by a network device to the terminal device, or is configured by a core network device to the terminal device, or is configured by a base station device to the terminal device, or is configured by an application server to the terminal device, or is determined by the terminal device.

50. The method of any one of claims 41 to 49, wherein if different pieces of second information for the PDU Set(s) or the burst(s) or the QoS flow(s) and sixth indication information do not coexist, processing is performed based on one of the second information or the sixth indication information; wherein

the sixth indication information is used for indicating consistent processing of the PDU Set(s) or the burst(s), or indicating whether processing is required for all packets in the PDU Set(s) or all packets in the burst(s), or indicating one or more of first processing to be used; and
the first processing comprises at least one of: packet loss, retransmission, priority determination or modification, storage, reordering, transmission via different paths, duplication transmission, or repetition transmission.

51. The method of any one of claims 41 to 50, wherein if different pieces of second information for the PDU Set(s) or the burst(s) or the QoS flow(s) and sixth indication information coexist,

a processing is performed based on a combination of the second information and the sixth indication information, or
a processing is performed based on one of the second information or the sixth indication information, or
a processing is firstly performed based on one of the second information or the sixth indication information and then processing is performed based on the other one of the second information or the sixth indication information, or

a processing is performed based on information with a higher priority among the second information and the sixth indication information, or

the PDU Set(s) or the burst(s) having at least one of a specific priority, a specific type, or a specific importance is processed based on the sixth indication information or first processing is performed on the PDU Set(s) or the burst(s) having at least one of a specific priority, a specific type, or a specific importance, or

the PDU Set(s) or the burst(s) having at least one of a specific priority, a specific type, or a specific importance is not processed based on the sixth indication information or first processing is not performed on the PDU Set(s) or the burst(s) having at least one of a specific priority, a specific type, or a specific importance; wherein

the sixth indication information is used for indicating consistent processing of the PDU Set(s) or the burst(s), or indicating whether processing is required for all packets in the PDU Set(s) or all packets in the burst(s), or indicating one or more of first processing to be used; and

the first processing comprises at least one of: packet loss, retransmission, priority determination or modification, storage, reordering, transmission via different paths, duplication transmission, or repetition transmission.

52. The method of any one of claims 41 to 51, wherein the different PDU Sets or the different bursts or the different QoS flows correspond to different first processing; the first processing comprising at least one of: packet loss, retransmission, priority determination or modification, storage, reordering, transmission via different paths, duplication transmission, or repetition transmission.

53. The method of any one of claims 41 to 52, wherein the different PDU Sets or the different bursts or the different QoS flows correspond to different durations of a packet loss timer, or one of the different PDU Sets or one of the different bursts or one of the different QoS flows is configured with a packet loss timer and another of the different PDU Sets or another of different bursts or another of different QoS flows is not configured with a packet loss timer; or

the different PDU Sets or the different bursts or the different QoS flows correspond to different packet loss timers.

54. A communication method, comprising:

receiving, by a network device, first information; and

performing, by the network device, based on the first information, at least one of: data transmission, Radio Resource Control (RRC) parameter adjustment, RRC configuration/reconfiguration, resource scheduling, or resource allocation.

55. The method of claim 54, wherein

the first information is carried by an RRC message or one or more first Media Access Control Control Elements (MAC CEs); or

the first information comprises one or more first MAC CEs, or comprises an RRC message, or comprises one or more Scheduling Requests (SRs).

56. The method of claim 55, wherein the first MAC CE comprises a Buffer Status Report (BSR) MAC CE, or a protocol-predefined MAC CE.

57. The method of claim 55 or 56, wherein

different first MAC CEs correspond to the same Logical Channel (LCH) or different LCHs; and/or

different first MAC CEs correspond to the same Logical Channel Group (LCG) or different LCGs; and/or

different first MAC CEs correspond to the same Data Radio Bearer (DRB) or different DRBs; and/or

different first MAC CEs correspond to the same burst or different bursts; and/or

different first MAC CEs correspond to the same Protocol Data Unit Set (PDU Set) or different PDU Sets; and/or

different first MAC CEs correspond to the same data volume indication information or different pieces of data volume indication information; and/or

different first MAC CEs correspond to the same latency information or different pieces of latency information.

58. The method of any one of claims 55 to 57, wherein

each or a single first MAC CE among the one or more first MAC CEs comprises data volume indication information and latency information; or

a part of the one or more first MAC CEs comprise data volume indication information and latency information, and the other part of the one or more first MAC CEs comprise data volume indication information; or

a part of the one or more first MAC CEs comprise data volume indication information and latency information, and the other part of the one or more first MAC CEs comprise latency information; or

a part of the one or more first MAC CEs comprise data volume indication information, and the other part of the one or more first MAC CEs comprise latency information; or

each or a single first MAC CE among the one or more first MAC CEs comprises data volume indication information; or

each or a single first MAC CE among the one or more first MAC CEs comprises latency information.

59. The method of any one of claims 55 to 58, wherein

the one or more first MAC CEs are generated by a terminal device in a case where triggering of reporting occurs; or

the one or more first MAC CEs are generated by a terminal device in a case where triggering of reporting of the first information occurs; or

the one or more first MAC CEs are generated by a terminal device in a case where a Media Access Control Protocol Data Unit (MAC PDU) comprising the one or more first MAC CEs is generated; or

the one or more first MAC CEs are generated by a terminal device in a case where a MAC PDU comprising the one or more first MAC CEs corresponding to reporting of the first information is generated; or

the one or more first MAC CEs are carried on a Physical Uplink Shared Channel (PUSCH)/Uplink (UL) resource/UL grant; or

the one or more first MAC CEs corresponding to the first information are carried on a PUSCH/UL resource/UL grant; or

the one or more first MAC CEs corresponding to the first information are triggered in a case where an available PUSCH/UL resource/UL grant is present; or

the one or more first MAC CEs corresponding to the first information are generated in a case where an available PUSCH/UL resource/UL grant is present.

60. The method of any one of claims 55 to 59, wherein

the first information comprises the one or more SRs, and the one or more SRs are triggered and transmitted in a case where a terminal device triggers reporting and one of an available Physical Uplink Shared Channel (PUSCH), an available uplink (UL) resource, or an available UL grant is absent; and/or

the first information comprises the one or more first MAC CEs or the RRC message, and the one or more first MAC CEs or the RRC message is transmitted in a case where the terminal device triggers the reporting and one of the available PUSCH, the available UL resource, or the available UL grant is present.

61. The method of any one of claims 54 to 60, wherein the first information comprises at least one of: at least one piece of data volume indication information, at least one Buffer Status Report (BSR), at least one piece of Buffer Status (BS) information, or at least one piece of latency information.

62. The method of any one of claims 54 to 61, wherein the first information is associated with at least one of: a Logical Channel (LCH), a Logical Channel Group (LCG), a Data Radio Bearer (DRB), User Equipment (UE), a burst, or a Protocol Data Unit Set (PDU Set).

63. The method of any one of claims 55 to 60, wherein the first MAC CE comprises a first index and a first level;

wherein the first index is comprised in at least one index, each or a single index among the at least one index corresponding to at least one level; and the first level is comprised in the at least one level corresponding to the first index; and

a first buffer status value range associated with the each or the single index comprises: a second buffer status value range associated with each or a single level among the at least one level corresponding to the each or the single index.

64. The method of claim 63, wherein

an interval corresponding to the second buffer status value range associated with the each or the single level increases based on an increase in the at least one index, and/or increases based on an increase in the at least one level; or

an interval corresponding to the second buffer status value range associated with the each or the single level is a first fixed value.

65. The method of claim 63 or 64,

a number of the at least one level corresponding to the each or the single index increases based on an increase in the at least one index; or
a number of the at least one level corresponding to the each or the single index is a second fixed value.

66. The method of any one of claims 63 to 65, further comprising at least one of:

transmitting, by the network device, first indication information, the first indication information being used for indicating that a first index mapping is enabled, and/or the first indication information being used for indicating that a current Buffer Status Report (BSR) reporting manner and/or a current index mapping are disabled;
determining, by the network device, whether to use the first index mapping; or
receiving, by the network device, indication information indicating whether to use the first index mapping;
wherein the first index mapping comprises: the at least one index and/or the each or the single index among the at least one index correspond to the at least one level.

67. The method of any one of claims 55 to 60, wherein the first MAC CE comprises a second index, the second index being comprised in at least one index;

wherein a third buffer status value range associated with each or a single index among the at least one index is determined by adjusting or scaling a fourth buffer status value range associated with the each or the single index; or each or a single index among the at least one index is associated with a third buffer status value range, the third buffer status value range associated with the each or the single index being less than a fourth buffer status value range associated with the each or the single index; and
wherein the fourth buffer status value range associated with the each or the single index is predefined by a protocol.

68. The method of claim 67, wherein an endpoint value of the third buffer status value range associated with the each or the single index is determined based on a result of dividing an endpoint value of the fourth buffer status value range associated with the each or the single index by a value of the each or the single index; or
an endpoint value of the third buffer status value range associated with the each or the single index is determined by dividing an endpoint value of the fourth buffer status value range associated with the each or the single index by a specific value.

69. The method of claim 67 or 68, further comprising at least one of:

transmitting, by the network device, second indication information, the second indication information being used for indicating that a second index mapping is enabled, and/or the second indication information being used for indicating that a current Buffer Status Report (BSR) reporting manner and/or a current index mapping are disabled;
determining, by the network device, whether to use the second index mapping; or
receiving, by the network device, indication information indicating whether to use the second index mapping;
wherein the second index mapping comprises: the at least one index and/or the each or the single index among the at least one index are associated with the third buffer status value range.

70. The method of any one of claims 55 to 60, wherein the first MAC CE comprises a third index, the third index being comprised in at least one index;
wherein intervals corresponding to fifth buffer status value ranges associated with different indexes among the at least one index are the same or different.

71. The method of claim 70, further comprising at least one of:

transmitting, by the network device, third indication information, the third indication information being used for indicating that a third index mapping is enabled, and/or the third indication information being used for indicating that a current Buffer Status Report (BSR) reporting manner and/or a current index mapping are disabled;

determining, by the network device, whether to use the third index mapping; or

receiving, by the network device, indication information indicating whether to use the third index mapping;

wherein the third index mapping comprises: the at least one index and/or each or a single index among the at least one index are associated with the fifth buffer status value range.

72. The method of any one of claims 63 to 71, wherein a buffer status value or an endpoint value of a buffer status value range associated with a first one of the at least one index is greater than a first threshold or equal to a second threshold.

73. The method of any one of claims 63 to 72, wherein the at least one index is comprised in a first table, the first table being determined from at least one table.

74. The method of claim 73, wherein the first table is determined from the at least one table based on third information, wherein

the third information comprises at least one of: a Logical Channel (LCH), a Logical Channel Group (LCG), whether a Protocol Data Unit Set (PDU Set) exists, a type of the PDU Set, a priority of the PDU Set, data volume information of data to be transmitted, data volume indication information, or latency information.

75. The method of claim 73 or 74, wherein different tables among the at least one table correspond to different Logical Channels (LCHs) or Logical Channel Identities (LCIDs), or correspond to the same LCH or LCID; and/or

different tables among the at least one table correspond to different Logical Channel Groups (LCGs) or the same LCG; and/or

information of whether a Protocol Data Unit Set (PDU Set) exists corresponding to different tables among the at least one table is different or the same; and/or

different tables among the at least one table correspond to different types of PDU Sets or the same type of PDU Set; and/or

different tables among the at least one table correspond to different priorities of PDU Sets or the same priority of PDU Set; and/or

different tables among the at least one table correspond to different pieces of data volume information of data to be transmitted or the same data volume information of data to be transmitted; and/or

different tables among the at least one table correspond to different pieces of data volume indication information or the same data volume indication information; and/or

different tables among the at least one table correspond to different pieces of latency information or the same latency information.

76. The method of any one of claims 73 to 75, further comprising at least one of:

transmitting, by the network device, fourth indication information;

determining, by the network device, whether to use the first table; or

receiving, by the network device, indication information indicating whether to use the first table;

wherein the fourth indication information indicates that the following is enabled: at least part of the at least one table, a current Buffer Status Report (BSR) reporting manner, a current table; or the fourth indication information indicates that at least one of the following is disabled: at least part of the at least one table, a current BSR reporting manner, or a current table; or the fourth indication information indicates that the following is enabled: table(s) corresponding to at least part of at least one table generation parameter, a current BSR reporting manner, a current table; or the fourth indication information indicates that at least one of the following is disabled: table(s) corresponding to at least part of at least one table generation parameter, a current BSR reporting manner, or a current table; and

wherein the first table is comprised in the enabled at least part of the at least one table or is comprised in the enabled table(s) corresponding to the at least part of the at least one table generation parameter, or the first table is not comprised in the disabled at least part of the at least one table or is not comprised in the disabled table(s) corresponding to the at least part of the at least one table generation parameter.

77. The method of any one of claims 63 to 76, wherein the at least one index is comprised in a first table, and wherein the method further comprises:

transmitting, by the network device, at least one table generation parameter; and/or

determining, by the network device, the first table based on the at least one table generation parameter.

**78.** The method of claim 77, wherein determining, by the network device, the first table based on the at least one table generation parameter comprises:

> determining, by the network device, a first table generation parameter from the at least one table generation parameter based on third information; and generating, by the network device, the first table based on the first table generation parameter, or
> generating, by the network device, at least one table based on the at least one table generation parameter; and determining, by the network device, the first table from the at least one table based on third information;
> wherein the third information comprises at least one of: a Logical Channel (LCH), a Logical Channel Group (LCG), whether a Protocol Data Unit Set (PDU Set) exists, a type of the PDU Set, a priority of the PDU Set, data volume information of data to be transmitted, data volume indication information, or latency information.

**79.** The method of any one of claims 63 to 78, wherein the at least one index is comprised in a first table, and wherein the method further comprises:

> transmitting, by the network device, table indication information, the table indication information indicating a first table generation parameter or the first table, or indicating a first table generation parameter to be used or the first table to be used; or
> selecting, by the network device, a first table generation parameter from at least one table generation parameter, or selecting, by the network device, the first table from at least one table; or
> predefining, by the network device, a first table generation parameter or the first table, or a first table generation parameter to be used or the first table to be used;
> wherein the first table generation parameter is used for generating the first table, the first table generation parameter is comprised in the at least one table generation parameter, and the first table is comprised in the at least one table.

**80.** The method of any one of claims 73 to 79, wherein a Logical Channel Identify (LCID) of the first MAC CE and/or at least one bit in the first MAC CE are associated with the first table; and/or
the LCID of the first MAC CE and/or the at least one bit in the first MAC CE are associated with a first table generation parameter used for generating the first table.

**81.** The method of any one of claims 76 to 80, wherein the table generation parameter comprises at least one of: a starting value of a buffer status value, an ending value of the buffer status value, or a difference between two adjacent buffer status values;
wherein the difference is a fixed value, or the difference is determined based on an index corresponding to a preceding buffer status value of the two adjacent buffer status values.

**82.** The method of any one of claims 54 to 81, wherein the first information comprises at least one piece of latency information; or

> the first information comprises latency information greater than or equal to a first duration; or
> the first information comprises latency information less than or equal to a second duration; or
> the first information does not comprise latency information less than or equal to a first duration; or
> the first information does not comprise latency information greater than or equal to a second duration; or
> in a case where a channel quality is less than a first threshold, and/or an information error rate/a number of information errors is greater than a second threshold, and/or a number of received and/or transmitted Negative Acknowledgements (NACKs) is greater than a third threshold, and/or a transmission duration exceeds a first duration, and/or a first timer expires, the first information comprises latency information greater than or equal to a third duration, or the first information does not comprise latency information less than a third duration, or the first information comprises at least one piece of latency information; or
> data corresponding to latency information greater than or equal to a first duration or a third duration in the first information is not scheduled for transmission, or a transmittable resource corresponding to the data is cancelled; or
> data corresponding to latency information less than or equal to a second duration in the first information is allocated with a resource for transmission, or a transmittable resource corresponding to the data is not cancelled; or
> data corresponding to latency information not satisfying a service transmission requirement or a Logical Channel (LCH) transmission requirement in the first information is not scheduled for transmission, or a transmittable resource corresponding to the data is cancelled; or

data corresponding to latency information satisfying a service transmission requirement or an LCH transmission requirement in the first information is allocated with a resource for transmission, or a transmittable resource corresponding to the data is not cancelled.

83. The method of claim 82, wherein the first information comprises latency information of a packet, a packet group, data, a Protocol Data Unit Set (PDU Set), a PDU, or a burst having at least one of a specific priority, a specific type, or a specific importance.

84. The method of claim 82 or 83, wherein the latency information is related to at least one of: a reference point, an information propagation delay, a time difference between a terminal device and the network device, a time difference in uplink and/or downlink, a Timing Advance (TA), an uplink delay, or a downlink delay.

85. The method of any one of claims 82 to 84, wherein the latency information is generated using a first time as a reference; or

the latency information is determined based on a delay generated using a first time as a reference and an information propagation delay; or

the latency information is determined based on a delay generated using a first time as a reference, an information propagation delay, and a time difference between a terminal device and the network device; or

the latency information is determined based on a delay generated using a first time as a reference, an information propagation delay, and a downlink delay; or

the latency information is determined based on a delay generated using a first time as a reference and a Timing Advance (TA); or

the latency information is determined based on a delay generated using a first time as a reference, and at least one of: an information propagation delay, a time difference between a terminal device and the network device, a downlink delay, or a Timing Advance (TA);

wherein the first time comprises at least one of the following corresponding to a Physical Uplink Shared Channel (PUSCH): a time unit, a starting time, an ending time, a boundary of the PUSCH, an upper boundary of the PUSCH, a lower boundary of the PUSCH, a boundary of an Uplink (UL) grant, an upper boundary of the UL grant, or a lower boundary of the UL grant.

86. The method of claim 85, wherein

the latency information is determined by subtracting the information propagation latency from the delay generated using the first time as the reference; or

he latency information is determined by subtracting both the information propagation delay and the time difference between the terminal device and the network device from the delay generated using the first time as the reference; or

the latency information is determined by subtracting both the information propagation delay and the downlink delay from the delay generated using the first time as the reference; or

the latency information is determined by subtracting the TA from the delay generated using the first time as the reference; or

the latency information is determined by subtracting, from the delay generated using the first time as the reference, at least one of: the information propagation delay, the time difference between the terminal device and the network device, the downlink delay, or the TA.

87. The method of any one of claims 82 to 86, wherein

the first duration is determined based on one of the following: either one of or a sum of at least two of an information propagation delay, a network device processing duration, a time difference between a terminal device and the network device, a downlink delay, or a Timing Advance (TA); and/or

the third duration is determined based on a sum of: a retransmission duration, and either one of or a sum of at least two of the information propagation delay, the network device processing duration, the time difference between the terminal device and the network device, the downlink delay, or the TA.

88. The method of any one of claims 54 to 87, wherein the first information is transmitted by the terminal device in at least one of the following cases:

Uplink Control Information (UCI) or a Configured Grant UCI (CG-UCI) or a Dynamic Grant UCI (DG-UCI) or a new UCI or a Physical Uplink Control Channel (PUCCH) is present;

a Buffer Status Report (BSR) and one of a UCI, a CG-UCI, a DG-UCI, a new UCI, or a PUCCH are reported simultaneously;

a BSR and one of a UCI, a CG-UCI, a DG-UCI, a new UCI, or a PUCCH are carried in the same resource;

a BSR and one of a UCI, a CG-UCI, a DG-UCI, a new UCI, or a PUCCH are reported within a time period;

the terminal device reports a UCI, or a CG-UCI, or a DG-UCI, or a new UCI, or a PUCCH;

dynamic indication information or a UCI or a CG-UCI or a DG-UCI or a new UCI or a PUCCH indicates that a CG Physical Uplink Shared Channel (PUSCH) resource is used and/or is not used;

dynamic indication information or a UCI or a CG-UCI or a DG-UCI or a new UCI or a PUCCH indicates an unused CG PUSCH resource;

dynamic indication information or a UCI or a CG-UCI or a DG-UCI or a new UCI or a PUCCH is present and indicates that a CG PUSCH resource is used and/or is not used;

dynamic indication information or a UCI or a CG-UCI or a DG-UCI or a new UCI or a PUCCH indicates that a PUSCH resource is used and/or is not used;

dynamic indication information or a UCI or a CG-UCI or a DG-UCI or a new UCI or a PUCCH indicates an unused PUSCH resource; or

dynamic indication information or a UCI or a CG-UCI or a DG-UCI or a new UCI or a PUCCH indicates a CG PUSCH resource that is not used, or indicates whether an unused CG PUSCH resource is present, or indicates a used CG PUSCH resource, or indicates at least part of a used CG PUSCH resource, or indicates that at least part of a CG PUSCH resource is used.

89. The method of claim 88, wherein the dynamic indication information or the UCI or the CG-UCI or the DG-UCI or the new UCI or the PUCCH is configured for at least one of: each or a single CG, each or a single Media Access Control (MAC) entity, each or a single terminal device, each or a single Logical Channel (LCH), each or a single Logical Channel Group (LCG), each or a single service, each or a single DG, each or a single CG group, or each or a single CG pair; or

the UCI or the CG-UCI or the DG-UCI or the new UCI or the PUCCH is enabled for at least one of: each or a single CG, each or a single MAC entity, each or a single UE, each or a single LCH, each or a single LCG, each or a single service, each or a single DG, each or a single CG group, or each or a single CG pair.

90. The method of any one of claims 54 to 89, wherein at least part of one or more Configured Grant (CG) resources configured by the network device to a terminal device carry the first information; and/or

each or a single CG resource among the one or more CG resources configured by the network device to the terminal device comprises one or more CG occasions, at least part of the one or more CG occasions carrying the first information.

91. The method of any one of claims 54 to 90, wherein the first information corresponds to a Logical Channel (LCH) other than an LCH corresponding to a current Physical Uplink Shared Channel (PUSCH), and/or the first information comprises a short Media Access Control Control Element (MAC CE) or a truncated short MAC CE.

92. The method according to any one of claims 54 to 91, in a case where a Logical Channel (LCH)/Logical Channel Group (LCG) other than an LCH/LCG corresponding to a current Physical Uplink Shared Channel (PUSCH) and the LCH/LCG corresponding to the current PUSCH exist, the first information corresponds to the LCH other than the LCH corresponding to the current PUSCH, and/or the first information comprises a short Media Access Control Control Element (MAC CE) or a truncated short MAC CE.

93. The method of any one of claims 54 to 92, wherein the first information or at least one of the following associated with the first information: a Logical Channel (LCH), a Logical Channel Group (LCG), a Data Radio Bearer (DRB), User Equipment (UE), a burst, or a Protocol Data Unit Set (PDU Set) corresponds to one of: a non-current Configured Grant (CG), a currently unused CG, a currently unused CG group, or a currently unused CG pair; or

the first information or at least one of the following associated with the first information: an LCH, an LCG, a DRB, a UE, a burst, or a PDU Set corresponds to a Dynamic Grant (DG).

94. The method of any one of claims 57, 62, 83, 93, wherein different Quality of Service (QoS) flows correspond to the different PDU Sets or the different bursts, or the same QoS flow corresponds to the different PDU Sets or the different bursts.

95. The method of any one of claims 57, 62, 83, 93, 94, wherein the network device or an Access Stratum (AS) of the network device performs different processing on the different PDU Sets or the different bursts or different Quality of Service (QoS) flows, based on the QoS flow(s) or based on differences among the PDU Sets or differences among the bursts or differences among the QoS flows.

96. The method of claim 95, wherein the differences among the PDU Sets or the differences among the bursts or the differences among the QoS flows comprise differences in terms of at least one of: priority, type, or importance.

97. The method of claim 95 or 96, wherein the differences among the PDU Sets or the differences among the bursts or the differences among the QoS flows are carried in a data packet, or are obtained by the network device through interlayer interaction, or are obtained by the network device through interaction with a terminal device.

98. The method of any one of claims 95 to 97, wherein the network device or the AS of the network device performs different processing on the different PDU Sets or the different bursts or the different QoS flows based on fifth indication information as well as the QoS flow(s), or based on fifth indication information as well as the differences among the PDU Sets or the differences among the bursts or the differences among the QoS flows; wherein
the fifth indication information is used for indicating whether to perform different processing on the different PDU Sets or the different bursts or the different QoS flows.

99. The method according to claim 98, wherein the fifth indication information is configured by an application layer of the network device, or is indicated by a terminal device to the network device, or is configured by a core network device to the network device, or is configured by an application server to the network device, or is determined by the network device.

100.
The method of any one of claims 57, 62, 83, 93 to 99, wherein the network device or an Access Stratum (AS) of the network device performs first processing on the PDU Set(s) or the burst(s), the first processing being performed in a unit of the PDU Set or the burst; wherein
the first processing comprises at least one of: packet loss, retransmission, priority determination or modification, storage, reordering, transmission via different paths, duplication transmission, or repetition transmission.

101.
The method of claim 100, wherein the network device or the AS of the network device performs the first processing on the PDU Set(s) or the burst(s) based on sixth indication information;
wherein the sixth indication information is used for indicating consistent processing of the PDU Set(s) or the burst(s), or indicating whether processing is required for all packets in the PDU Set(s) or all packets in the burst(s), or indicating one or more of the first processing to be used.

102.
The method of claim 101, wherein the sixth indication information is configured by an application layer of the network device, or is indicated by a terminal device to the network device, or is configured by a core network device to the network device, or is configured by an application server to the network device, or is determined by the network device.

103.
The method of any one of claims 94 to 102, wherein if different pieces of second information for the PDU Set(s) or the burst(s) or the QoS flow(s) and sixth indication information do not coexist, processing is performed based on one of the second information or the sixth indication information; wherein

the sixth indication information is used for indicating consistent processing of the PDU Set(s) or the burst(s), or indicating whether processing is required for all packets in the PDU Set(s) or all packets in the burst(s), or indicating one or more of first processing to be used; and
the first processing comprises at least one of: packet loss, retransmission, priority determination or modification, storage, reordering, transmission via different paths, duplication transmission, or repetition transmission.

104.
The method of any one of claims 94 to 103, wherein if different pieces of second information for the PDU Set(s) or the burst(s) or the QoS flow(s) and sixth indication information coexist,

a processing is performed based on a combination of the second information and the sixth indication information, or

processing is performed based on one of the second information or the sixth indication information, or

processing is firstly performed based on one of the second information or the sixth indication information and then processing is performed based on the other one of the second information or the sixth indication information, or

processing is performed based on information with a higher priority among the second information and the sixth indication information, or

the PDU Set(s) or the burst(s) having at least one of a specific priority, a specific type, or a specific importance is processed based on the sixth indication information or first processing is performed on the PDU Set(s) or the burst(s) having at least one of a specific priority, a specific type, or a specific importance, or

the PDU Set(s) or the burst(s) having at least one of a specific priority, a specific type, or a specific importance is not processed based on the sixth indication information or first processing is not performed on the PDU Set(s) or the burst(s) having at least one of a specific priority, a specific type, or a specific importance; wherein

the sixth indication information is used for indicating consistent processing of the PDU Set(s) or the burst(s), or indicating whether processing is required for all packets in the PDU Set(s) or all packets in the burst(s), or indicating one or more of first processing to be used; and

the first processing comprises at least one of: packet loss, retransmission, priority determination or modification, storage, reordering, transmission via different paths, duplication transmission, or repetition transmission.

**105.**
The method of any one of claims 94 to 104, wherein the different PDU Sets or the different bursts or the different QoS flows correspond to different first processing; the first processing comprising at least one of: packet loss, retransmission, priority determination or modification, storage, reordering, transmission via different paths, duplication transmission, or repetition transmission.

**106.**
The method of any one of claims 94 to 105, wherein the different PDU Sets or the different bursts or the different QoS flows correspond to different durations of a packet loss timer, or one the different PDU Sets or one of different bursts or one of different QoS flows is configured with a packet loss timer and another of the different PDU Sets or another of different bursts or another of different QoS flows is not configured with a packet loss timer; or

the different PDU Sets or the different bursts or the different QoS flows correspond to different packet loss timers.

**107.**
A communication apparatus, comprising: a communication unit, configured to transmit first information, the first information being used for at least one of: data transmission, Radio Resource Control (RRC) parameter adjustment, RRC reconfiguration, resource scheduling, or resource allocation.

**108.**
A communication apparatus, comprising: a communication unit, configured to receive first information; and a processing unit, configured to perform, based on the first information, at least one of: data transmission, Radio Resource Control (RRC) parameter adjustment, RRC configuration/reconfiguration, resource scheduling, or resource allocation.

**109.**
A terminal device, comprising: a processor and a memory, wherein the memory is configured to store a computer program; and the processor is configured to call the computer program stored in the memory and run the computer program to cause the terminal device to perform the method of any one of claims 1 to 53.

**110.**
A network device, comprising: a processor and a memory, wherein the memory is configured to store a computer program; and the processor is configured to call the computer program stored in the memory and run the computer program to cause the terminal device to perform the method of any one of claims 54 to 106.

**111.** A computer storage medium storing one or more programs that, when executed by one or more processors, perform the method of any one of claims 1 to 53 or the method of any one of claims 54 to 106.

**112.**
A chip, comprising a processor, configured to call a computer program from a memory and run the computer program to perform the method of any one of claims 1 to 53 or the method of any one of claims 54 to 106.

**113.**

A computer program product, comprising a computer storage medium for storing a computer program, wherein the computer program comprises instructions executable by at least one processor that, when executed by the at least one processor, perform the method of any one of claims 1 to 53 or the method of any one of claims 54 to 106.

**114.**

A computer program for causing a computer to perform the method of any one of claims 1 to 53 or the method of any one of claims 54 to 106.

100

FIG. 1

A terminal device transmits first information, where the first information is used for at least one of: data transmission, Radio Resource Control (RRC) parameter adjustment, RRC configuration/ reconfiguration, resource scheduling, or resource allocation ——S201

FIG. 2

A network device receives first information ——S301

The network device performs, based on the first information, at least one of: data transmission, Radio Resource Control (RRC) parameter adjustment, RRC configuration/reconfiguration, resource scheduling, or resource allocation ——S302

FIG. 3

| LCG/LC/RB ID | Buffer Size | Oct 1 |
|---|---|---|

FIG. 4

| LCG$_7$ | LCG$_6$ | LCG$_5$ | LCG$_4$ | LCG$_3$ | LCG$_2$ | LCG$_1$ | LCG$_0$ | Oct 1 |
|---------|---------|---------|---------|---------|---------|---------|---------|-------|

| Buffer Size 1 | Oct 2 |
|---------------|-------|

| Buffer Size 2 | Oct 3 |
|---------------|-------|

...

| Buffer Size m | Oct m+1 |
|---------------|---------|

**FIG. 5**

| LCG ID | Oct 1 |
|--------|-------|

| Buffer Size | Oct 2 |
|-------------|-------|

**FIG. 6**

| Index | BS value | Index | BS value | Index | BS value | Index | BS value |
|-------|----------|-------|----------|-------|----------|-------|----------|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | ≤ 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

| Level 0 | ≤130000 |
|---------|---------|
| Level 1 | ≤140000 |
| Level 2 | ≤150000 |

**FIG. 7**

Communication unit 801

Processing unit 802

Communication apparatus 800

**FIG. 8**

Communication unit 901

Processing unit 902

Communication apparatus 900

**FIG. 9**

Communication device 1000

Memory 1020     Processor 1010

Transceiver 1030

**FIG. 10**

Input interface 1130    Chip 1100

Processor 1110

Memory 1120    Output interface 1140

**FIG. 11**

## INTERNATIONAL SEARCH REPORT

| International application No. |
|---|
| **PCT/CN2023/076896** |

**A.    CLASSIFICATION OF SUBJECT MATTER**

H04W 72/20(2023.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT, DWPI, ENTXT: 缓存状态报告, 早期传输, 上行, 时延, 延迟, 携带, BSR, early, MAC CE, delay, RRC, SR

**C.    DOCUMENTS CONSIDERED TO BE RELEVANT**

| Category* | Citation of document, with indication, where appropriate, of the relevant passages | Relevant to claim No. |
|---|---|---|
| X | CN 109392009 A (HUAWEI TECHNOLOGIES CO., LTD.) 26 February 2019 (2019-02-26) description, paragraphs 112-191 | 1-6, 8-59, 61-114 |
| A | CN 112840723 A (OPPO GUANGDONG MOBILE TELECOMMUNICATIONS CORP., LTD.) 25 May 2021 (2021-05-25) entire document | 1-114 |
| A | CN 110557839 A (RESEARCH INSTITUTE OF CHINA MOBILE COMMUNICATIONS CORPORATION et al.) 10 December 2019 (2019-12-10) entire document | 1-114 |
| A | CN 114501485 A (VIVO COMMUNICATION TECHNOLOGY CO., LTD.) 13 May 2022 (2022-05-13) entire document | 1-114 |
| A | US 2022322459 A1 (COMCAST CABLE COMMUNICATIONS, LLC) 06 October 2022 (2022-10-06) entire document | 1-114 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 October 2023** | **20 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/076896** |

**C.    DOCUMENTS CONSIDERED TO BE RELEVANT**

| Category* | Citation of document, with indication, where appropriate, of the relevant passages | Relevant to claim No. |
| --- | --- | --- |
| A | INTEL CORPORATION. "BSR enhancements" <br> *3GPP tsg_ran WG2 R2-1707025*, 17 June 2017 (2017-06-17), <br> entire document | 1-114 |

Form PCT/ISA/210 (second sheet) (July 2022)

**INTERNATIONAL SEARCH REPORT**
Information on patent family members

International application No.

**PCT/CN2023/076896**

| Patent document cited in search report | | | Publication date (day/month/year) | Patent family member(s) | | | Publication date (day/month/year) |
|---|---|---|---|---|---|---|---|
| CN | 109392009 | A | 26 February 2019 | JP | 2020530719 | A | 22 October 2020 |
| | | | | KR | 20200039753 | A | 16 April 2020 |
| | | | | US | 2021211922 | A1 | 08 July 2021 |
| | | | | RU | 2020110028 | A | 13 September 2021 |
| | | | | WO | 2019029686 | A1 | 14 February 2019 |
| | | | | EP | 3633892 | A1 | 08 April 2020 |
| | | | | US | 2020120534 | A1 | 16 April 2020 |
| | | | | CN | 110677872 | A | 10 January 2020 |
| | | | | CN | 111034079 | A | 17 April 2020 |
| CN | 112840723 | A | 25 May 2021 | WO | 2020211097 | A1 | 22 October 2020 |
| CN | 110557839 | A | 10 December 2019 | None | | | |
| CN | 114501485 | A | 13 May 2022 | None | | | |
| US | 2022322459 | A1 | 06 October 2022 | EP | 4068893 | A1 | 05 October 2022 |
| | | | | CA | 3154798 | A1 | 30 September 2022 |

Form PCT/ISA/210 (patent family annex) (July 2022)